Europäisches Patentamt
European Patent Office
Office européen des brevets

(19)

(11) Veröffentlichungsnummer: **0 234 036**
**A1**

(12) **EUROPÄISCHE PATENTANMELDUNG**

(21) Anmeldenummer: **86117524.8**

(22) Anmeldetag: **16.12.86**

(51) Int. Cl.³: **A 01 N 47/36**
A 01 N 25/32

(30) Priorität: **08.01.86 DE 3600288**

(43) Veröffentlichungstag der Anmeldung:
**02.09.87 Patentblatt 87/36**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Riebel, Hans-Jochem, Dr.**
**Inder Beek 92**
**D-5600 Wuppertal 1(DE)**

(72) Erfinder: **Feucht, Dieter, Dr.**
**Rüttersweg 108**
**D-5090 Leverkusen 1(DE)**

(72) Erfinder: **Schmidt, Robert R., Dr.**
**Im Waldwinkel 110**
**D-5060 Bergisch Gladbach 2(DE)**

(72) Erfinder: **Eue, Ludwig, Dr.**
**Paul-Klee-Strasse 36**
**D-5090 Leverkusen 1(DE)**

(54) **Verwendung von Amiden zur Verbesserung der Kulturpflanzen-Verträglichkeit von herbizid wirksamen Sulfonylharnstoff-Derivaten.**

(57) Die Erfindung betrifft die Verwendung von bekannten Amiden der allgemeinen Formel (I)

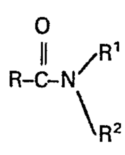

(I)

(worin die Reste R, $R^1$ und $R^2$ die in der Beschreibung angegebenen Bedeutungen haben)
als Gegenmittel zur Verbesserung der Kulturpflanzen-Verträglichkeit von herbizid wirksamen Sulfonylharnstoff-Derivaten der allgemeinen Formel (II)

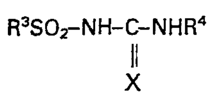

(II)

in welcher

$R^3$ für einen gegebenenfalls substituierten Rest aus der Reihe Alkyl, Aralkyl, Aryl und Heteroaryl steht,

$R^4$ für einen gegebenenfalls substituierten und/oder gegebenenfalls anellierten sechsgliedrigen aromatischen Heterocyclus, welcher wenigstens ein Stickstoffatom enthält, steht und

X für Sauerstoff oder Schwefel steht.

EP 0 234 036 A1

Croydon Printing Company Ltd.

86117524.0
0234036

BAYER AKTIENGESELLSCHAFT 5090 Leverkusen, Bayerwerk
Konzernverwaltung RP
Patentabteilung Bi/mö
IIb

# Verwendung von Amiden zur Verbesserung der Kulturpflanzen-Verträglichkeit von herbizid wirksamen Sulfonylharnstoff-Derivaten

Die Erfindung betrifft die Verwendung von bekannten Amiden als Gegenmittel zur Verbesserung der Kulturpflanzen-Verträglichkeit von bestimmten herbizid wirksamen Sulfonylharnstoff-Derivaten.

Ferner betrifft die Erfindung neue Wirkstoffkombinationen, die aus bekannten Amiden und bekannten herbizid wirksamen Sulfonylharnstoff-Derivaten bestehen und besonders gute selektiv-herbizide Eigenschaften besitzen.

Unter "Gegenmitteln" ("Safener", "Antidots") sind im vorliegenden Zusammenhang Stoffe zu verstehen, welche befähigt sind, schädigende Wirkungen von Herbiziden auf Kulturpflanzen spezifisch zu antagonisieren, d. h. die Kulturpflanzen zu schützen, ohne dabei die Herbizid-Wirkung auf die zu bekämpfenden Unkräuter merklich zu beeinflussen.

Es ist bekannt, daß zahlreiche herbizid wirksame Sulfonylharnstoff-Derivate beim Einsatz zur Unkrautbekämpfung in Mais und anderen Kulturen mehr oder weniger starke Schäden an den Kulturpflanzen hervorrufen.

Weiterhin ist bekannt, daß zahlreiche Amide geeignet sind, Schädigungen an Kulturpflanzen, die durch herbizide Wirkstoffe, insbesondere Thiolcarbamate und Acetanilide, verursacht werden können, zu vermindern (vergl.z.B. DE-OS 22 18 097, DE-OS 28 28 265, US-PS 4.021.224, US-PS 4.124.376, US-PS 4.137.070).

Die Anwendbarkeit dieser Stoffe als Gegenmittel ist jedoch in hohem Maße abhängig von dem jeweiligen herbiziden Wirkstoff.

Es wurde nun gefunden, daß die bekannten Amide der Formel (I)

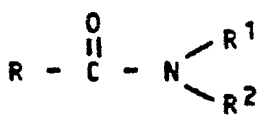

(I)

in welcher

R für Wasserstoff, Halogen oder für jeweils gegebenenfalls substituiertes Alkyl, Alkenyl, Alkinyl, Cycloalkyl, Cycloalkenyl, Bicycloalkyl, Bicycloalkenyl, Tricycloalkyl, Aryl, Heteroaryl, Alkoxy, Alkenyloxy, Alkinyloxy, Aryloxy, Carbamoyl, Alkoxycarbonyl oder Dithiolanyl steht und

$R^1$ und $R^2$ unabhängig voneinander jeweils für Wasserstoff, für Formyl, für Chlorsulfonyl oder für jeweils gegebenenfalls substituiertes Alkyl, Alkenyl, Alkadienyl, Alkinyl, Cycloalkyl, Cycloalkenyl, Alkoxy, Alkylthio, Alkylcarbonyl, Alkoxycarbonyl, Phenyl, Phenoxy, Phenylsulfonyl oder Heterocycyl stehen, ferner für Amino,

für Alkylidenimino oder für gegebenenfalls substituiertes Alkylcarbonylamino oder Di(alkylcarbonyl)-amino stehen, oder

$R^1$ und $R^2$ gemeinsam mit dem Stickstoffatom an welches sie gebunden sind, für jeweils gegebenenfalls substituiertes Alkylidenimino, Pyrrolidinyl, Piperidinyl, Piperidonyl, Perhydroazepinyl, Perhydroazocinyl, Dihydropyrazolyl, Dihydro- oder Tetrahydropyridinyl, Azabicyclononyl, Morpholinyl, Perhydro-1,3-oxazinyl, 1,3-Oxazolidinyl, 1,4-Piperazinyl, Perhydro-1,4-diazepinyl, Dihydro-, Tetrahydro- oder Perhydrochinolyl- bzw. -isochinolyl, Indolyl, Dihydro- oder Perhydroindolyl stehen,

hervorragend geeignet sind als Gegenmittel zur Verbesserung der Kulturpflanzen-Verträglichkeit von herbizid wirksamen Sulfonylharnstoff-Derivaten der Formel (II)

$$R^3SO_2\text{-NH-}\underset{\underset{X}{\|}}{C}\text{-NHR}^4 \qquad (II)$$

in welcher

$R^3$ für einen gegebenenfalls substituierten Rest aus der Reihe Alkyl, Aralkyl, Aryl und Heteroaryl steht,

$R^4$ für einen gegebenenfalls substituierten und/oder gegebenenfalls anellierten sechsgliedrigen aromatischen Heterocyclus, welcher wenigstens ein Stickstoffatom enthält, steht und

X für Sauerstoff oder Schwefel steht.

Weiterhin wurde gefunden, daß die neuen Wirkstoffkombinationen bestehend aus

- einem Amid der Formel (I) und
- mindestens einem herbiziden Sulfonylharnstoff-Derivat der Formel (II)

hervorragend geeignet sind zur selektiven Unkrautbekämpfung in Nutzpflanzenkulturen.

Ueberraschenderweise wird die Kulturpflanzenverträglichkeit von herbiziden Sulfonylharnstoff-Derivaten der Formel (II) durch Mitverwendung von Amiden der Formel (I) entscheidend verbessert. Unerwartet ist ferner, daß die erfindungsgemäßen Wirkstoffkombinationen aus einem Amid der Formel (I) und einem herbiziden Sulfonylharnstoff-Derivat der Formel (II) bessere selektive Eigenschaften besitzen als die betreffenden Wirkstoffe allein.

Die erfindungsgemäß verwendbaren Amide sind durch die Formel (I) allgemein definiert. Bevorzugt sind Amide der Formel (I), bei welchen

R - für Wasserstoff, Fluor, Chlor, Brom steht; außerdem
- für den Rest $-CO-N\begin{matrix}R^5\\R^6\end{matrix}$ steht, wobei

$R^5$ und $R^6$ gleich oder verschieden sind und jeweils für Wasserstoff sowie für jeweils geradkettiges oder verzweigtes Alkyl, Alkenyl, Alkinyl oder Cyanalkyl mit jeweils bis zu 8 Kohlenstoffatomen stehen; ferner R

- für gegebenenfalls einfach oder mehrfach, gleich oder verschieden substituiertes, geradkettiges oder verzweigtes Alkyl mit 1 bis 20 Kohlenstoffatomen steht, wobei als Substituenten infrage kommen:

Hydroxy, Halogen, insbesondere Fluor, Chlor, Brom, Iod, Cyano, Cyanato, Thiocyanato; jeweils geradkettiges oder verzweigtes Alkoxy, Alkylthio, Alkylcarbonyl, Alkylcarbonyloxy, Alkoxycarbonyl, Halogenalkoxy, Halogen-hydroxy-alkoxy, Halogenalkylcarbonyl, Halogenalkoxycarbonyl, Halogenalkylcarbonyloxy und Halogenalkenylcarbonyloxy mit jeweils bis zu 6 Kohlenstoffatomen und gegebenenfalls bis zu 9 gleichen oder verschiedenen Halogenatomen, insbesondere Fluor, Chlor, Brom; außerdem jeweils gegebenenfalls einfach oder mehrfach, gleich oder verschieden durch Halogen, niederes Alkyl und/oder niederes Alkoxy substituiertes Phenyl, Phenoxy, Phenylthio oder Thienyl; ferner Cycloalkyl mit 3 bis 7 Kohlenstoffatomen sowie die Reste $-N<^{R^5}_{R^6}$, $-\underset{O}{\overset{\|}{C}}-N<^{R^5}_{R^6}$, $-O-CH_2-\underset{O}{\overset{\|}{C}}-N<^{R^5}_{R^6}$ und $-SO_2-N<^{R^5}_{R^6}$ wobei $R^5$ und $R^6$ jeweils die oben angegebenen Bedeutungen haben; außerdem R

- für gegebenenfalls einfach oder mehrfach, gleich oder verschieden substituiertes, geradkettiges oder verzweigtes Alkenyl mit 2 bis 8 Kohlenstoffatomen steht, wobei als Substituenten infrage kommen:
  Hydroxy, Halogen, insbesondere Fluor, Chlor, Brom, geradkettiges oder verzweigtes Alkoxycarbonyl mit bis zu 6 Kohlenstoffatomen, sowie jeweils gegebenenfalls einfach oder mehrfach, gleich oder verschieden durch Halogen, insbesondere Fluor, Chlor, Brom, niederes Alkyl oder niederes Alkoxy substituiertes Phenyl oder Phenoxy; ferner R

- für geradkettiges oder verzweigtes Alkinyl mit 2 bis 8 Kohlenstoffatomen steht; außerdem R

- für jeweils gegebenenfalls einfach oder mehrfach, gleich oder verschieden substituiertes Cycloalkyl, Cyclo-

alkenyl, Bicycloalkyl, Bicycloalkenyl oder Tricycloalkyl mit jeweils bis zu 12 Kohlenstoffatomen steht, wobei als Substituenten infrage kommen:

geradkettiges oder verzweigtes Alkyl mit 1 bis 4 Kohlenstoffatomen, Phenyl sowie der Rest $-\underset{O}{\overset{\|}{C}}-N\begin{smallmatrix}R^5\\R^6\end{smallmatrix}$

wobei $R^5$ und $R^6$ die oben angegebene Bedeutung haben; ferner R

- für gegebenenfalls einfach oder mehrfach gleich oder verschieden substituiertes Aryl mit 6 bis 10 Kohlenstoffatomen steht, wobei als Substituenten infrage kommen:

  Halogen, insbesondere Fluor, Chlor, Brom, Iod, Nitro, Carboxy – auch in Form des Carboxylatanions –, jeweils geradkettiges oder verzweigtes Alkyl, Alkoxy, Halogenalkyl, Alkylcarbonyl, Halogenalkylcarbonyl und Halogenalkylcarbonylamino mit jeweils bis zu 4 Kohlenstoffatomen und gegebenenfalls bis zu 5 gleichen oder verschiedenen Halogenatomen, insbesondere Fluor, Chlor, Brom, sowie der Rest $-CO-N\begin{smallmatrix}R^5\\R^6\end{smallmatrix}$, wobei $R^5$ und $R^6$ die oben angegebene Bedeutung haben, außerdem R

- für jeweils gegebenenfalls einfach oder mehrfach, gleich oder verschieden substituiertes Furyl, Thienyl, Pyridyl oder Dithiolanyl steht, wobei als Substituenten infrage kommen:

  Halogen, insbesondere Fluor, Chlor, Brom, geradkettiges oder verzweigtes Alkyl mit bis zu 4 Kohlenstoffatomen, sowie der Rest $-CO-N\begin{smallmatrix}R^5\\R^6\end{smallmatrix}$,

  wobei $R^5$ und $R^6$ die oben angegebene Bedeutung haben, und schließlich R

- für jeweils gegebenenfalls einfach oder mehrfach, gleich oder verschieden durch Phenyl oder Halogen, insbesondere Fluor, Chlor, Brom substituiertes, jeweils geradkettiges oder verzweigtes Alkoxy, Alkenyloxy,

Alkinyloxy, Alkoxycarbonyl oder Phenoxy steht, und

$R^1$ und $R^2$, welche gleich oder verschieden sind, unabhängig voneinander

- für Wasserstoff, Formyl, Chlorsulfonyl oder für jeweils gegebenenfalls einfach oder mehrfach, gleich oder verschieden durch Halogen, insbesondere Fluor,Chlor,Brom oder niederes Alkyl substituiertes Phenyl, Phenoxy oder Phenylsulfonyl stehen, ferner

- für gegebenenfalls einfach oder mehrfach, gleich oder verschieden substituiertes, geradkettiges oder verzweigtes Alkyl mit 1 bis 12 Kohlenstoffatomen stehen, wobei als Substituenten infrage kommen:
  Hydroxy, Mercapto, Cyano, Halogen, insbesondere Fluor, Chlor, Brom, Iod; jeweils geradkettiges oder verzweigtes Alkoxy, Alkoximino, Alkylcarbonyl, Alkylcarbonyloxy, Alkoxycarbonyl, Alkoxycarbonyloxy, Alkylthiocarbonyloxy, Halogenalkylcarbonyloxy und Alkylsulfonyloxy mit jeweils bis zu 6 Kohlenstoffatomen und gegebenenfalls bis zu 5 gleichen oder verschiedenen Halogenatomen, insbesondere Fluor, Chlor, Brom; außerdem Alkylaminocarbonyloxy, Dialkylaminocarbonyloxy, Alkenylaminocarbonyloxy und Dialkenylaminocarbonyloxy mit jeweils bis zu 6 Kohlenstoffatomen in den einzelnen geradkettigen oder verzweigten Alkyl- bzw. Alkenylteilen; ferner Cycloalkylaminocarbonyloxy mit 3 bis 7 Kohlenstoffatomen im Cycloalkylteil, gegebenenfalls einfach oder mehrfach, gleich oder verschieden durch Halogen, insbesondere Fluor, Chlor, Brom, oder niederes Alkyl substituiertes Phenylaminocarbonyloxy, außerdem gegebenenfalls einfach oder mehrfach gleich oder verschieden durch Halogen, insbesondere Fluor, Chlor, Brom, oder niederes Alkyl substituiertes

Cycloalkyl mit 3 bis 7 Kohlenstoffatomen, gegebenenfalls einfach oder mehrfach, gleich oder verschieden durch Nitro, Halogen, insbesondere Fluor, Chlor, Brom, niederes Alkyl oder Dioxyalkylen substituiertes Phenyl, jeweils gegebenenfalls einfach oder mehrfach, gleich oder verschieden durch Halogen, insbesondere Fluor, Chlor, Brom oder niederes Alkyl substituiertes Furyl, Tetrahydrofuryl, Pyrazolyl, Oxazolyl, Isoxazolyl, Thiazolyl, Thiadiazolyl, Oxadiazolyl, Pyridyl oder Pyrimidinyl sowie gegebenenfalls einfach oder mehrfach, gleich oder verschieden durch jeweils niederes Alkyl, Halogenalkylcarbonyl, Halogenphenoxyalkylcarbonyl und Halogenalkylcarbonylaminoalkyl substituiertes Amino; außerdem $R^1$ und $R^2$

- für jeweils gegebenenfalls einfach oder mehrfach, gleich oder verschieden substituiertes, geradkettiges oder verzweigtes Alkenyl, Alkadienyl, oder Alkinyl mit jeweils 3 bis 8 Kohlenstoffatomen stehen, wobei als Substituenten infrage kommen:

  Halogen, insbesondere Fluor, Chlor, Brom, Cyano sowie jeweils geradkettiges oder verzweigtes Alkoxy, Alkylcarbonyl oder Alkoxycarbonyl mit jeweils bis zu 6 Kohlenstoffatomen; ferner $R^1$ und $R^2$

- für jeweils gegebenenfalls einfach oder mehrfach, gleich oder verschieden durch Halogen, insbesondere Fluor, Chlor, Brom, oder niederes Alkyl substituiertes Cycloalkyl oder Cycloalkenyl mit jeweils 3 bis 8 Kohlenstoffatomen stehen; außerdem

- für jeweils gegebenenfalls einfach oder mehrfach, gleich oder verschieden substituiertes und/oder benzannelliertes Piperidyl, Pyridyl, Thienyl, Oxazolyl, Isoxazolyl, Thiazolyl, Oxadiazolyl, Thiadiazolyl, Fluorenyl, Phthalimidoyl oder Dioxanyl stehen, wobei als Substituenten infrage kommen:

Halogen, insbesondere Fluor, Chlor, Brom, Cyano sowie jeweils geradkettiges oder verzweigtes Alkyl oder Alkandiyl mit jeweils 1 bis 4 Kohlenstoffatomen;

ferner $R^1$ und $R^2$

- für jeweils geradkettiges oder verzweigtes Alkoxy, Alkylthio, Alkylcarbonyl, Alkoxycarbonyl, Halogenalkylcarbonyl oder Halogenalkoxycarbonyl stehen mit jeweils bis zu 6 Kohlenstoffatomen und gegebenenfalls bis zu 5 gleichen oder verschiedenen Halogenatomen, insbesondere Fluor, Chlor, Brom; und außerdem $R^1$ und $R^2$
- für gegebenenfalls einfach oder mehrfach, gleich oder verschieden substituiertes Amino oder Alkylidenimino stehen, wobei als Substituenten infrage kommen:

  jeweils geradkettiges oder verzweigtes Alkyl, Alkenyl, Alkinyl, Alkylcarbonyl oder Halogenalkylcarbonyl mit jeweils bis zu 8 Kohlenstoffatomen und gegebenenfalls bis zu 5 gleichen oder verschiedenen Halogenatomen, insbesondere Fluor, Chlor, Brom; oder aber

$R^1$ und $R^2$ gemeinsam mit dem Stickstoffatom,an welches sie gebunden sind,

- für jeweils gegebenenfalls einfach oder mehrfach, gleich oder verschieden substituiertes Alkylidenamino, Pyrrolidinyl, Piperidinyl, Piperidonyl, Perhydroazepinyl, Perhydroazocinyl, Dihydropyrazolyl, Dihydro- oder Tetrahydropyridyl, Azabicyclononyl, Morpholinyl, Perhydro-1,3-oxazinyl, 1,3-Oxazolidinyl, 1,4-Piperazinyl, Perhydro-1,4-diazepinyl, Dihydro-, Tetrahydro- oder Perhydrochinolyl bzw. - isochinolyl, Indolyl, Dihydro- oder Perhydroindolyl stehen, wobei als Substituenten infrage kommen:

  Hydroxy, Halogen (insbesondere Fluor, Chlor, Brom),Cyano, Formyl; jeweils geradkettiges oder verzweigtes,

gegebenenfalls zweifach verknüpftes Alkyl, Alkandiyl, Alkoxy, Dioxyalkylen, Alkylcarbonyl, Alkoxycarbonyl und Halogenalkylcarbonyl mit jeweils bis zu 8 Kohlenstoffatomen, jeweils geradkettiges oder verzweigtes Alkylamino oder Dialkylamino mit jeweils bis zu 4 Kohlenstoffatomen in den einzelnen Alkylteilen, jeweils gegebenenfalls einfach oder mehrfach, gleich oder verschieden durch Halogen, insbesondere Fluor, Chlor, Brom, Nitro oder jeweils niederes Alkyl, Halogenalkyl, Alkoxy, Alkylcarbonyl oder Alkoxycarbonyl substituiertes Phenyl, Naphthyl, Pyridyl oder Piperidinyl oder jeweils gegebenenfalls einfach oder mehrfach, gleich oder verschieden durch Halogen, insbesondere Fluor, Chlor, Brom, niederes Alkyl oder Halogenalkylcarbonyl substituiertes geradkettiges oder verzweigtes Cyclopropylalkyl, Cyclohexylalkyl, Piperidinylalkyl, Phenylalkyl oder Phenylalkenyl mit bis zu 4 Kohlenstoffatomen in den jeweiligen Alkyl- bzw. Alkenylteilen.

Besonders bevorzugt sind Amide der Formel (I), bei welchen

R - für Wasserstoff oder Chlor steht; ferner R

- für den Rest $-CO-N\begin{smallmatrix}R^5\\R^6\end{smallmatrix}$ steht, wobei $R^5$ und $R^6$, gleich oder verschieden sind und unabhängig voneinander jeweils für Wasserstoff-, Methyl, Ethyl, Allyl, Propargyl, But-1-in-3-yl, 3-Methylbut-1-in-3-yl oder 2-Cyanoprop-2-yl stehen; ferner R

- für geradkettiges oder verzweigtes Alkyl mit bis zu 15 Kohlenstoffatomen steht; außerdem

- für geradkettiges oder verzweigets Halogenalkyl mit 1 bis 6 Kohlenstoffatomen und 1 bis 9 gleichen oder verschiedenen Halogenatomen, insbesondere Fluor, Chlor, Brom und Iod, steht; außerdem

- für ein- bis dreifach, gleich oder verschieden substituiertes, geradkettiges oder verzweigtes Alkyl mit 1 bis 6 Kohlenstoffatomen steht, wobei als Substituenten infrage kommen:

  Hydroxy, Fluor, Chlor, Brom, Cyano, Cyanato, Thiocyanato, Methoxy, Ethoxy, Methylthio, Ethylthio, Acetyl, Propionyl, Acetoxy, Propionyloxy, Methoxycarbonyl, Ethoxycarbonyl, 1,1,3,3-Tetrachlor-2-hydroxyprop-2-yloxy, 1,1,1,3,3-Pentachlor-2-hydroxyprop-2-yloxy, Chloracetyl, Dichloracetyl, Chloracetoxy, Dichloracetoxy, Pentachlorbutadien-1-ylcarbonyloxy, jeweils gegebenenfalls ein- bis dreifach, gleich oder verschieden durch Chlor, Methyl oder Methoxy substituiertes Phenyl, Phenoxy, Phenylthio oder Thienyl; ferner Cyclopropyl, Cyclopentyl, Cyclohexyl; sowie die Reste $-N<^{R^5}_{R^6}$, $-CO-N<^{R^5}_{R^6}$, $-O-CH_2-CO-N<^{R^5}_{R^6}$ und $-SO_2-N<^{R^5}_{R^6}$,

  wobei $R^5$ und $R^6$ gleich oder verschieden sind und jeweils unabhängig voneinander für Wasserstoff, Methyl, Ethyl, Allyl, Propargyl, But-1-in-3-yl, 3-Methyl-but-1-in-3-yl oder 2-Cyanoprop-2-yl stehen; außerdem R

- für ein- bis dreifach, gleich oder verschieden substituiertes, geradkettiges oder verzweigtes Alkenyl mit 2 bis 5 Kohlenstoffatomen steht, wobei als Substituenten infrage kommen:

  Hydroxy, Fluor, Chlor, Brom, Methoxycarbonyl, Ethoxycarbonyl sowie jeweils gegebenenfalls ein- bis dreifach, gleich oder verschieden, durch Fluor, Chlor, Methyl oder Methoxy substituiertes Phenyl oder Phenoxy; ferner R

- für geradkettiges oder verzweigtes Alkinyl mit 2 bis 5 Kohlenstoffatomen; außerdem

- für jeweils gegebenenfalls ein- bis fünffach, gleich oder verschieden substituiertes Cyclopropyl, Cyclopentyl, Cyclohexyl, Cycloheptyl, Cyclohexenyl, Bicycloheptenyl, Bicyclooctyl, Bicyclononyl und Tricyclodecyl steht, wobei als Substituenten infrage kommen:

  Methyl, Ethyl, Phenyl sowie der Rest $-CO-N{<}^{R^5}_{R^6}$, wobei $R^5$ und $R^6$ gleich oder verschieden sind, und jeweils unabhängig voneinander für Wasserstoff, Methyl, Ethyl, Allyl, Propargyl, But-1-in-3-yl, 3-Methylbut-1-in-3-yl oder 2-Cyanoprop-2-yl stehen, außerdem R

- für gegebenenfalls ein- bis dreifach, gleich oder verschieden substituiertes Phenyl steht, wobei als Substituenten infrage kommen:

  Fluor, Chlor, Brom, Iod, Nitro, Methyl, Ethyl, Methoxy, Ethoxy, Carboxy - auch in Form des Carboxylatanions -, Trifluormethyl, Chloracetamido, Dichloracetamido sowie der Rest $-CO-N{<}^{R^5}_{R^6}$, wobei $R^5$ und $R^6$ gleich oder verschieden sind, und jeweils unabhängig voneinander für Wasserstoff, Methyl, Ethyl, Allyl, Propargyl, But-1-in-3-yl, 3-Methylbut-1-in-3-yl oder 2-Cyanoprop-2-yl stehen; ferner R

- für jeweils gegebenenfalls ein- bis dreifach, gleich oder verschieden substituiertes Furyl, Thienyl, Pyridyl oder Dithiolanyl steht, wobei als Substituenten infrage kommen:

  Chlor, Methyl, Ethyl sowie der Rest $-CO-N{<}^{R^5}_{R^6}$, wobei $R^5$ und $R^6$ gleich oder verschieden sind,

und jeweils unabhängig voneinander für Wasserstoff, Methyl, Ethyl, Allyl, Propargyl, But-1-in-3-yl, 3-Methylbut-1-in-3-yl oder 2-Cyanoprop-2-yl stehen;

und schließlich R

- für jeweils gegebenenfalls ein- bis dreifach, gleich oder verschieden durch Fluor, Chlor, Brom oder Phenyl substituiertes Methoxy, Ethoxy, Allyloxy, Propargyloxy, Butinyloxy, Methoxycarbonyl, Ethoxycarbonyl oder Phenyl steht, und

$R^1$ und $R^2$, welche gleich oder verschieden sind, unabhängig voneinander

- für Wasserstoff, Formyl, Chlorsulfonyl oder für jeweils gegebenenfalls ein- bis dreifach, gleich oder verschieden durch Fluor, Chlor, Brom oder Methyl substituiertes Phenyl, Phenoxy oder Phenylsulfonyl stehen; ferner

- für gegebenenfalls ein- bis dreifach, gleich oder verschieden substituiertes , geradkettiges oder verzweigtes Alkyl mit 1 bis 8 Kohlenstoffatomen stehen, wobei als Substituenten infrage kommen:

  Hydroxy, Mercapto, Cyano, Fluor, Chlor, Brom, Methoxy, Ethoxy, Propoxy, Butoxy, Methoximino, Ethoximino, Acetyl, Propionyl, Acetoxy, Propionyloxy, Methoxycarbonyl, Ethoxycarbonyl, Methoxycarbonyloxy, Ethoxycarbonyloxy, Methylthiocarbonyloxy, Ethylthiocarbonyloxy, Chloracetoxy, Dichloracetoxy, Methylsulfonyloxy, Ethylsulfonyloxy, Methylaminocarbonyloxy, Dimethylaminocarbonyloxy, Ethylaminocarbonyloxy, Diethylaminocarbonyloxy, Propylaminocarbonyloxy, Butylaminocarbonyloxy, Allylaminocarbonyloxy, Diallylaminocarbonyloxy, Cyclohexylaminocarbonyloxy sowie gegebenenfalls ein- bis dreifach, gleich oder verschieden durch

Chlor oder Methyl substituiertes Phenylaminocarbonyloxy; ferner jeweils gegebenenfalls ein- bis fünffach, gleich oder verschieden durch Chlor oder Methyl substituiertes Cyclopropyl, Cyclopentyl, Cyclohexyl, Cycloheptyl; gegebenenfalls ein- bis dreifach, gleich oder verschieden durch Nitro, Fluor, Chlor, Brom, Methyl oder Dioxymethylen substituiertes Phenyl, jeweils gegebenenfalls ein- bis zweifach, gleich oder verschieden durch Methyl, Ethyl, Propyl oder Chlor substituiertes Furyl, Tetrahydrofuryl, Pyrazolyl, Oxazolyl, Isoxazolyl, Thiazolyl, Thiadiazolyl, Oxadiazolyl, Pyridyl oder Pyrimidinyl; sowie gegebenenfalls einfach oder zweifach, gleich oder verschieden durch Methyl, Ethyl, Chloracetyl, Dichloracetyl, Chlorphenoxyacetyl, Dichloracetamidomethyl oder Dichloracetamidoethyl substituiertes Amino; außerdem $R^1$ und $R^2$

- für jeweils gegebenenfalls einfach oder zweifach, gleich oder verschieden durch Chlor, Methoxy, Ethoxy, Acetyl, Methoxycarbonyl, Ethoxycarbonyl oder Cyano substitueirtes geradkettiges oder verzweigtes Alkenyl, Alkadienyl oder Alkinyl mit jeweils 3 bis 5 Kohlenstoffatomen stehen; ferner

- für jeweils gegebenenfalls ein- bis fünffach, gleich oder verschieden durch Chlor oder Methyl substituiertes Cyclopropyl, Cyclopentyl, Cyclohexyl, Cyclohexenyl oder Cyclooctyl stehen; außerdem
- für jeweils gegebenenfalls ein- bsi dreifach, gleich oder verschieden durch Fluor, Chlor, Brom, Cyano, Methyl, Ethyl, Propyl, Propandiyl oder Butandiyl substituiertes und/oder benzannelliertes Piperidyl, Pyridyl, Thienyl, Oxazolyl, Isoxazolyl, Thiadiazolyl, Fluorenyl, Phthalimidoyl oder Dioxanyl stehen; außerdem

- für Methoxy, Ethoxy, Propoxy, Butoxy, Methylthio, Ethylthio, Propylthio, Butylthio, Acetyl, Chloracetyl, Dichloracetyl, Methoxycarbonyl, Ethoxycarbonyl, Chlorethyloxycarbonyl oder Bromethyloxycarbonyl stehen und außerdem

- für gegebenenfalls einfach oder zweifach, gleich oder verschieden durch Methyl, Ethyl, Allyl, Propargyl, Acetyl, Chloracetyl oder Dichloracetyl substituiertes Amino oder Propylidenimino stehen, oder aber

$R^1$ und $R^2$ gemeinsam mit dem Stickstoffatom, an welches sie gebunden sind,

- für jeweils gegebenenfalls ein- bis fünffach, gleich oder verschieden substituiertes Methylidenimino, Ethylidenimino, Propylidenimino, Pyrrolidinyl, Piperidinyl, Piperidonyl, Perhydroazepinyl, Perhydroazocinyl, Dihydropyrazolyl, Dihydro- oder Tetrahydropyridyl, Azabicyclononyl, Morpholinyl, Perhydro-1,3-oxazinyl, 1,3-Oxazolidinyl, 1,4-Piperazinyl, Perhydro-1,4-diazepinyl, Dihydro-, Tetrahydro- oder Perhydrochinolyl bzw. - isochinolyl, Indolyl, Dihydro- oder Perhydroindolyl stehen, wobei als Substituenten infrage kommen:

Hydroxy, Fluor, Chlor, Brom, Cyano, Formyl, Methyl, Ethyl, Propyl, Butyl, Ethandiyl, Propandiyl, Methoxy, Ethoxy, Propoxy, Butoxy, Dioxyethylen, Dioxypropylen, Dioxybutylen, Acetyl, Propionyl, Chloracetyl, Dichloracetyl, α-Chlorpropionyl, Methoxycarbonyl, Ethoxycarbonyl, Methylamino, Ethylamino, Dimethylamino, Diethylamino, jeweils gegebenenfalls ein- bis dreifach, gleich oder verschieden durch Fluor, Chlor, Brom, Nitro, Methyl, Ethyl, Methoxy, Ethoxy, Trifluormethyl, Acetyl, Propionyl, Methoxycarbonyl oder Ethoxycarbonyl substituiertes Phenyl,

Naphthyl oder Piperidinyl oder jeweils gegebenenfalls ein- bis dreifach gleich oder verschieden durch Chlor, Methyl, Chloracetyl oder Dichloracetyl substituiertes Cyclopropylmethyl, Cyclohexylmethyl, Piperidinylethyl, Piperidinylpropyl, Benzyl, Phenylethyl oder Phenylpropenyl.

Die Ausdrücke "niederes Alkyl", "niederes Alkoxy" etc. bezeichnen im Rahmen dieser Erfindung entsprechende Reste mit 1-4 C-Atomen.

Im einzelnen seien die folgenden Verbindungen der allgemeinen Formel (I) genannt:

Tabelle 1

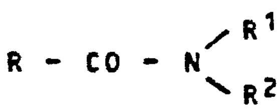

(I)

| Bsp.Nr. | R | $R^1$ | $R^2$ |
|---|---|---|---|
| I-1 | H | H | 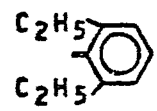 |
| I-2 | Cl | $-CH_2-CH=CH_2$ | $-CH_2-CH=CH_2$ |
| I-3 | $CH_3$ | H | 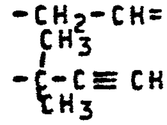 |
| I-4 | $CH_3$ | H | 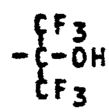 |
| I-5 | $CH_3$ | $-CH_2-CH=CH_2$ | $-CH_2-CH=CH_2$ |
| I-6 | $CH_3$ | 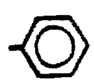 | 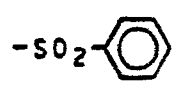 |
| I-7 | $n-C_3H_7$ | H | 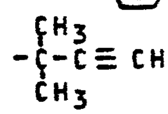 |
| I-8 | $n-C_3H_7$ | $CH_3$ | 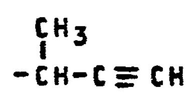 |
| I-9 | $n-C_3H_7$ | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-10 | $i-C_3H_7$ | $CH_3$ | $-\overset{CH_3}{CH}-C\equiv CH$ |
| I-11 | $n-C_4H_9$ | H | $-\overset{CH_3}{CH}-C\equiv CH$ |
| I-12 | $(CH_3)_3C-CH_2-$ | H | $-\underset{CH_3}{\overset{CH_3}{C}}-CN$ |
| I-13 | $(CH_3)_3C-CH_2-$ | $CH_3$ | $-\underset{CH_3}{\overset{CH_3}{C}}-C\equiv CH$ |
| I-14 | $CH_3-(CH_2)_2-\overset{CH_3}{CH}-$ | H | $-\underset{CH_3}{\overset{CH_3}{C}}-C\equiv CH$ |
| I-15 | $CH_3-(CH_2)_2-\overset{CH_3}{CH}-$ | $CH_3$ | $-\overset{CH_3}{CH}-C\equiv CH$ |
| I-16 | $CH_3-(CH_2)_2-\overset{CH_3}{CH}-$ | $-CH_2-CH=CH_2$ | $-CH_2-CH=CH_2$ |
| I-17 | $n-C_6H_{13}$ | H | $-\underset{CH_3}{\overset{CH_3}{C}}-C\equiv CH$ |
| I-18 | $n-C_6H_{13}$ | $CH_3$ | $-\overset{CH_3}{CH}-C\equiv CH$ |
| I-19 | $n-C_6H_{13}$ | $-CH_2-CH=CH_2$ | $-CH_2-CH=CH_2$ |
| I-20 | $CH_3-(CH_2)_2-\underset{CH_3}{\overset{CH_3}{C}}-$ | $-CH_2-CH=CH_2$ | $-CH_2-CH=CH_2$ |
| I-21 | $(CH_3)_3CCH_2-\overset{CH_3}{CH}-CH_2-$ | H | $-\underset{CH_3}{\overset{CH_3}{C}}-C\equiv CH$ |
| I-22 | $n-C_9H_{19}$ | H | $-\underset{CH_3}{\overset{CH_3}{C}}-C\equiv CH$ |
| I-23 | $n-C_9H_{19}$ | $-CH_2-CH=CH_2$ | $-CH_2-CH=CH_2$ |
| I-24 | $n-C_{11}H_{23}$ | H | $-\underset{CH_3}{\overset{CH_3}{C}}-C\equiv CH$ |
| I-25 | $n-C_{11}H_{23}$ | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-26 | $n-C_{13}H_{27}$ | $-CH_2-CH=CH_2$ | $-CH_2-CH=CH_2$ |
| I-27 | $Cl-CH_2-$ | H | $-CH_2-CH(CH_3)_2$ |
| I-28 | $Cl-CH_2-$ | H | $-C(CH_3)_3$ |
| I-29 | $Cl-CH_2-$ | H | 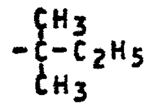 |
| I-30 | $Cl-CH_2-$ | H | 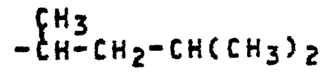 |
| I-31 | $Cl-CH_2-$ | H | 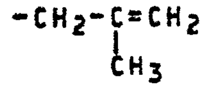 |
| I-32 | $Cl-CH_2-$ | H | 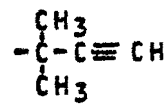 |
| I-33 | $Cl-CH_2-$ | H | 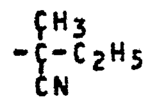 |
| I-34 | $Cl-CH_2-$ | H | 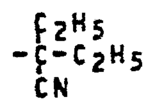 |
| I-35 | $Cl-CH_2-$ | H | $-CH_2CH_2-Br$ |
| I-36 | $Cl-CH_2-$ | H | $-CH_2CH_2-OCH_3$ |
| I-37 | $Cl-CH_2-$ | H | $-CH_2-CH(OCH_3)_2$ |
| I-38 | $Cl-CH_2-$ | H | 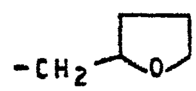 |
| I-39 | $Cl-CH_2-$ | H | 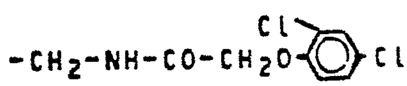 |
| I-40 | $Cl-CH_2-$ | H | 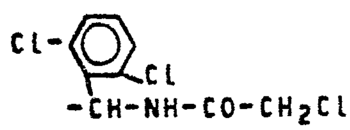 |
| I-41 | $Cl-CH_2-$ | H | 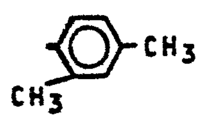 |
| I-42 | $Cl-CH_2-$ | H | 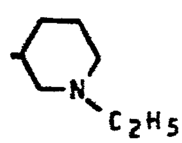 |

Tabelle 1 (Fortsetzung)

| Bsp.Nr. | R | $R^1$ | $R^2$ |
|---|---|---|---|
| I-43 | $Cl-CH_2-$ | $CH_3$ | $-CH(CH_3)_2$ |
| I-44 | $Cl-CH_2-$ | $CH_3$ | $-(CH_2)_3-CH_3$ |
| I-45 | $Cl-CH_2-$ | $CH_3$ | $-CH-C_2H_5$<br>$CH_3$ |
| I-46 | $Cl-CH_2-$ | $CH_3$ | $-CH-CH(CH_3)_2$<br>$CH_3$ |
| I-47 | $Cl-CH_2-$ | $CH_3$ | $-CH_2-C\equiv CH$ |
| I-48 | $Cl-CH_2-$ | $CH_3$ | $CH_3$<br>$-CH-C\equiv CH$ |
| I-49 | $Cl-CH_2-$ | $CH_3$ | $-CH_2CH_2-CN$ |
| I-50 | $Cl-CH_2-$ | $CH_3$ | 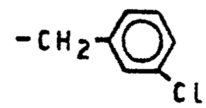 |
| I-51 | $Cl-CH_2-$ | $CH_3$ | 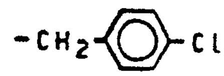 |
| I-52 | $Cl-CH_2-$ | $CH_3$ | 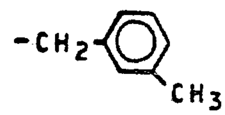 |
| I-53 | $Cl-CH_2$ | $C_2H_5$ | $-CH-C_2H_5$<br>$CH_3$ |
| I-54 | $Cl-CH_2-$ | $C_2H_5$ | 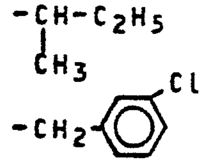 |
| I-55 | $Cl-CH_2-$ | $C_2H_5$ | 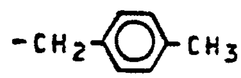 |
| I-56 | $Cl-CH_2-$ | $C_2H_5$ | 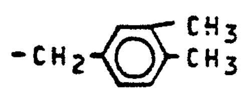 |
| I-57 | $Cl-CH_2-$ | $C_2H_5$ | 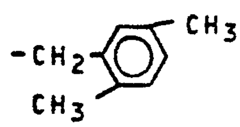 |
| I-58 | $Cl-CH_2-$ | $C_2H_5$ | 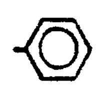 |
| I-59 | $Cl-CH_2-$ | $C_2H_5$ | 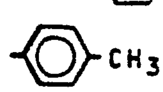 |

Tabelle 1 (Fortsetzung)

| Bsp.Nr. | R | $R^1$ | $R^2$ |
|---|---|---|---|
| I-60 | $Cl-CH_2-$ | $-CH_2CH_2CH_3$ | $-CH_2-CH(CH_3)_2$ |
| I-61 | $Cl-CH_2-$ | $-CH_2CH_2CH_3$ | $-C(CH_3)_3$ |
| I-62 | $Cl-CH_2-$ | $-CH_2CH_2CH_3$ | $-CH(CH_3)-(CH_2)_2-CH_3$ |
| I-63 | $Cl-CH_2-$ | $-CH_2CH_2CH_3$ | 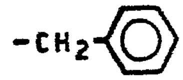 |
| I-64 | $Cl-CH_2-$ | $-CH_2CH_2CH_3$ | 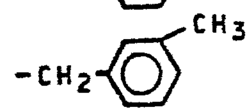 |
| I-65 | $Cl-CH_2-$ | $-CH_2CH_2CH_3$ | 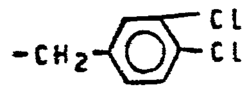 |
| I-66 | $Cl-CH_2-$ | $-CH_2CH_2CH_3$ | 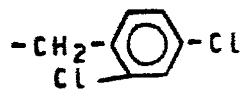 |
| I-67 | $Cl-CH_2-$ | $-CH_2CH_2CH_3$ | 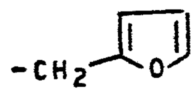 |
| I-68 | $Cl-CH_2-$ | $-CH_2CH_2CH_3$ | 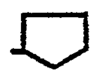 |
| I-69 | $Cl-CH_2-$ | $-CH_2CH_2CH_3$ | 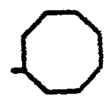 |
| I-70 | $Cl-CH_2-$ | $-CH(CH_3)_2$ | $-CH_2CH_2CH_2CH_3$ |
| I-71 | $Cl-CH_2-$ | $-CH(CH_3)_2$ | $-CH(CH_3)-C_2H_5$ |
| I-72 | $Cl-CH_2-$ | $-CH(CH_3)_2$ | $-CH_2-CH(CH_3)_2$ |
| I-73 | $Cl-CH_2-$ | $-CH(CH_3)_2$ | $-(CH_2)_4-CH_3$ |
| I-74 | $Cl-CH_2-$ | $-CH(CH_3)_2$ | 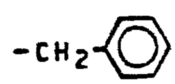 |
| I-75 | $Cl-CH_2-$ | $-CH_2CH_2CH_2CH_3$ | $-CH_2CH_2CH_2CH_3$ |
| I-76 | $Cl-CH_2-$ | $-CH_2CH_2CH_2CH_3$ | $-CH_2-CH(CH_3)_2$ |
| I-77 | $Cl-CH_2-$ | $-CH_2CH_2CH_2CH_3$ | $-CH=CH_2$ |
| I-78 | $Cl-CH_2-$ | $-CH(CH_3)-C_2H_5$ | $-CH_2-CH(CH_3)_2$ |
| I-79 | $Cl-CH_2-$ | $-(CH_2)_5-CH_3$ | $-(CH_2)_5-CH_3$ |
| I-80 | $Cl-CH_2-$ | $-CH_2-CH=CH_2$ | $-CH_2-CH=CH_2$ |

**Tabelle 1 (Fortsetzung)**

| Bsp.Nr. | R | $R^1$ | $R^2$ bzw. 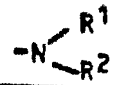 |
|---|---|---|---|
| I-81 | $Cl-CH_2-$ | $-CH_2CH_2-OH$ | $-CH_2CH_2-OH$ |
| I-82 | $Cl-CH_2-$ | $-CH_2CH_2OCH_3$ | $-CH_2CH_2OCH_3$ |
| I-83 | $Cl-CH_2-$ | $-CH_2CH_2OC_2H_5$ | $-CH_2CH_2OC_2H_5$ |
| I-84 | $Cl-CH_2-$ | $-CH_2CH_2O-CO-NH-CH_3$ | $-CH_2CH_2O-CO-NH-CH_3$ |
| I-85 | $Cl-CH_2$ | 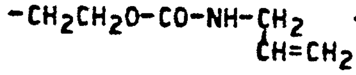 | 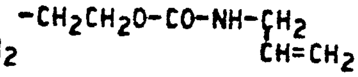 |
| I-86 | $Cl-CH_2-$ | 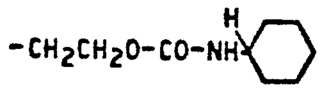 | 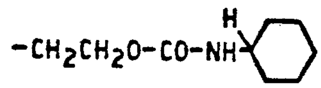 |
| I-87 | $Cl-CH_2-$ | 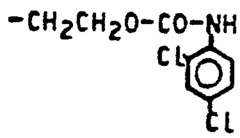 | 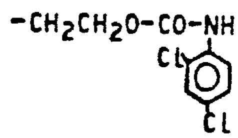 |
| I-88 | $Cl-CH_2-$ | | 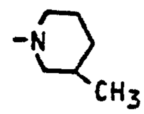 |
| I-89 | $Cl-CH_2-$ | | 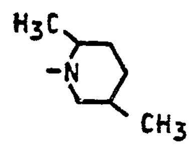 |
| I-90 | $Cl-CH_2$ | | 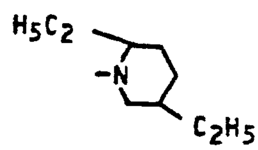 |
| I-91 | $Cl-CH_2-$ | | 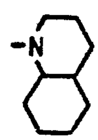 |
| I-92 | $Cl-CH_2-$ | | 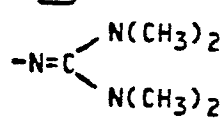 |
| I-93 | $I-CH_2-$ | H | 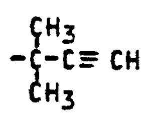 |
| I-94 | $I-CH_2-$ | $CH_3$ | 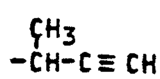 |
| I-95 | $I-CH_2-$ | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-96 | $Cl_2CH-$ | H | $-CH_2-CH(CH_3)_2$ |
| I-97 | $Cl_2CH-$ | H | $-C(CH_3)_3$ |
| I-98 | $Cl_2CH-$ | H | 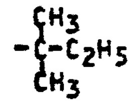 |
| I-99 | $Cl_2CH-$ | H | $-CH_2-CH=CH_2$ |
| I-100 | $Cl_2CH-$ | H | 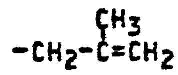 |
| I-101 | $Cl_2CH-$ | H | 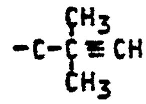 |
| I-102 | $Cl_2CH-$ | H | $-CH_2CH_2Br$ |
| I-103 | $Cl_2CH-$ | H | $-CH_2CH_2OH$ |
| I-104 | $Cl_2CH-$ | H | 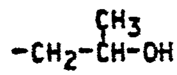 |
| I-105 | $Cl_2CH-$ | H | $-CH_2CH_2CH_2-OH$ |
| I-106 | $Cl_2CH-$ | H | $-CH_2CH_2-OC_2H_5$ |
| I-107 | $Cl_2CH-$ | H | $-CH_2CH_2CH_2-OCH(CH_3)_2$ |
| I-108 | $Cl_2CH-$ | H | 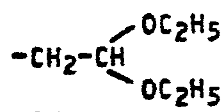 |
| I-109 | $Cl_2CH-$ | H | 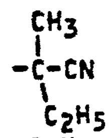 |
| I-110 | $Cl_2CH-$ | H | 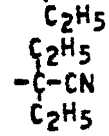 |
| I-111 | $Cl_2CH-$ | H | $-CH_2CH_2-N(CH_3)_2$ |
| I-112 | $Cl_2CH-$ | H | $-CH_2CH_2-N(C_2H_5)_2$ |
| I-113 | $Cl_2CH-$ | H | $-CH_2CH_2-NH-CO-CHCl_2$ |
| I-114 | $Cl_2CH-$ | H | $-CH_2CH_2CH_2-NH-CO-CHCl_2$ |
| I-115 | $Cl_2CH-$ | H | 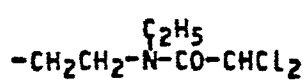 |

Tabelle 1 (Fortsetzung)

| Bsp.Nr. | R | $R^1$ | $R^2$ |
|---|---|---|---|
| I-116 | $Cl_2CH-$ | H | $-(CH_2)_3-N-CO-CHCl_2$<br>$(CH_2)_3-NH-CO-CHCl_2$ |
| I-117 | $Cl_2CH-$ | H | 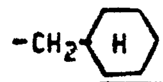 |
| I-118 | $Cl_2CH-$ | H | 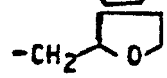 |
| I-119 | $Cl_2CH-$ | H | 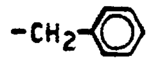 |
| I-120 | $Cl_2CH-$ | H | 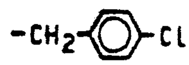 |
| I-121 | $Cl_2CH-$ | H | 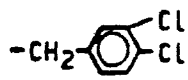 |
| I-122 | $Cl_2CH-$ | H | 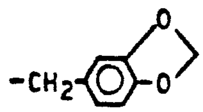 |
| I-123 | $Cl_2CH-$ | H | 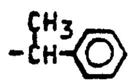 |
| I-124 | $Cl_2CH-$ | H | 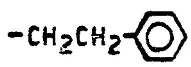 |
| I-125 | $Cl_2CH-$ | H | 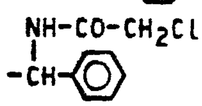 |
| I-126 | $Cl_2CH-$ | H | 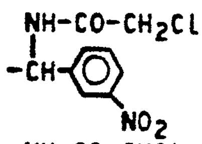 |
| I-127 | $Cl_2CH-$ | H | 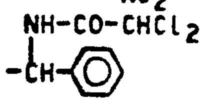 |
| I-128 | $Cl_2CH-$ | H | 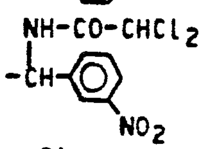 |
| I-129 | $Cl_2CH-$ | H | 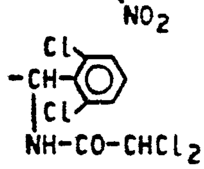 |
| I-130 | $Cl_2CH-$ | H | $CH_3$<br>$-C=CH-CN$ |
| I-131 | $Cl_2CH-$ | H | $CH_3$<br>$-C=CH-COOC_2H_5$ |

Tabelle 1 (Fortsetzung)

| Bsp.Nr. | R | $R^1$ | $R^2$ |
|---|---|---|---|
| I-132 | $Cl_2CH-$ | H | 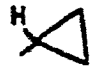 |
| I-133 | $Cl_2CH-$ | H | 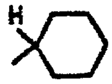 |
| I-134 | $Cl_2CH-$ | H | 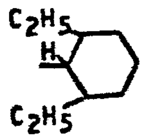 |
| I-135 | $Cl_2CH-$ | H | 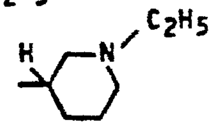 |
| I-136 | $Cl_2CH-$ | H | $-CO-O-C_2H_5$ |
| I-137 | $Cl_2CH-$ | H | $-CO-O-CH_2CH_2Cl$ |
| I-138 | $Cl_2CH-$ | H | $-NH-CO-CHCl_2$ |
| I-139 | $Cl_2CH-$ | H | $-N(CH_3)-CO-CHCl_2$ |
| I-140 | $Cl_2CH-$ | H | $-N(CH_2-CH=CH_2)-CO-CHCl_2$ |
| I-141 | $Cl_2CH-$ | H | 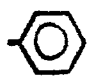 |
| I-142 | $Cl_2CH-$ | H | 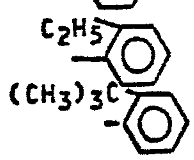 |
| I-143 | $Cl_2CH-$ | H | |
| I-144 | $Cl_2CH-$ | H | 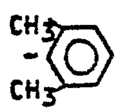 |
| I-145 | $Cl_2CH-$ | H | 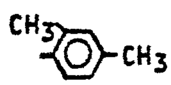 |
| I-146 | $Cl_2CH-$ | H | 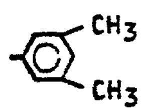 |
| I-147 | $Cl_2CH-$ | H | 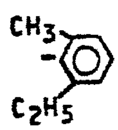 |

Tabelle 1 (Fortsetzung)

| Bsp.Nr. | R | $R^1$ | $R^2$ |
|---|---|---|---|
| I-148 | $Cl_2CH-$ | H | 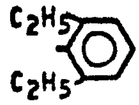 |
| I-149 | $Cl_2CH-$ | H | 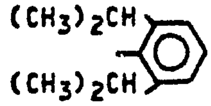 |
| I-150 | $Cl_2CH-$ | H | 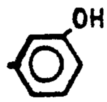 |
| I-151 | $Cl_2CH-$ | H | 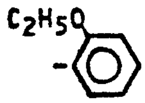 |
| I-152 | $Cl_2CH-$ | H | 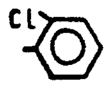 |
| I-153 | $Cl_2CH-$ | H | 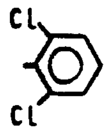 |
| I-154 | $Cl_2CH-$ | H | 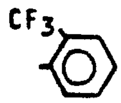 |
| I-155 | $Cl_2CH-$ | H | 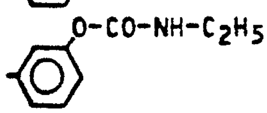 |
| I-156 | $Cl_2CH-$ | H | 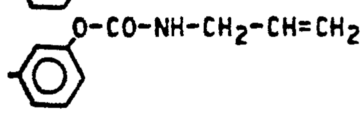 |
| I-157 | $Cl_2CH-$ | H | 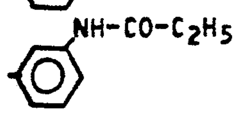 |
| I-158 | $Cl_2CH-$ | H | 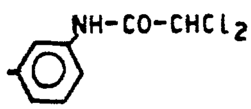 |
| I-159 | $Cl_2CH-$ | H | 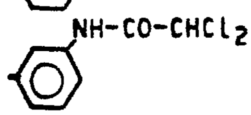 |
| I-160 | $Cl_2CH-$ | H | 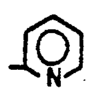 |
| I-161 | $Cl_2CH-$ | H | 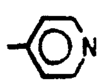 |
| I-162 | $Cl_2CH-$ | H | 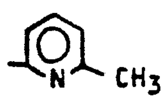 |

Tabelle 1 (Fortsetzung)

| Bsp.Nr. | R | $R^1$ | $R^2$ |
|---|---|---|---|
| I-163 | $Cl_2CH-$ | H | 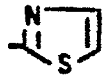 |
| I-164 | $Cl_2CH-$ | H | 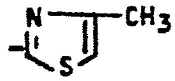 |
| I-165 | $Cl_2CH-$ | H | 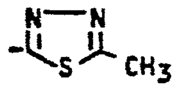 |
| I-166 | $Cl_2CH-$ | H | 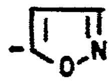 |
| I-167 | $Cl_2CH-$ | H | 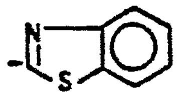 |
| I-168 | $Cl_2CH-$ | H | 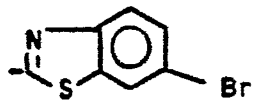 |
| I-169 | $Cl_2CH-$ | H | 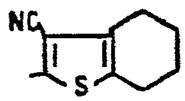 |
| I-170 | $Cl_2CH-$ | H | 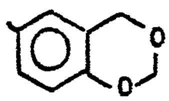 |
| I-171 | $Cl_2CH-$ | H | 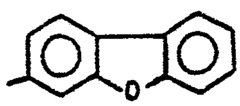 |
| I-172 | $Cl_2CH-$ | H | 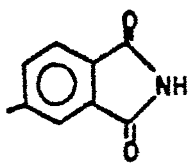 |
| I-173 | $Cl_2CH-$ | $CH_3$ | $-CH_3$ |
| I-174 | $Cl_2CH-$ | $CH_3$ | $-CH_2CH_2CH_3$ |
| I-175 | $Cl_2CH-$ | $CH_3$ | $-CH(CH_3)_2$ |
| I-176 | $Cl_2CH-$ | $CH_3$ | $-CH_2CH_2CH_2CH_3$ |
| I-177 | $Cl_2CH-$ | $CH_3$ | $-\underset{CH_3}{\underset{\mid}{CH}}-CH_2CH_3$ |

**Tabelle 1 (Fortsetzung)**

| Bsp.Nr. | R | $R^1$ | $R^2$ |
|---|---|---|---|
| I-178 | $Cl_2CH-$ | $CH_3$ | $-CH-(CH_2)_2-CH_3$<br>$CH_3$ |
| I-179 | $Cl_2CH-$ | $CH_3$ | $-CH - CH-CH_3$<br>$CH_3 \quad CH_3$ |
| I-180 | $Cl_2CH-$ | $CH_3$ | $-CH=C=CH_2$ |
| I-181 | $Cl_2CH-$ | $CH_3$ | $-CH_2-C\equiv CH$ |
| I-182 | $Cl_2CH-$ | $CH_3$ | $-CH-C\equiv CH$<br>$CH_3$ |
| I-183 | $Cl_2CH-$ | $CH_3$ | $-CH_2CH_2-OH$ |
| I-184 | $Cl_2CH-$ | $CH_3$ | $-CH_2CH_2-CN$ |
| I-185 | $Cl_2CH-$ | $CH_3$ | $-(CH_2)_2-N-(CH_2)_2-N-CO-CHCl_2$<br>$CH_3 \qquad CH_3$ |
| I-186 | $Cl_2CH-$ | $CH_3$ | 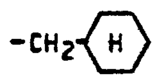 |
| I-187 | $Cl_2CH-$ | $CH_3$ | 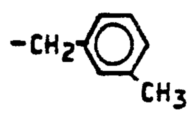 |
| I-188 | $Cl_2CH-$ | $CH_3$ | 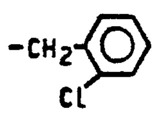 |
| I-189 | $Cl_2CH-$ | $CH_3$ | 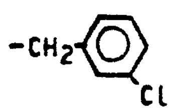 |
| I-190 | $Cl_2CH-$ | $CH_3$ | 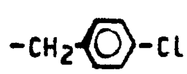 |
| I-191 | $Cl_2CH-$ | $CH_3$ | $-NH_2$ |
| I-192 | $Cl_2CH-$ | $CH_3$ | $-N=C(CH_3)_2$ |
| I-193 | $Cl_2CH-$ | $CH_3$ | 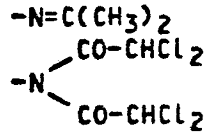 |

Tabelle 1 (Fortsetzung)

| Bsp.Nr. | R | $R^1$ | $R^2$ |
|---|---|---|---|
| I-194 | $Cl_2CH-$ | $CH_3$ | 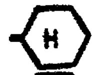 |
| I-195 | $Cl_2CH-$ | $CH_3$ | 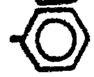 |
| I-196 | $Cl_2CH-$ | $CH_3$ | 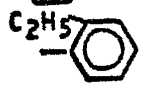 |
| I-197 | $Cl_2CH-$ | $CH_3$ | 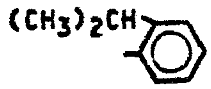 |
| I-198 | $Cl_2CH-$ | $CH_3$ | 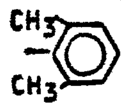 |
| I-199 | $Cl_2CH-$ | $CH_3$ | 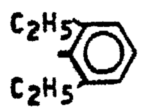 |
| I-200 | $Cl_2CH-$ | $C_2H_5$ | $C_2H_5$ |
| I-201 | $Cl_2CH-$ | $C_2H_5$ | $-CH(CH_3)_2$ |
| I-202 | $Cl_2CH-$ | $C_2H_5$ | $-CH_2CH_2CH_2CH_3$ |
| I-203 | $Cl_2CH-$ | $C_2H_5$ | $-CH(CH_3)-C_2H_5$ |
| I-204 | $Cl_2CH-$ | $C_2H_5$ | $-CH_2-CH(CH_3)_2$ |
| I-205 | $Cl_2CH-$ | $C_2H_5$ | $-C(CH_3)_3$ |
| I-206 | $Cl_2CH-$ | $C_2H_5$ | $-CH(CH_3)-CH_2CH_2CH_3$ |
| I-207 | $Cl_2CH-$ | $C_2H_5$ | $-(CH_2)_5-CH_3$ |
| I-208 | $Cl_2CH-$ | $C_2H_5$ | $-C(C_2H_5)=CH-CH_3$ |
| I-209 | $Cl_2CH-$ | $C_2H_5$ | $-CH_2CH_2-O-CO-CHCl_2$ |
| I-210 | $Cl_2CH-$ | $C_2H_5$ | $-CH_2CH_2-N(C_2H_5)-CO-CHCl_2$ |
| I-211 | $Cl_2CH-$ | $C_2H_5$ | 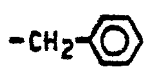 |
| I-212 | $Cl_2CH-$ | $C_2H_5$ | 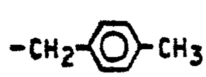 |
| I-213 | $Cl_2CH-$ | $C_2H_5$ | 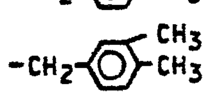 |
| I-214 | $Cl_2CH-$ | $C_2H_5$ | 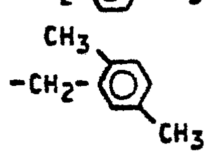 |

**Tabelle 1** (Fortsetzung)

| Bsp.Nr. | R | $R^1$ | $R^2$ |
|---|---|---|---|
| I-215 | $Cl_2CH-$ | $C_2H_5$ | 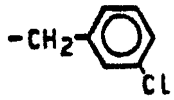 |
| I-216 | $Cl_2CH-$ | $C_2H_5$ | 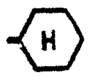 |
| I-217 | $Cl_2CH-$ | $C_2H_5$ | 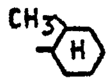 |
| I-218 | $Cl_2CH-$ | $C_2H_5$ | 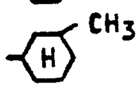 |
| I-219 | $Cl_2CH-$ | $C_2H_5$ | 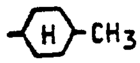 |
| I-220 | $Cl_2CH-$ | $C_2H_5$ | 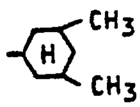 |
| I-221 | $Cl_2CH-$ | $C_2H_5$ | 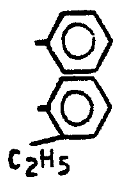 |
| I-222 | $Cl_2CH-$ | $C_2H_5$ | |
| I-223 | $Cl_2CH-$ | $CH_3CH_2CH_2-$ | $-CH_2CH_2CH_3$ |
| I-224 | $Cl_2CH-$ | $CH_3CH_2CH_2-$ | $-CH_2CH_2CH_2CH_3$ |
| I-225 | $Cl_2CH-$ | $CH_3CH_2CH_2-$ | $-CH(CH_3)-C_2H_5$ |
| I-226 | $Cl_2CH-$ | $CH_3CH_2CH_2-$ | $-CH_2-CH(CH_3)_2$ |
| I-227 | $Cl_2CH-$ | $CH_3CH_2CH_2-$ | $-C(CH_3)_3$ |
| I-228 | $Cl_2CH-$ | $CH_3CH_2CH_2-$ | $-(CH_2)_4-CH_3$ |
| I-229 | $Cl_2CH-$ | $CH_3CH_2CH_2-$ | $-CH(CH_3)-(CH_2)_2-CH_3$ |
| I-230 | $Cl_2CH-$ | $CH_3CH_2CH_2-$ | $-CH(CH_3)-CH(CH_3)_2$ |
| I-231 | $Cl_2CH-$ | $CH_3CH_2CH_2-$ | $-(CH_2)_5-CH_3$ |
| I-232 | $Cl_2CH-$ | $CH_3CH_2CH_2-$ | $-CH_2-CH=CH_2$ |
| I-233 | $Cl_2CH-$ | $CH_3CH_2CH_2-$ | $-C(CH_3)=CH-C_2H_5$ |

Tabelle 1 (Fortsetzung)

| Bsp.Nr. | R | $R^1$ | $R^2$ |
|---|---|---|---|
| I-234 | $Cl_2CH-$ | $CH_3CH_2CH_2-$ | 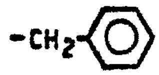 |
| I-235 | $Cl_2CH-$ | $CH_3CH_2CH_2-$ | 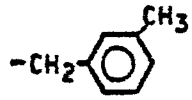 |
| I-236 | $Cl_2CH-$ | $CH_3CH_2CH_2-$ | 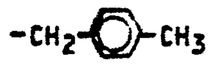 |
| I-237 | $Cl_2CH-$ | $CH_3CH_2CH_2-$ | 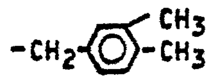 |
| I-238 | $Cl_2CH-$ | $CH_3CH_2CH_2-$ | 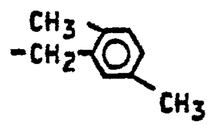 |
| I-239 | $Cl_2CH-$ | $CH_3CH_2CH_2-$ | 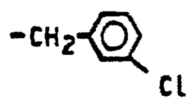 |
| I-240 | $Cl_2CH-$ | $CH_3CH_2CH_2-$ | 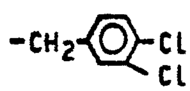 |
| I-241 | $Cl_2CH-$ | $CH_3CH_2CH_2-$ | 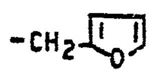 |
| I-242 | $Cl_2CH-$ | $CH_3CH_2CH_2-$ | $-CH_2-\overset{Cl}{C}=CH_2$ |
| I-243 | $Cl_2CH-$ | $CH_3CH_2CH_2-$ | 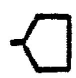 |
| I-244 | $Cl_2CH-$ | $CH_3CH_2CH_2-$ | 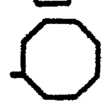 |
| I-245 | $Cl_2CH-$ | $CH_3CH_2CH_2-$ | 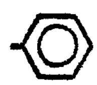 |
| I-246 | $Cl_2CH-$ | $(CH_3)_2CH-$ | $-CH(CH_3)_2$ |
| I-247 | $Cl_2CH-$ | $(CH_3)_2CH-$ | $-CH_2CH_2CH_2CH_3$ |
| I-248 | $Cl_2CH-$ | $(CH_3)_2CH-$ | $-\underset{CH_3}{CH}-C_2H_5$ |
| I-249 | $Cl_2CH-$ | $(CH_3)_2CH-$ | $-CH_2-CH(CH_3)_2$ |
| I-250 | $Cl_2CH-$ | $(CH_3)_2CH-$ | $-(CH_2)_4-CH_3$ |

Tabelle 1 (Fortsetzung)

| Bsp.Nr. | R | $R^1$ | $R^2$ |
|---|---|---|---|
| I-251 | $Cl_2CH-$ | $(CH_3)_2CH-$ | $-CH(CH_3)-(CH_2)_2-CH_3$ |
| I-252 | $Cl_2CH-$ | $(CH_3)_2CH-$ | $-CH_2-CH=CH_2$ |
| I-253 | $Cl_2CH-$ | $(CH_3)_2CH-$ | $-CH_2-$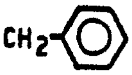 |
| I-254 | $Cl_2CH-$ | $(CH_3)_2CH-$ | 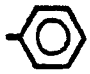 |
| I-255 | $Cl_2CH-$ | $n-C_4H_9-$ | $-CH(CH_3)-C_2H_5$ |
| I-256 | $Cl_2CH-$ | $n-C_4H_9-$ | $-CH_2-CH(CH_3)_2$ |
| I-257 | $Cl_2CH-$ | $n-C_4H_9$ | $-C(CH_3)_3$ |
| I-258 | $Cl_2CH-$ | $n-C_4H_9$ | $-CH_2-CH=CH_2$ |
| I-259 | $Cl_2CH-$ | $n-C_4H_9-$ | $-CH=CH-C_2H_5$ |
| I-260 | $Cl_2CH-$ | $n-C_4H_9-$ | $-CH_2-$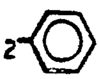 |
| I-261 | $Cl_2CH-$ | $n-C_4H_9-$ | 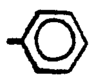 |
| I-262 | $Cl_2CH-$ | $C_2H_5-CH(CH_3)-$ | $-CH_2-CH(CH_3)_2$ |
| I-263 | $Cl_2CH-$ | $C_2H_5-CH(CH_3)-$ | 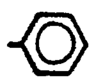 |
| I-264 | $Cl_2CH-$ | $(CH_3)_2CH-CH_2-$ | $-CH_2-CH=CH_2$ |
| I-265 | $Cl_2CH-$ | $(CH_3)_2CH-CH_2-$ | $-CO-H$ |
| I-266 | $Cl_2CH-$ | $(CH_3)_2CH-CH_2-$ | $-CO-CH_3$ |
| I-267 | $Cl_2CH-$ | $(CH_3)_2CH-CH_2-$ | $-CO-CHCl_2$ |
| I-268 | $Cl_2CH-$ | $(CH_3)_3C-$ | $-CH=CH-C_2H_5$ |
| I-269 | $Cl_2CH-$ | $(CH_3)_3C-$ | $-CH_2-CH_2-OH$ |
| I-270 | $Cl_2CH-$ | $CH_3-(CH_2)_5-$ | $-(CH_2)_5-CH_3$ |
| I-271 | $Cl_2CH-$ | $CH_2=CH-CH_2-$ | $-CH_2-CH=CH_2$ |

Tabelle 1 (Fortsetzung)

| Bsp.Nr. | R | $R^1$ | $R^2$ |
|---|---|---|---|
| I-272 | $Cl_2CH-$ | $CH_2=CH-CH_2-$ | 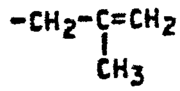 |
| I-273 | $Cl_2CH-$ | $CH_2=CH-CH_2-$ | $-CH_2-CH=N-OCH_3$ |
| I-274 | $Cl_2CH-$ | $CH_2=CH-CH_2-$ | 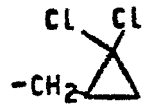 |
| I-275 | $Cl_2CH-$ | $CH_2=CH-CH_2-$ | 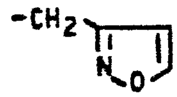 |
| I-276 | $Cl_2CH-$ | $CH_2=CH-CH_2-$ | 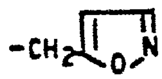 |
| I-277 | $Cl_2CH-$ | $CH_2=CH-CH_2-$ | 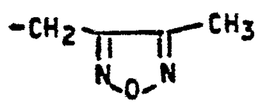 |
| I-278 | $Cl_2CH-$ | $CH_2=CH-CH_2-$ | 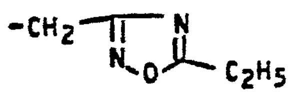 |
| I-279 | $Cl_2CH-$ | $CH_2=CH-CH_2-$ | 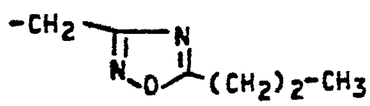 |
| I-280 | $Cl_2CH-$ | $CH_2=CH-CH_2-$ | 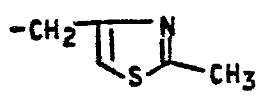 |
| I-281 | $Cl_2CH-$ | $CH_2=CH-CH_2-$ | 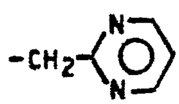 |
| I-282 | $Cl_2CH-$ | $CH_2=CH-CH_2-$ | 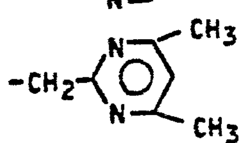 |
| I-283 | $Cl_2CH-$ | $CH_2=CH-CH_2-$ | 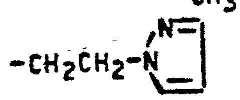 |
| I-284 | $Cl_2CH-$ | $CH_2=CH-CH_2-$ | 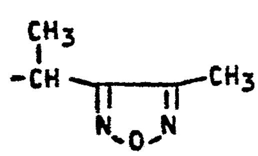 |

<u>Tabelle 1 (Fortsetzung)</u>

| Bsp.Nr. | R | $R^1$ | $R^2$ |
|---|---|---|---|
| I-285 | $Cl_2CH-$ | $CH_2=CH-CH_2-$ | 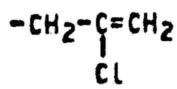 |
| I-286 | $Cl_2CH-$ | $CH_2=CH-CH_2-$ | 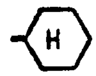 |
| I-287 | $Cl_2CH-$ | $CH_2=CH-CH_2-$ | 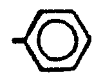 |
| I-288 | $Cl_2CH-$ | $CH_2=CH-CH_2-$ | 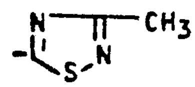 |
| I-289 | $Cl_2CH-$ | 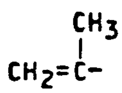 | 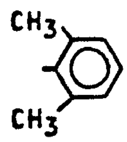 |
| I-290 | $Cl_2CH-$ | $C_2H_5-CH=CH-$ | 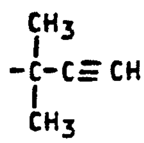 |
| I-291 | $Cl_2CH-$ | $HC\equiv C-CH_2-$ | $-CH_2-CH(OCH_3)_2$ |
| I-292 | $Cl_2CH-$ | $-CH_2-CN$ | $-CH_2-CN$ |
| I-293 | $Cl_2CH-$ | $-CH_2CH_2-CN$ | $-CH_2CH_2-CN$ |
| I-294 | $Cl_2CH-$ | $-CH_2CH_2-OH$ | $-CH_2CH_2-OH$ |
| I-295 | $Cl_2CH-$ | $-CH_2CH_2-Cl$ | $-CH_2CH_2-Cl$ |
| I-296 | $Cl_2CH-$ | $-CH_2CH_2OCH_3$ | $-CH_2CH_2OCH_3$ |
| I-297 | $Cl_2CH-$ | $-CH_2CH_2OC_2H_5$ | $-CH_2CH_2OC_2H_5$ |
| I-298 | $Cl_2CH-$ | 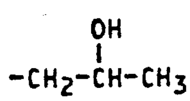 | 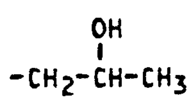 |
| I-299 | $Cl_2CH-$ | $-(CH_2)_2OCOC_2H_5$ | $-(CH_2)_2OCOC_2H_5$ |
| I-300 | $Cl_2CH-$ | $-(CH_2)_2OCOCHCl_2$ | $-(CH_2)_2OCOCHCl_2$ |
| I-301 | $Cl_2CH-$ | $-(CH_2)_2OCOOCH_3$ | $-(CH_2)_2OCOOCH_3$ |
| I-302 | $Cl_2CH-$ | $-(CH_2)_2OCOSC_2H_5$ | $-(CH_2)_2OCOSC_2H_5$ |
| I-303 | $Cl_2CH-$ | $-(CH_2)_2OCONHCH_3$ | $-(CH_2)_2OCONHCH_3$ |

Tabelle 1 (Fortsetzung)

| Bsp.Nr. | R | $R^1$ | $R^2$ |
|---|---|---|---|
| I-304 | $Cl_2CH-$ | $-(CH_2)_2OCON(CH_3)_2$ | $-(CH_2)_2OCON(CH_3)_2$ |
| I-305 | $Cl_2CH-$ | $-(CH_2)_2OCONHC_2H_5$ | $-(CH_2)_2OCONHC_2H_5$ |
| I-306 | $Cl_2CH-$ | $-(CH_2)_2OCONHCH(CH_3)_2$ | $-(CH_2)_2OCONHCH(CH_3)_2$ |
| I-307 | $Cl_2CH-$ | $-(CH_2)_2OCONH(CH_2)_3CH_3$ | $-(CH_2)_2OCONH(CH_2)_3CH_3$ |
| I-308 | $Cl_2CH-$ | $-(CH_2)_2OCONHCH_2CH=CH_2$ | $-(CH_2)_2OCONHCH_2CH=CH_2$ |
| I-309 | $Cl_2CH-$ | $-(CH_2)_3OSO_2CH_3$ | $-(CH_2)_2OSO_2CH_3$ |
| I-310 | $Cl_2CH-$ | $-(CH_2)_3NHCOCHCl_2$ | $-(CH_2)_3NHCOCHCl_2$ |
| I-311 | $Cl_2CH-$ | $-CH_2OCH_3$ | 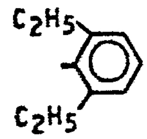 |
| I-312 | $Cl_2CH-$ | $-CH_2CH_2-SH$ | $-CH_2-$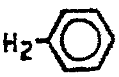 |
| I-313 | $Cl_2CH-$ | $-CH_2CO-OC_2H_5$ | 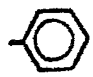 |
| I-314 | $Cl_2CH-$ | $-CH(CH_3)-CO-OCH_3$ | 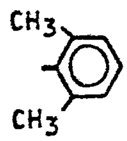 |
| I-315 | $Cl_2CH-$ | $-CH(CH_3)-CO-OCH_3$ | 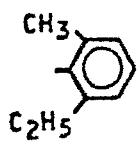 |
| I-316 | $Cl_2CH-$ | $-CH(CH_3)-CO-OCH_3$ | 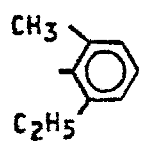 |
| I-317 | $Cl_2CH-$ | $-CH(CH_3)-CO-OC_2H_5$ | 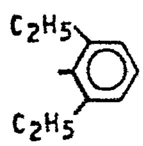 |
| I-318 | $Cl_2CH-$ | $-CH_2-$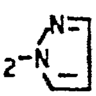 | 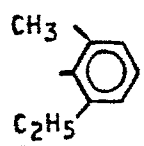 |
| I-319 | $Cl_2CH-$ | $-CH_2-$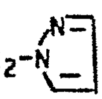 | 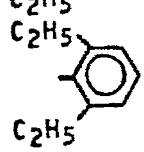 |

**Tabelle 1 (Fortsetzung)**

| Bsp.Nr. | R | $R^1$ | $R^2$ bzw. 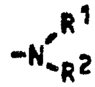 |
|---|---|---|---|
| I-320 | $Cl_2CH-$ | 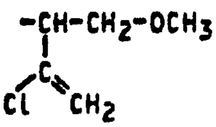 | 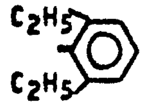 |
| I-321 | $Cl_2CH-$ | 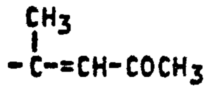 | 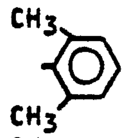 |
| I-322 | $Cl_2CH-$ | 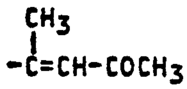 | 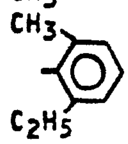 |
| I-323 | $Cl_2CH-$ | 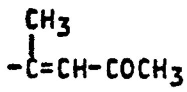 | 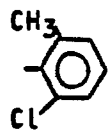 |
| I-324 | $Cl_2CH-$ | 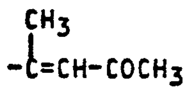 | 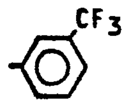 |
| I-325 | $Cl_2CH-$ | 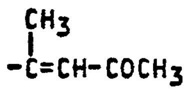 | 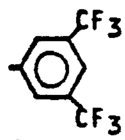 |
| I-326 | $Cl_2CH-$ | 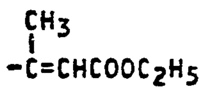 | 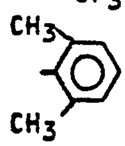 |
| I-327 | $Cl_2CH-$ | 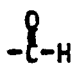 | 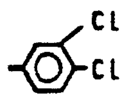 |
| I-328 | $Cl_2CH-$ | $-CO-CHCl_2$ | 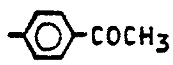 |
| I-329 | $Cl_2CH-$ | | 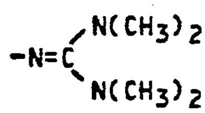 |
| I-330 | $Cl_2CH-$ | | 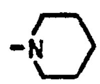 |
| I-331 | $Cl_2CH-$ | | 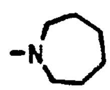 |
| I-332 | $Cl_2CH-$ | | 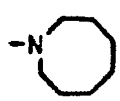 |

Tabelle 1 (Fortsetzung)

| Bsp.Nr. | R | $R^1$ | $R^2$ | bzw. | 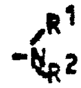 |
|---|---|---|---|---|---|
| I-333 | $Cl_2CH-$ | | | | 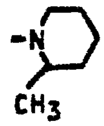 |
| I-334 | $Cl_2CH-$ | | | | 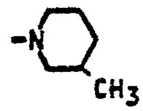 |
| I-335 | $Cl_2CH-$ | | | | 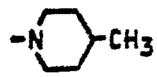 |
| I-336 | $Cl_2CH-$ | | | | 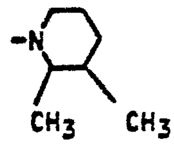 |
| I-337 | $Cl_2CH-$ | | | | 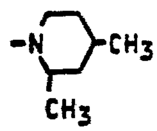 |
| I-338 | $Cl_2CH-$ | | | | 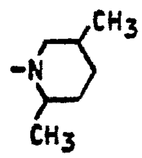 |
| I-339 | $Cl_2CH-$ | | | | 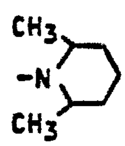 |
| I-340 | $Cl_2CH-$ | | | | 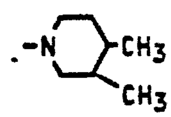 |
| I-341 | $Cl_2CH-$ | | | | 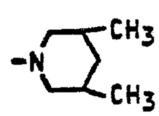 |
| I-342 | $Cl_2CH-$ | | | | 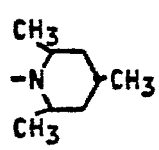 |
| I-343 | $Cl_2CH-$ | | | | 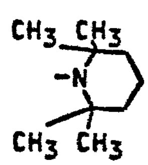 |

**Tabelle 1** (Fortsetzung)

| Bsp.Nr. | R | $R^1$ | $R^2$ | Fp bzw. | 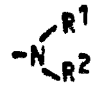 |
|---|---|---|---|---|---|
| I-344 | $Cl_2CH-$ | | | | 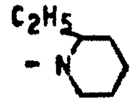 |
| I-345 | $Cl_2CH-$ | | | | 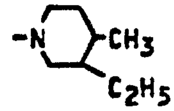 |
| I-346 | $Cl_2CH-$ | | | | 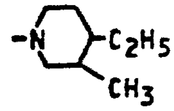 |
| I-347 | $Cl_2CH-$ | | | | 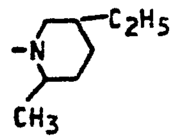 |
| I-348 | $Cl_2CH-$ | | | | 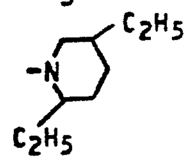 |
| I-349 | $Cl_2CH-$ | | | | 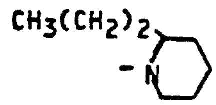 |
| I-350 | $Cl_2CH-$ | | | | 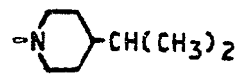 |
| I-351 | $Cl_2CH-$ | | | | 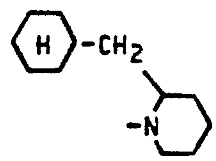 |
| I-352 | $Cl_2CH-$ | | | | 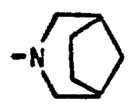 |
| I-353 | $Cl_2CH-$ | | | | 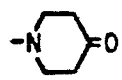 |
| I-354 | $Cl_2CH-$ | | | | 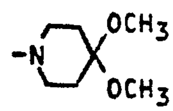 |
| I-355 | $Cl_2CH-$ | | | | 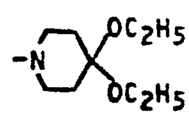 |
| I-356 | $Cl_2CH-$ | | | | 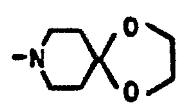 |

Tabelle 1 (Fortsetzung)

| Bsp.Nr. | R | $R^1$ | $R^2$ | bzw. $-N\langle^{R^1}_{R^2}$ |
| --- | --- | --- | --- | --- |
| I-357 | $Cl_2CH-$ | | | 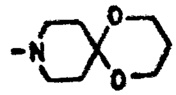 |
| I-358 | $Cl_2CH-$ | | | 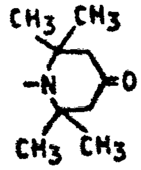 |
| I-359 | $Cl_2CH-$ | | | 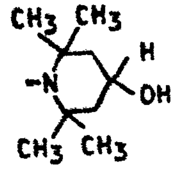 |
| I-360 | $Cl_2CH-$ | | | 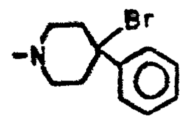 |
| I-361 | $Cl_2CH-$ | | | 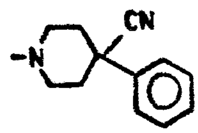 |
| I-362 | $Cl_2CH-$ | | | 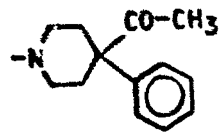 |
| I-363 | $Cl_2CH-$ | | | 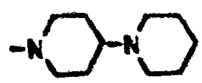 |
| I-364 | $Cl_2CH-$ | | | 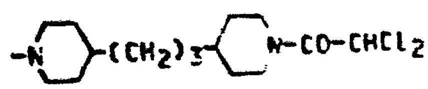 |
| I-365 | $Cl_2CH-$ | | | 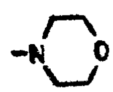 |
| I-366 | $Cl_2CH-$ | | | 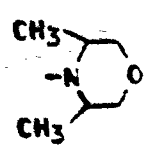 |
| I-367 | $Cl_2CH-$ | | | 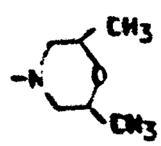 |

**Tabelle 1** (Fortsetzung)

| Bsp.Nr. | R | $R^1$ | $R^2$ | bzw. 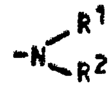 |
|---|---|---|---|---|
| I-368 | $Cl_2CH-$ | | | 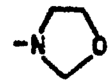 |
| I-369 | $Cl_2CH-$ | | | 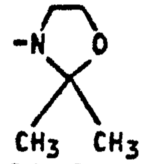 |
| I-370 | $Cl_2CH-$ | | | 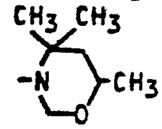 |
| I-371 | $Cl_2CH-$ | | | 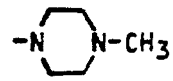 |
| I-372 | $Cl_2CH-$ | | | 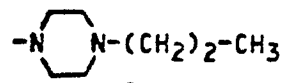 |
| I-373 | $Cl_2CH-$ | | | 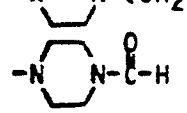 |
| I-374 | $Cl_2CH-$ | | | 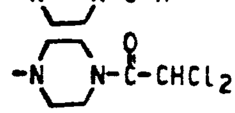 |
| I-375 | $Cl_2CH-$ | | | 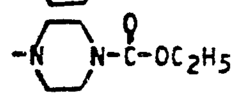 |
| I-376 | $Cl_2CH-$ | | | 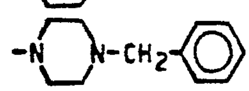 |
| I-377 | $Cl_2CH-$ | | | 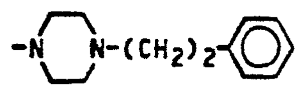 |
| I-378 | $Cl_2CH-$ | | | 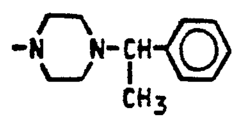 |
| I-379 | $Cl_2CH-$ | | | 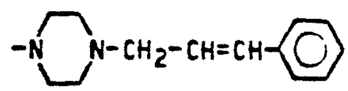 |
| I-380 | $Cl_2CH-$ | | | 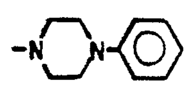 |
| I-381 | $Cl_2CH-$ | | | 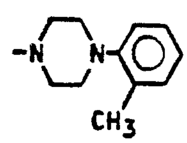 |
| I-382 | $Cl_2CH-$ | | | 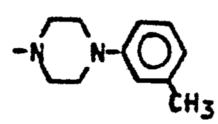 |
| I-383 | $Cl_2CH-$ | | | 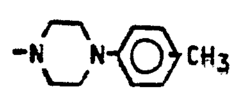 |

0234036

Tabelle 1 (Fortsetzung)

| Bsp.Nr. | R | $R^1$ | $R^2$ | bzw. $-N{<}^{R^1}_{R^2}$ |
|---|---|---|---|---|
| I-384 | $Cl_2CH-$ | | | 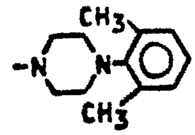 |
| I-385 | $Cl_2CH-$ | | | 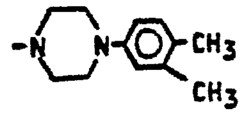 |
| I-386 | $Cl_2CH-$ | | | 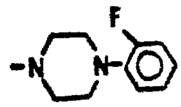 |
| I-387 | $Cl_2CH-$ | | | 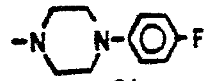 |
| I-388 | $Cl_2CH-$ | | | 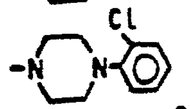 |
| I-389 | $Cl_2CH-$ | | | 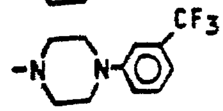 |
| I-390 | $Cl_2CH-$ | | | 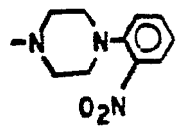 |
| I-391 | $Cl_2CH-$ | | | 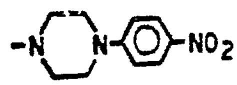 |
| I-392 | $Cl_2CH-$ | | | 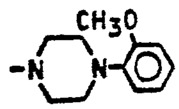 |
| I-393 | $Cl_2CH-$ | | | 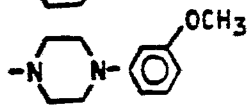 |
| I-394 | $Cl_2CH-$ | | | 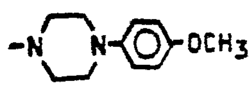 |
| I-395 | $Cl_2CH-$ | | | 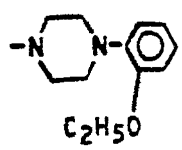 |
| I-396 | $Cl_2CH-$ | | | 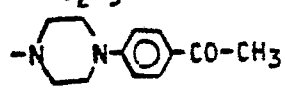 |
| I-397 | $Cl_2CH-$ | | | 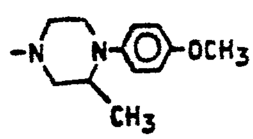 |

Tabelle 1 (Fortsetzung)

| Bsp.Nr. | R | $R^1$ | $R^2$ | bzw. 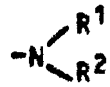 |
|---|---|---|---|---|
| I-398 | $Cl_2CH-$ | | | 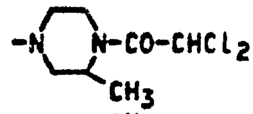 |
| I-399 | $Cl_2CH-$ | | | 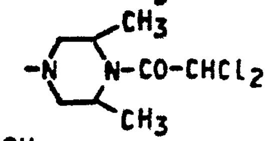 |
| I-400 | $Cl_2CH-$ | | | 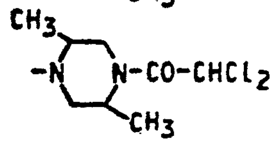 |
| I-401 | $Cl_2CH-$ | | | 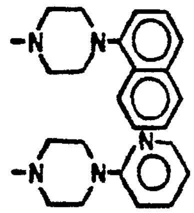 |
| I-402 | $Cl_2CH-$ | | | |
| I-403 | $Cl_2CH-$ | | | 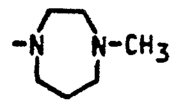 |
| I-404 | $Cl_2CH-$ | | | 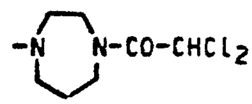 |
| I-405 | $Cl_2CH-$ | | | 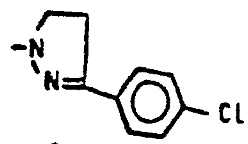 |
| I-406 | $Cl_2CH-$ | | | 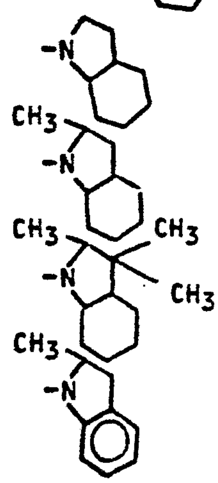 |
| I-407 | $Cl_2CH-$ | | | |
| I-408 | $Cl_2CH-$ | | | |
| I-409 | $Cl_2CH-$ | | | |
| I-410 | $Cl_2CH-$ | | | 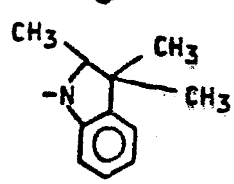 |

Tabelle 1 (Fortsetzung)

| Bsp.Nr. | R | $R^1$ | $R^2$ | bzw. 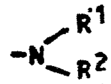 |
|---|---|---|---|---|
| I-411 | $Cl_2CH-$ | | | 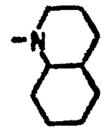 |
| I-412 | $Cl_2CH-$ | | | 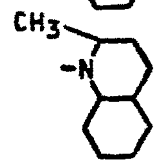 |
| I-413 | $Cl_2CH-$ | | | 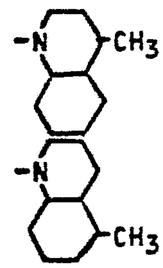 |
| I-414 | $Cl_2CH-$ | | | |
| I-415 | $Cl_2CH-$ | | | 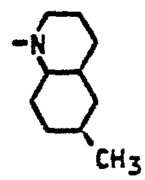 |
| I-416 | $Cl_2CH-$ | | | 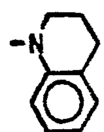 |
| I-417 | $Cl_2CH-$ | | | 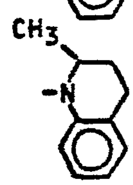 |
| I-418 | $Cl_2CH-$ | | | 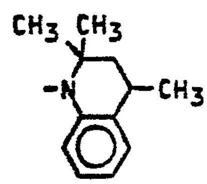 |
| I-419 | $Cl_2CH-$ | | | 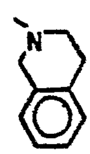 |
| I-420 | $Cl_2CH-$ | | | 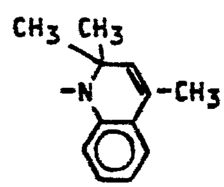 |

**Tabelle 1** (Fortsetzung)

| Bsp.Nr. | R | $R^1$ | $R^2$ | bzw. 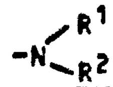 |
|---|---|---|---|---|
| I-421 | $Cl_2CH-$ | | | 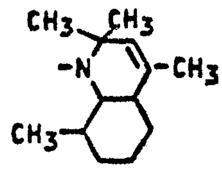 |
| I-422 | $Cl_3C-$ | H | $-CH_2-CH=CH_2$ | |
| I-423 | $Cl_3C-$ | H | $-CH_2CH_2-Br$ | |
| I-424 | $Cl_3C-$ | H | 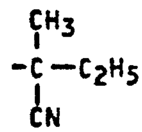 | |
| I-425 | $Cl_3C-$ | H | $-CH_2-NHCOCH_2Cl$ | |
| I-426 | $Cl_3C-$ | $CH_3$ | $CH_3$ | |
| I-427 | $Cl_3C-$ | $CH_3$ | 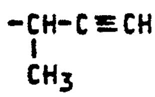 | |
| I-428 | $Cl_3C-$ | $C_2H_5$ | $-CH_2CH_2CH_2CH_3$ | |
| I-429 | $Cl_3C-$ | $-CH_2CH_2CH_3$ | $-CH_2CH_2CH_3$ | |
| I-430 | $Cl_3C-$ | $-CH(CH_3)_2$ | $-CH(CH_3)_2$ | |
| I-431 | $Cl_3C-$ | $-CH_2CH(CH_3)_2$ | $-CH_2CH(CH_3)_2$ | |
| I-432 | $Cl_3C-$ | $-CH_2-CH=CH_2$ | $-CH_2-CH=CH_2$ | |
| I-433 | $Cl_3C-$ | | | 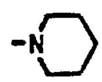 |
| I-434 | $Cl_3C-$ | | | 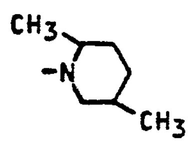 |
| I-435 | $Br_3C-$ | H | 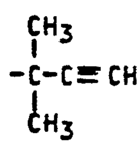 | |
| I-436 | $Br_3C-$ | H | 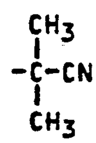 | |
| I-437 | $Br_3C-$ | H | $-CH_2-CH=CH_2$ | |

| Bsp.Nr. | R | $R^1$ | $R^2$ | bzw. $-N{<}^{R^1}_{R^2}$ |
|---|---|---|---|---|
| I-438 | $Br_3C-$ | $CH_3$ | $CH_3$<br>$-CH-C\equiv CH$ | |
| I-439 | $Br_3C-$ | $-CH_2-CH=CH_2$ | $-CH_2-CH=CH_2$ | |
| I-440 | $CH_3$<br>$Cl-CH-$ | $-CH_2-CH=CH_2$ | $-CH_2-CH=CH_2$ | |
| I-441 | $CH_3$<br>$Cl-CH-$ | $-CH_2-CH=CH_2$ | $-CH_2-CO-CH_3$ | |
| I-442 | $CH_3$<br>$Cl-CH-$ | $-CH_2-CH=CH_2$ | $-CH_2-CH=N-OCH_3$ | |
| I-443 | $CH_3$<br>$Cl-CH-$ | $-CH_2-CH=CH_2$ | $CH_3$<br>$-CH_2-C=N-OCH_3$ | |
| I-444 | $CH_3$<br>$Cl-CH-$ | $-CH_2-CH=CH_2$ | $-CH_2-$ 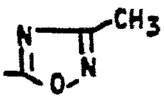 | |
| I-445 | $CH_3$<br>$Cl-CH-$ | $-CH_2-CH=CH_2$ | $-CH_2-$ 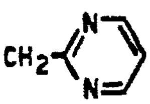 | |
| I-446 | $CH_3$<br>$Cl-CH-$ | $-CH_2-CH=CH_2$ | $-CH_2-$ 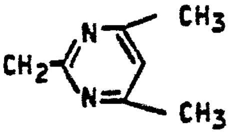 | |
| I-447 | $CH_3$<br>$Cl-CH-$ | $-CH_2-CH=CH_2$ | 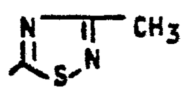 | |
| I-448 | $CH_3$<br>$Cl-CH-$ | $CH_3$<br>$-CH-COOCH_3$ | 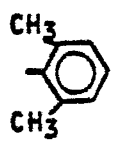 | |
| I-449 | $CH_3$<br>$Cl-CH-$ | | | 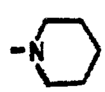 |
| I-450 | $CH_3$<br>$Cl-CH-$ | | | 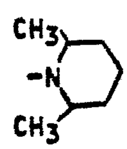 |
| I-451 | $CH_3$<br>$Cl-CH-$ | | | 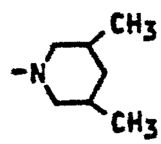 |

**Tabelle 1** (Fortsetzung)

| Bsp.Nr. | R | $R^1$ | $R^2$ | bzw. 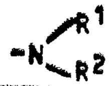 |
|---|---|---|---|---|
| I-452 | $CH_3$<br>$Cl-CH-$ | | | 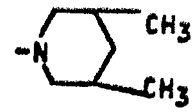 |
| I-453 | $CH_3$<br>$Cl-CH-$ | | | 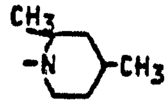 |
| I-454 | $CH_3$<br>$Cl-CH-$ | | | 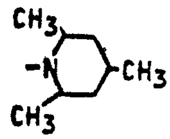 |
| I-455 | $CH_3$<br>$Cl-CH-$ | | | 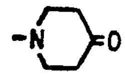 |
| I-456 | $CH_3$<br>$Cl-CH-$ | | | 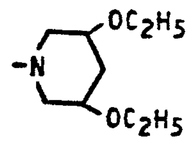 |
| I-457 | $CH_3$<br>$Cl-CH-$ | | | 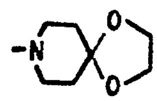 |
| I-458 | $CH_3$<br>$Cl-CH-$ | | | 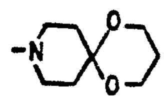 |
| I-459 | $CH_3$<br>$Cl-CH-$ | | | 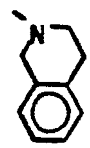 |
| I-460 | $CH_3$<br>$Cl-CH-$ | | | 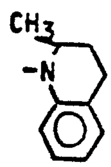 |
| I-461 | $CH_3$<br>$Cl-CH-$ | | | 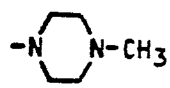 |
| I-462 | $CH_3$<br>$Cl-CH-$ | | | 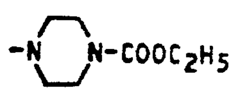 |
| I-463 | $CH_3$<br>$Cl-CH-$ | | | 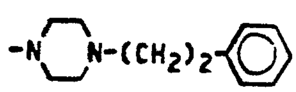 |

<u>Tabelle 1</u> (Fortsetzung)

| Bsp.Nr. | R | $R^1$ | $R^2$ | bzw. $-NR^1R^2$ |
|---|---|---|---|---|
| I-464 | 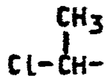 | | | 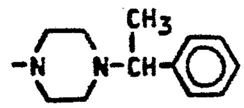 |
| I-465 | 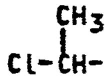 | | | 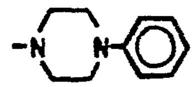 |
| I-466 | 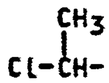 | | | 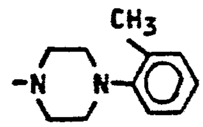 |
| I-467 | 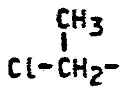 | | | 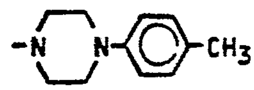 |
| I-468 | 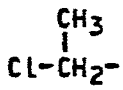 | | | 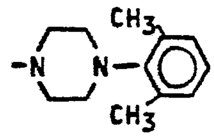 |
| I-469 | 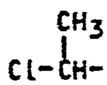 | | | 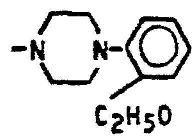 |
| I-470 | 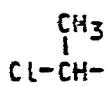 | | | 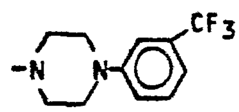 |
| I-471 | 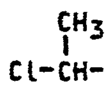 | | | 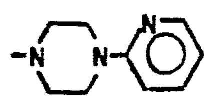 |
| I-472 | 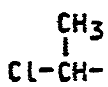 | | | 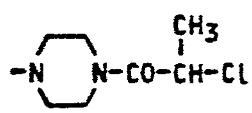 |
| I-473 | 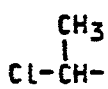 | | | 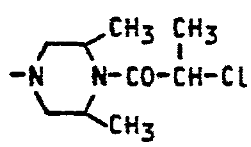 |
| I-474 | 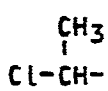 | | | 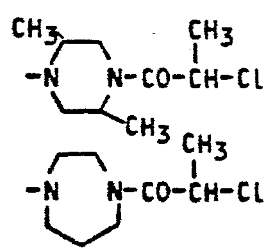 |
| I-475 | 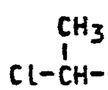 | | | |

Tabelle 1 (Fortsetzung)

| Bsp.Nr. | R | $R^1$ | $R^2$ |
|---|---|---|---|
| I-476 | $Cl-CH_2CH_2-$ | H | 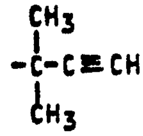 |
| I-477 | $Cl-CH_2CH_2-$ | $CH_3$ | 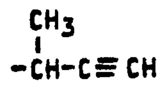 |
| I-478 | $Cl-CH_2CH_2-$ | $-CH_2-CH=CH_2$ | $-CH_2-CH=CH_2$ |
| I-479 | 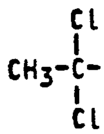 | $-CH_2-CH=CH_2$ | $-CH_2-CH=CH_2$ |
| I-480 | 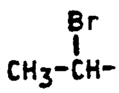 | H | 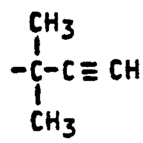 |
| I-481 | 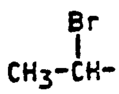 | $CH_3$ | 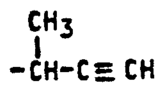 |
| I-482 | 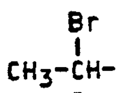 | $-CH_2-CH=CH_2$ | $-CH_2-CH=CH_2$ |
| I-483 | 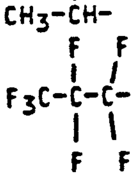 | $-CH_2-CH=CH_2$ | $-CH_2-CH=CH_2$ |
| I-484 | $BrCH_2CH_2CH_2-$ | H | $-SO_2Cl$ |
| I-485 | 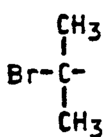 | H | 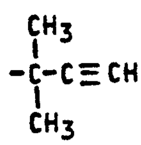 |
| I-486 | 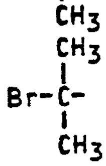 | $-CH_2-CH=CH_2$ | $-CH_2-CH=CH_2$ |
| I-487 | $Br-(CH_2)_5-$ | $-CH_2-CH=CH_2$ | $-CH_2-CH=CH_2$ |
| I-488 | $HO-CH_2-$ | $C_2H_5$ | $C_2H_5$ |
| I-489 | $NC-CH_2-$ | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-490 | $NCO-CH_2-$ | $-CH_2-CH=CH_2$ | $-CH_2-CH=CH_2$ |
| I-491 | 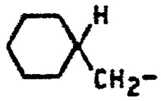 | H | $CH_3$<br>\|<br>$-C-C\equiv CH$<br>\|<br>$CH_3$ |
| I-492 | 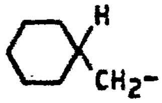 | $CH_3$ | $CH_3$<br>\|<br>$-CH-C\equiv CH$ |
| I-493 | 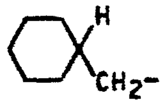 | $-CH_2-CH=CH_2$ | $-CH_2-CH=CH_2$ |
| I-494 | 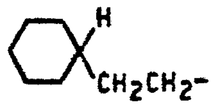 | $CH_3$ | $CH_3$<br>\|<br>$-CH-C\equiv CH$ |
| I-495 | 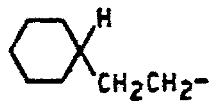 | $-CH_2-CH=CH_2$ | $-CH_2-CH=CH_2$ |
| I-496 | 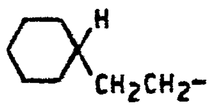 | $CH_3$ | $CH_3$<br>\|<br>$-CH-C\equiv CH$ |
| I-497 | 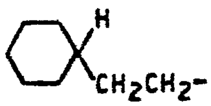 | $-CH_2-CH=CH_2$ | $-CH_2-CH=CH_2$ |
| I-498 | $CH_3OCH_2CH_2-$ | $-C_2H_5$ | $-C_2H_5$ |
| I-499 | $CHCl_2$<br>\|<br>$HO-C-O-CH_2-$<br>\|<br>$CHCl_2$ | $-CH_2-CH=CH_2$ | $-CH_2-CH=CH_2$ |
| I-500 | $CCl_3$<br>\|<br>$HO-C-O-CH_2-$<br>\|<br>$CHCl_2$ | $-CH_2-CH=CH_2$ | $-CH_2-CH=CH_2$ |
| I-501 | $C_2H_5S\diagdown$<br>$CH-$<br>$C_2H_5S\diagup$ | $-CH_2-CH=CH_2$ | $-CH_2-CH=CH_2$ |

<u>Tabelle 1</u> (Fortsetzung)

| Bsp.Nr. | R | $R^1$ | $R^2$ |
|---|---|---|---|
| I-502 | 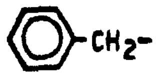 | H | 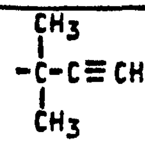 |
| I-503 | 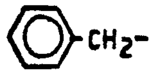 | $CH_3$ | 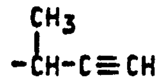 |
| I-504 | 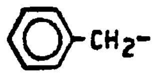 | $-CH_2-CH=CH_2$ | $-CH_2-CH=CH_2$ |
| I-505 | 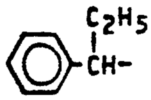 | H | 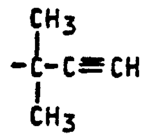 |
| I-506 | 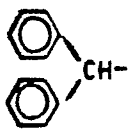 | $CH_3$ | 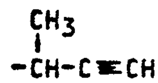 |
| I-507 | 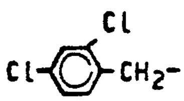 | H | 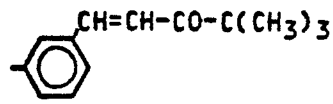 |
| I-508 | 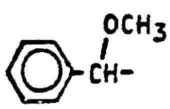 | $-CH_2-CH=CH_2$ | $-CH_2-CH=CH_2$ |
| I-509 | 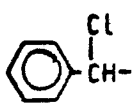 | H | 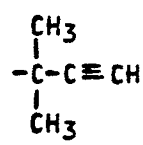 |
| I-510 | 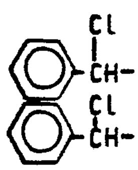 | $CH_3$ | 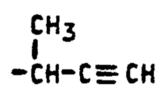 |
| I-511 | | $-CH_2-CH=CH_2$ | $-CH_2-CH=CH_2$ |
| I-512 | 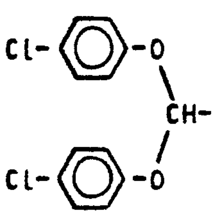 | $-CH_2CH=CH_2$ | $-CH_2-CH=CH_2$ |
| I-513 | 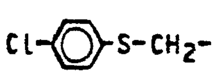 | H | $-CH_2-CH(CH_3)_2$ |
| I-514 | 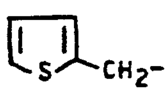 | H | 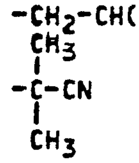 |

Tabelle 1 (Fortsetzung)

| Bsp.Nr. | R | $R^1$ | $R^2$ |
|---|---|---|---|
| I-515 | $CH_3-CO-CH_2-$ | $-CH_2-CH=CH_2$ | $-CH_2-CH=CH_2$ |
| I-516 | 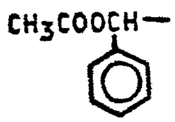 | H | 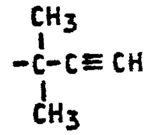 |
| I-517 | 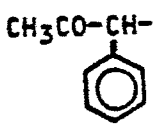 | H | 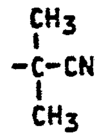 |
| I-518 | 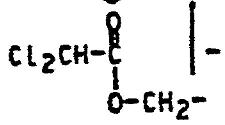 | $-CH_2-CH=CH_2$ | $-CH_2-CH=CH_2$ |
| I-519 | 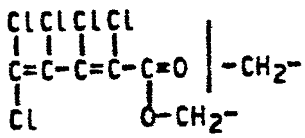 | $-CH_2-CH=CH_2$ | $-CH_2-CH=CH_2$ |
| I-520 | $CH_3O-CO-CH_2CH_2-$ | H | 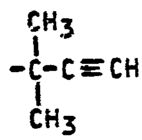 |
| I-521 | 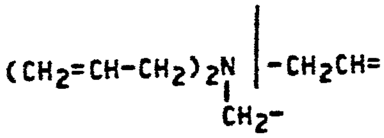 | $-CH_2CH=CH_2$ | $-CH_2-CH=CH_2$ |
| I-522 | 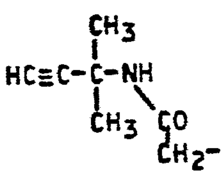 | H | 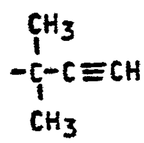 |
| I-523 | 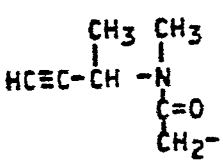 | $CH_3$ | 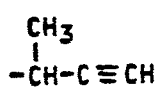 |
| I-524 | 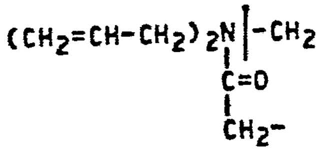 | $-CH_2CH=CH_2$ | $-CH_2-CH=CH_2$ |

Tabelle 1 (Fortsetzung)

| Bsp.Nr. | R | $R^1$ | $R^2$ |
|---|---|---|---|
| I-525 | 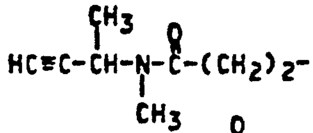 | $-CH_3$ | 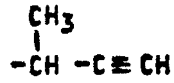 |
| I-526 | 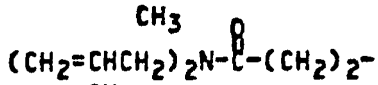 | $-CH_2-CH=CH_2$ | $-CH_2-CH=CH_2$ |
| I-527 | 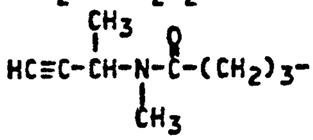 | $-CH_3$ | 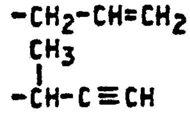 |
| I-528 | 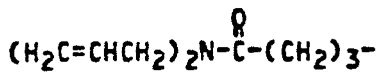 | $-CH_2-CH=CH_2$ | $-CH_2-CH=CH_2$ |
| I-529 | 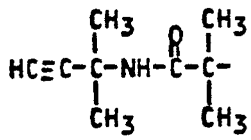 | H | 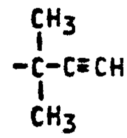 |
| I-530 | 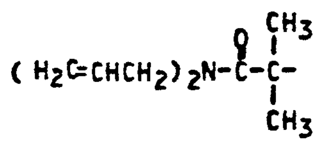 | $-CH_2-CH=CH_2$ | $-CH_2-CH=CH_2$ |
| I-531 | 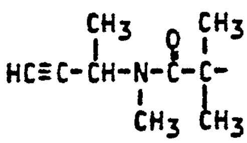 | $-CH_3$ | 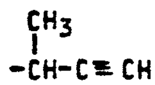 |
| I-532 | 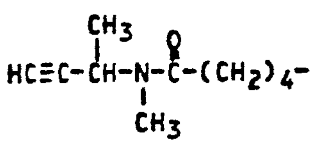 | $-CH_3$ | 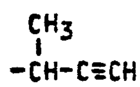 |
| I-533 | 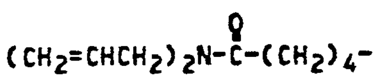 | $-CH_2-CH=CH_2$ | $-CH_2-CH=CH_2$ |
| I-534 | 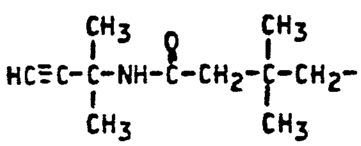 | H | 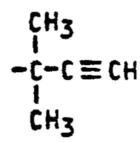 |
| I-535 | 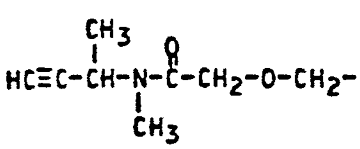 | $-CH_3$ | 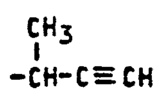 |
| I-536 | 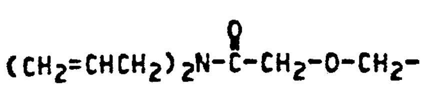 | $-CH_2-CH=CH_2$ | $-CH_2-CH=CH_2$ |
| I-537 | 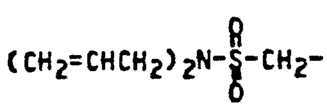 | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-538 | $CH_2=CH-$ | H | $CH_3$<br>$-C-C\equiv CH$<br>$CH_3$ |
| I-539 | $CH_2=CH-$ | $CH_3$ | $CH_3$<br>$-CH-C\equiv CH$ |
| I-540 | $CH_3-CH=CH-$ | H | $CH_3$<br>$-C-C\equiv CH$<br>$CH_3$ |
| I-541 | $CH_3-CH=CH-$ | $-CH_2-CH=CH_2$ | $-CH_2-CH=CH_2$ |
| I-542 | $CH_3$<br>$CH_2=C-$ | H | $CH_3$<br>$-C-C\equiv CH$<br>$CH_3$ |
| I-543 | $(CH_3)_2C=CH-$ | H | $CH_3$<br>$-C-C\equiv CH$<br>$CH_3$ |
| I-544 | $(CH_3)_2C=CH-$ | $-CH_3$ | $CH_3$<br>$-CH-C\equiv CH$ |
| I-545 | $CH_3-CH=CH-CH=CH-$ | H | $CH_3$<br>$-C-C\equiv CH$<br>$CH_3$ |
| I-546 | $CH_3-CH=CH-CH=CH-$ | $-CH_2-CH=CH_2$ | $-CH_2-CH=CH_2$ |
| I-547 | Cl<br>Cl-CH=C- | $-CH_3$ | $CH_3$<br>$-CH-C\equiv CH$ |
| I-548 | $CH_3$<br>HO-C=C-<br>$COOCH_3$ | H | 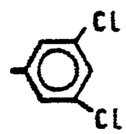 |
| I-549 | 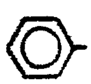-CH=CH- | H | $-C(CH_3)_3$ |
| I-550 | 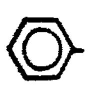-CH=CH- | H | $CH_3$<br>$-C-CN$<br>$CH_3$ |

**Tabelle 1** (Fortsetzung)

| Bsp.Nr. | R | $R^1$ | $R^2$ |
|---|---|---|---|
| I-551 | 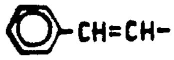 | $CH_3$ | 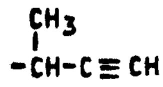 |
| I-552 | 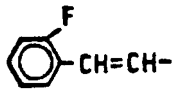 | $-CH_2-CH=CH_2$ | $-CH_2-CH=CH_2$ |
| I-553 | 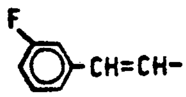 | H | 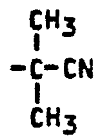 |
| I-554 | 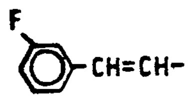 | $-CH_2-CH=CH_2$ | $-CH_2-CH=CH_2$ |
| I-555 | 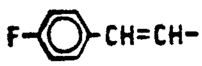 | $-CH_2-CH=CH_2$ | $-CH_2-CH=CH_2$ |
| I-556 | 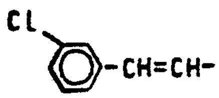 | $-CH_2-CH=CH_2$ | $-CH_2-CH=CH_2$ |
| I-557 | 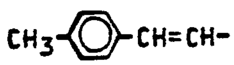 | H | 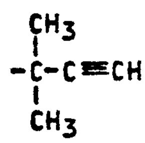 |
| I-558 | 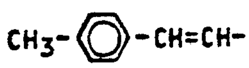 | $-CH_2-CH=CH_2$ | $-CH_2-CH=CH_2$ |
| I-559 | 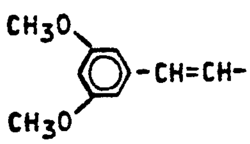 | H | 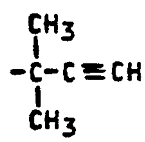 |
| I-560 | 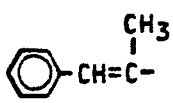 | H | 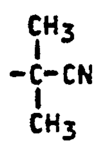 |
| I-561 | 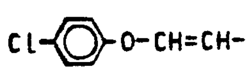 | H | 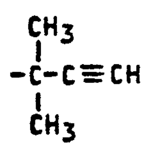 |
| I-562 | 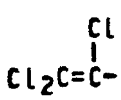 | $-CH_2-CH=CH_2$ | $-CH_2-CH=CH_2$ |

Tabelle 1 /Fortsetzung)

| Bsp.Nr. | R | $R^1$ | $R^2$ |
|---|---|---|---|
| I-563 | 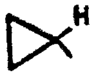 | H | $CH_3$<br>-C-C≡CH<br>$CH_3$ |
| I-564 | 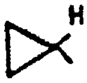 | $CH_3$ | $CH_3$<br>-CH-C≡CH |
| I-565 | 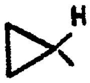 | $-CH_2-CH=CH_2$ | $-CH_2-CH=CH_2$ |
| I-566 | 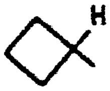 | H | $CH_3$<br>-C-CN<br>$CH_3$ |
| I-567 | 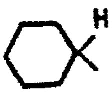 | H | $CH_3$<br>-C-C≡CH<br>$CH_3$ |
| I-568 | 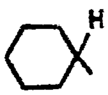 | $CH_3$ | $CH_3$<br>-CH-C≡CH |
| I-569 | 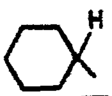 | $-CH_2-CH=CH_2$ | $-CH_2-CH=CH_2$ |
| I-570 | 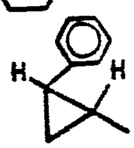 | H | $CH_3$<br>-C-C≡CH<br>$CH_3$ |
| I-571 | 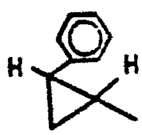 | $-CH_2-CH=CH_2$ | $-CH_2-CH=CH_2$ |
| I-572 | 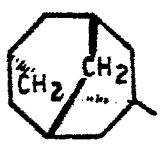 | H | $CH_3$<br>-C-C≡CH<br>$CH_3$ |
| I-573 | 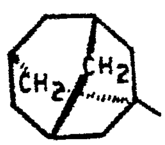 | H | $CH_3$<br>-C-CN<br>$CH_3$ |

Tabelle 1 (Fortsetzung)

| Bsp.Nr. | R | $R^1$ | $R^2$ |
|---|---|---|---|
| I-574 | 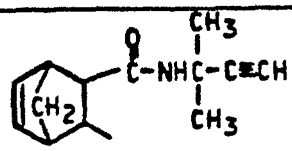 | H | $CH_3$<br>$-C-C\equiv CH$<br>$CH_3$ |
| I-575 | 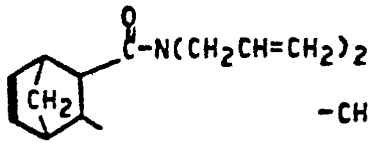 | $-CH_2-CH=CH_2$ | $-CH_2-CH=CH_2$ |
| I-576 | 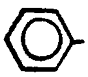 | $CH_3$ | $CH_3$<br>$-CH-C\equiv CH$ |
| I-577 | 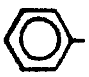 | $-CH_2-CH=CH_2$ | $-CH_2-CH=CH_2$ |
| I-578 | 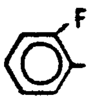 | H | $CH_3$<br>$-C-C\equiv CH$<br>$CH_3$ |
| I-579 | 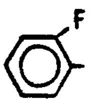 | $CH_3$ | $CH_3$<br>$-CH-C\equiv CH$ |
| I-580 | 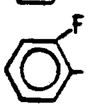 | $-CH_2-CH=CH_2$ | $-CH_2-CH=CH_2$ |
| I-581 | 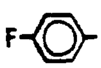 | H | $CH_3$<br>$-C-CN$<br>$CH_3$ |
| I-582 | 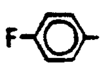 | $-CH_2=CH=CH_2$ | $-CH_2-CH=CH_2$ |
| I-583 | 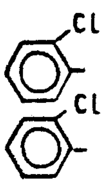 | $CH_3$ | $CH_3$<br>$-CH-C\equiv CH$ |
| I-584 | | $-CH_2-CH=CH_2$ | $-CH_2-CH=CH_2$ |
| I-585 | 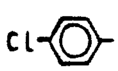 | H | $CH_3$<br>$-C-C\equiv CH$<br>$CH_3$ |
| I-586 | 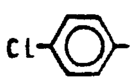 | $CH_3$ | $CH_3$<br>$-CH-C\equiv CH$ |
| I-587 | 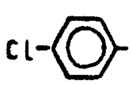 | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-588 | 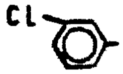 | H | $-C(CH_3)_3$ |
| I-589 | 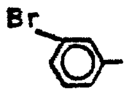 | $-CH_3$ | $CH_3$<br>\|<br>$-CH-C \equiv CH$ |
| I-590 | 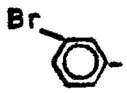 | $-CH_2-CH=CH_2$ | $-CH_2-CH=CH_2$ |
| I-591 | 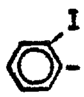 | H | $CH_3$<br>\|<br>$-C-C \equiv CH$<br>\|<br>$CH_3$ |
| I-592 | 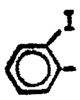 | $-CH_3$ | $CH_3$<br>\|<br>$-CH-C \equiv CH$ |
| I-593 | 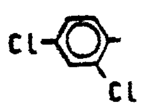 | H | $CH_3$<br>\|<br>$-C-C \equiv CH$<br>\|<br>$CH_3$ |
| I-594 | 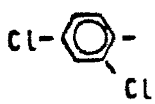 | $-CH_3$ | $CH_3$<br>\|<br>$-CH-C \equiv CH$ |
| I-595 | 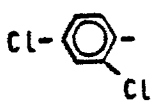 | H | 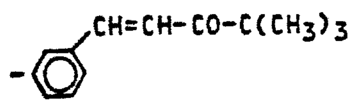 |
| I-596 | 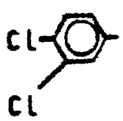 | $-CH_3$ | $CH_3$<br>\|<br>$-CH-C \equiv CH$ |
| I-597 | 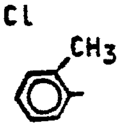 | H | $CH_3$<br>\|<br>$-C-C \equiv CH$<br>\|<br>$CH_3$ |
| I-598 | 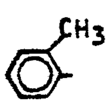 | $-CH_3$ | $CH_3$<br>\|<br>$-CH-C \equiv CH$ |
| I-599 | 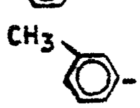 | $-CH_3$ | $CH_3$<br>\|<br>$-CH-C \equiv CH$ |
| I-600 | 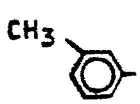 | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-601 | 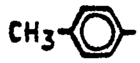 | H | 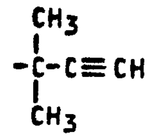 |
| I-602 | 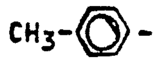 | $CH_3$ | 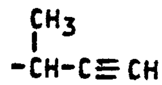 |
| I-603 | 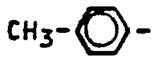 | $-CH_2-CH=CH_2$ | $-CH_2-CH=CH_2$ |
| I-604 | 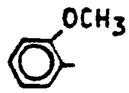 | H | 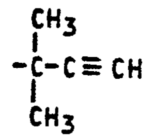 |
| I-605 | 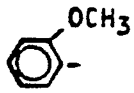 | $-CH_3$ | 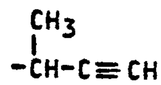 |
| I-606 | 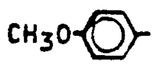 | $-CH_3$ | 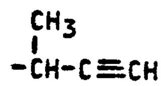 |
| I-607 | 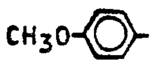 | $-CH_2-CH=CH_2$ | $-CH_2-CH=CH_2$ |
| I-608 | 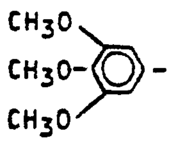 | $-CH_3$ | 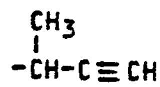 |
| I-609 | 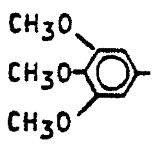 | $-CH_3$ | 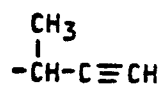 |
| I-610 | 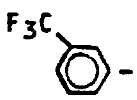 | $-CH_3$ | 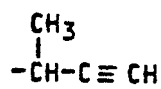 |
| I-611 | 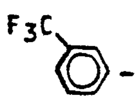 | $-CH_2-CH=CH_2$ | $-CH_2-CH=CH_2$ |
| I-612 | 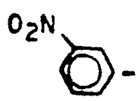 | H | 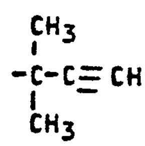 |
| I-613 | 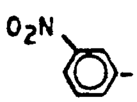 | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-614 | 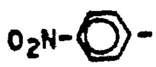 | H | 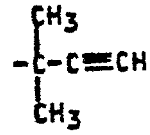 |
| I-615 | 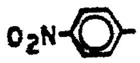 | $-CH_3$ | 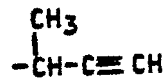 |
| I-616 | 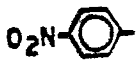 | $-CH_2-CH=CH_2$ | $-CH_2-CH=CH_2$ |
| I-617 | 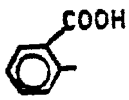 | H | 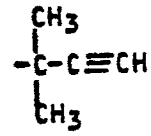 |
| I-618 | 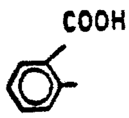 | $-CH_2-CH=CH_2$ | $-CH_2-CH=CH_2$ |
| I-619 | 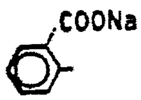 | H | 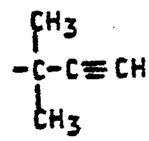 |
| I-620 | 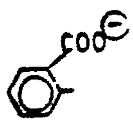 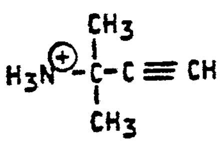 | H | 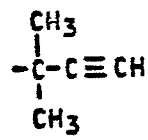 |
| I-621 | 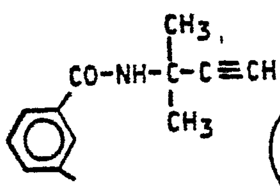 | H | 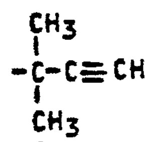 |
| I-622 | 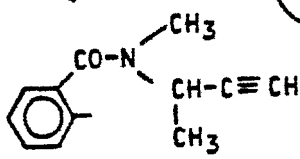 | $-CH_3$ | 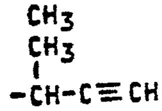 |
| I-623 | 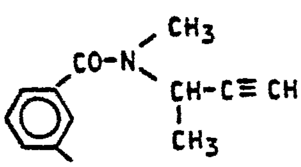 | $-CH_3$ | 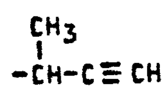 |

Tabelle 1 (Fortsetzung)

| Bsp.Nr. | R | $R^1$ | $R^2$ |
|---|---|---|---|
| I-624 | 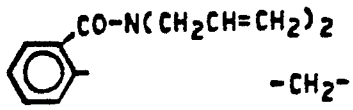 | $-CH_2-CH=CH_2$ | $-CH_2-CH=CH_2$ |
| I-625 | 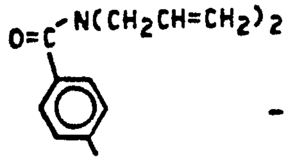 | $-CH_2-CH=CH_2$ | $-CH_2-CH=CH_2$ |
| I-626 | 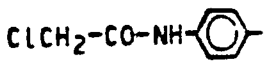 | H | 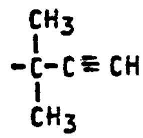 |
| I-627 | 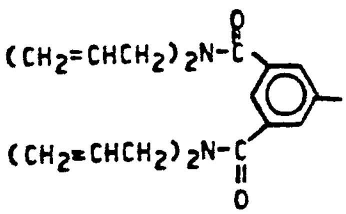 | $-CH_2-CH=CH_2$ | $-CH_2-CH=CH_2$ |
| I-628 | 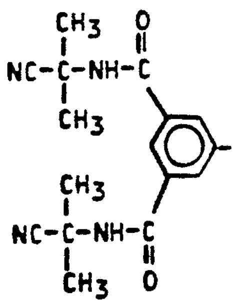 | H | 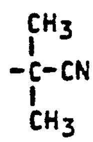 |
| I-629 | 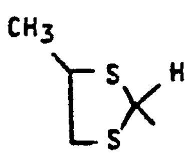 | $-CH_2-CH=CH_2$ | $-CH_2-CH=CH_2$ |
| I-630 | 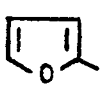 | H | 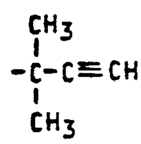 |
| I-631 | 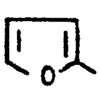 | $-CH_3$ | 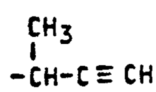 |
| I-632 | 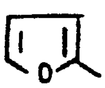 | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-633 | 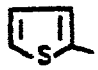 | H | 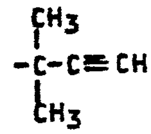 |
| I-634 | 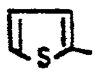 | $-CH_3$ | 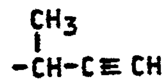 |
| I-635 | 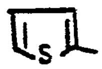 | $-CH_2-CH=CH_2$ | $-CH_2-CH=CH_2$ |
| I-636 | 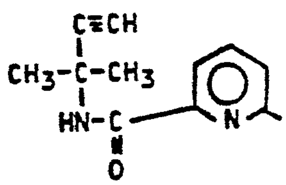 | H | 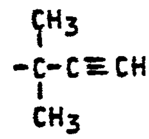 |
| I-637 | 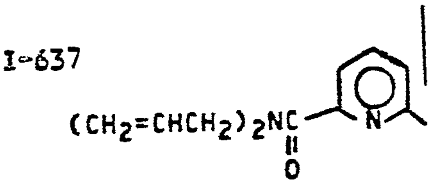 | $-CH_2-CH=CH_2$ | $-CH_2-CH=CH_2$ |
| I-638 | $Cl-CH_2CH_2O-$ | $-CH_2-CH=CH_2$ | $-CH_2-CH=CH_2$ |
| I-639 | 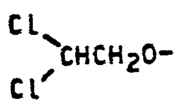 | $-CH_2-CH=CH_2$ | $-CH_2-CH=CH_2$ |
| I-640 | $CH_3-C{\equiv}C-CH_2O-$ | $-CH_2-CH=CH_2$ | $-CH_2-CH=CH_2$ |
| I-641 | 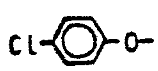 | $-CH_2-CH=CH_2$ | $-CH_2-CH=CH_2$ |
| I-642 | 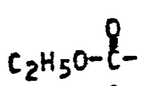 | $-CH_3$ | 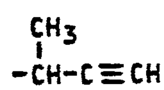 |
| I-643 | 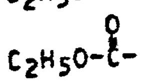 | $-CH_2-CH=CH_2$ | $-CH_2-CH=CH_2$ |

Tabelle 1 (Fortsetzung)

| Bsp.Nr. | R | $R^1$ | $R^2$ |
|---|---|---|---|
| I-644 | 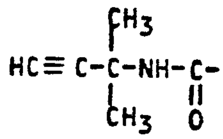 | H | 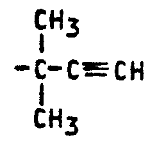 |
| I-645 | 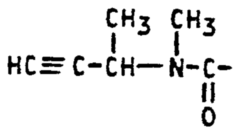 | $-CH_3$ | 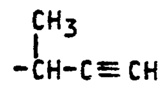 |
| I -646 | 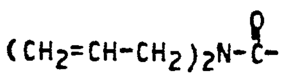 | $-CH_2CH=CH_2$ | $-CH_2-CH=CH_2$ |

Die erfindungsgemäß verwendbaren Amide der Formel (I) sind bekannt (vergl. z. B. DE-OS 2 828 265 oder DE-OS 3 228 007 oder DE-OS 2 218 097).

Die erfindungsgemäß verwendbaren Amide der Formel (I) eignen sich - wie bereits erwähnt - zu Verbesserung der Kulturpflanzen-Verträglichkeit von herbizid wirksamen Sulfonylharnstoff-Derivaten der Formel (II).

Die erfindungsgemäß verwendbaren herbizid wirksamen Sulfonylharnstoff-Derivate sind durch die Formel (II) allgemein definiert.

Bevorzugt verwendbar sind herbizide Sulfonylharnstoff--Derivate der Formel (II), bei welchen

$R^3$ für den Rest 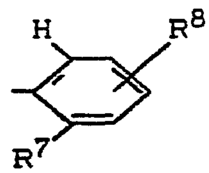 steht, worin

$R^7$ und $R^8$ gleich oder verschieden sind und für Wasserstoff, Halogen [wie insbesondere Fluor, Chlor, Brom und/oder Iod], Cyano, Nitro, $C_1$-$C_6$-Alkyl [welches gegebenen-

falls durch Fluor, Chlor, Brom, Cyano, Carboxy, $C_1$-$C_4$-Alkoxycarbonyl, $C_1$-$C_4$-Alkylamino-carbonyl, Di-($C_1$-$C_4$-alkyl)-amino-carbonyl, Hydroxy, $C_1$-$C_4$-Alkoxy, Formyloxy, $C_1$-$C_4$-Alkyl-carbonyloxy, $C_1$-$C_4$-Alkoxy-carbonyloxy, $C_1$-$C_4$-Alkylamino-carbonyloxy, $C_1$-$C_4$-Alkylthio, $C_1$-$C_4$-Alkylsulfinyl, $C_1$-$C_4$-Alkylsulfonyl, Di-($C_1$-$C_4$-alkyl)-aminosulfonyl, $C_3$-$C_6$-Cycloalkyl oder Phenyl substituiert ist], für $C_2$-$C_6$-Alkenyl [welches gegebenenfalls durch Fluor, Chlor, Brom, Cyano, $C_1$-$C_4$-Alkoxy-carbonyl, Carboxy oder Phenyl substituiert ist], für $C_2$-$C_6$-Alkinyl [welches gegebenenfalls durch Fluor, Chlor, Brom, Cyano, $C_1$-$C_4$-Alkoxy-carbonyl, Carboxy oder Phenyl substituiert ist], für $C_1$-$C_4$-Alkoxy [welches gegebenenfalls durch Fluor, Chlor, Brom, Cyano, Carboxy, $C_1$-$C_4$-Alkoxyimino-$C_1$-$C_4$-alkyl, $C_1$-$C_4$-Alkoxy-carbonyl, $C_1$-$C_4$-Alkoxy, $C_1$-$C_4$-Alkylthio, $C_1$-$C_4$-Alkylsulfinyl oder $C_1$-$C_4$-Alkylsulfonyl substituiert ist], für $C_1$-$C_4$-Alkylthio [welches gegebenenfalls durch Fluor, Chlor, Brom, Cyano, Carboxy, $C_1$-$C_4$-Alkoxycarbonyl, $C_1$-$C_4$-Alkylthio, $C_1$-$C_4$-Alkylsulfinyl oder $C_1$-$C_4$-Alkylsulfonyl substituiert ist], für $C_3$-$C_6$-Alkenyloxy [welches gegebenenfalls durch Fluor, Chlor, Brom, Cyano oder $C_1$-$C_4$-Alkoxy-carbonyl substituiert ist], für $C_2$-$C_6$-Alkenylthio [welches gegebenenfalls durch Fluor, Chlor, Brom,

Cyano, Nitro, $C_1$-$C_3$-Alkylthio oder $C_1$-$C_4$-Alkoxycarbonyl substituiert ist], $C_3$-$C_6$-Alkinyloxy, $C_3$-$C_6$-Alkinylthio, für den Rest $-S(O)_p-R^9$, wobei

p für die Zahlen 1 oder 2 steht und

$R^9$ für $C_1$-$C_4$-Alkyl [welches gegebenenfalls durch Fluor, Chlor, Brom, Cyano oder $C_1$-$C_4$-Alkoxy-carbonyl substituiert ist], $C_3$-$C_6$-Alkenyl, $C_3$-$C_6$-Alkinyl, $C_1$-$C_4$-Alkoxy, $C_1$-$C_4$-Alkoxyamino, $C_1$-$C_4$-Alkoxy-$C_1$-$C_4$-alkylamino, $C_1$-$C_4$-Alkylamino oder Di-($C_1$-$C_4$-alkyl)-amino steht,

für Phenyl oder Phenoxy, für $C_1$-$C_4$-Alkylcarbonylamino, $C_1$-$C_4$-Alkoxy-carbonylamino, $C_1$-$C_4$-Alkylamino-carbonyl-amino, Di-($C_1$-$C_4$-alkyl)-amino-carbonylamino, für den Rest $-CO-R^{10}$, wobei

$R^{10}$ für $C_1$-$C_6$-Alkyl, $C_1$-$C_6$-Alkoxy, $C_1$-$C_4$-Alkoxyimino-$C_1$-$C_4$-alkoxy, $C_3$-$C_6$-Cycloalkoxy, $C_3$-$C_6$-Alkenyloxy, $C_1$-$C_4$-Alkylthio, $C_1$-$C_4$-Alkylamino, $C_1$-$C_4$-Alkoxyamino, $C_1$-$C_4$-Alkoxy-$C_1$-$C_4$-alkyl-amino oder Di-($C_1$-$C_4$-alkyl)-amino steht [welche gegebenenfalls

durch Fluor und/oder Chlor substituiert sind],

für $C_1$-$C_4$-Alkylsulfonyloxy, Di-($C_1$-$C_4$-alkyl)-aminosulfonylamino oder für den Rest -CH=N-$R^{11}$ , wobei

$R^{11}$ für gegebenenfalls durch Fluor, Chlor, Cyano, Carboxy, $C_1$-$C_4$-Alkoxy, Carbonyl,$C_1$-$C_4$-Alkylthio,$C_1$-$C_4$-Alkylsulfinyl oder $C_1$-$C_4$-Alkylsulfonyl substituiertes $C_1$-$C_6$-Alkyl, für gegebenenfalls durch Fluor oder Chlor substituiertes Benzyl, für gegebenenfalls durch Fluor oder Chlor substituiertes $C_3$-$C_6$-Alkenyl oder $C_3$-$C_6$-Alkinyl, für gegebenenfalls durch Fluor, Chlor, Brom, $C_1$-$C_4$-Alkyl, $C_1$-$C_4$-Alkoxy, Trifluormethyl, Trifluormethoxy oder Trifluormethylthio substituiertes Phenyl, für gegebenenfalls durch Fluor und/ oder Chlor substituiertes $C_1$-$C_6$-Alkoxy, $C_3$-$C_6$-Alkenoxy, $C_3$-$C_6$-Alkinoxy oder Benzyloxy für Amino, $C_1$-$C_4$-Alkylamino, Di-($C_1$-$C_4$-alkyl)amino, Phenylamino, $C_1$-$C_4$-Alkyl-carbonyl-amino, $C_1$-$C_4$-Alkoxy-carbonylamino, $C_1$-$C_4$-Alkyl-sulfonylamino oder für gegebenenfalls durch Fluor, Chlor, Brom oder Methyl substituiertes Phenylsulfonylamino steht,

stehen; worin weiter

$R^3$ für den Rest 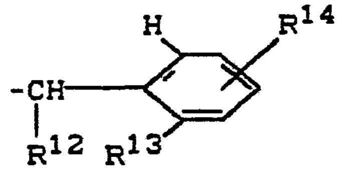 steht, worin

$R^{12}$ für Wasserstoff oder $C_1$-$C_4$-Alkyl steht,

$R^{13}$ und $R^{14}$ gleich oder verschieden sind und für Wasserstoff, Fluor, Chlor, Brom, Nitro, Cyano, $C_1$-$C_4$-Alkyl [welches gegebenenfalls durch Fluor und/oder Chlor substituiert ist], $C_1$-$C_4$-Alkoxy [welches gegebenenfalls durch Fluor und/oder Chlor substituiert ist], Carboxy, $C_1$-$C_4$-Alkoxy-carbonyl, $C_1$-$C_4$-Alkylsulfonyl oder Di-($C_1$-$C_4$-alkyl)-aminosulfonyl stehen; worin weiter

$R^3$ für den Rest 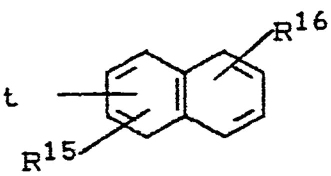 steht, worin

$R^{15}$ und $R^{16}$ gleich oder verschieden sind und für Wasserstoff, Fluor, Chlor, Brom, Nitro, Cyano, $C_1$-$C_4$-Alkyl [welches gegebenenfalls durch Fluor und/oder

Chlor substituiert ist] oder $C_1$-$C_4$-Alkoxy [welches gegebenenfalls durch Fluor und/oder Chlor substituiert ist], stehen; worin weiter

$R^3$ für den Rest 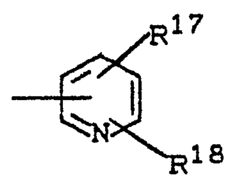 steht, worin

$R^{17}$ und $R^{18}$ gleich oder verschieden sind und für Wasserstoff, Fluor, Chlor, Brom, Nitro, Cyano, $C_1$-$C_4$-Alkyl [welches gegebenenfalls durch Fluor und/oder Chlor substituiert ist], $C_1$-$C_4$-Alkoxy [welches gegebenenfalls durch Fluor und/oder Chlor substituiert ist], für $C_1$-$C_4$-Alkylthio, $C_1$-$C_4$-Alkylsulfinyl oder $C_1$-$C_4$-Alkylsulfonyl [welche gegebenenfalls durch Fluor und/oder Chlor substituiert sind], sowie für Di-($C_1$-$C_4$-alkyl)-aminosulfonyl oder $C_1$-$C_4$-Alkoxy-carbonyl stehen; worin weiter

$R^3$ für den Rest 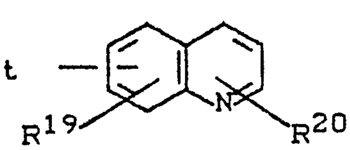 steht, worin

$R^{19}$ und $R^{20}$ gleich oder verschieden sind und für Wasserstoff, Fluor, Chlor, Brom, $C_1$-$C_4$-Alkyl [welches gegebenenfalls durch Fluor und/oder Brom substituiert ist], $C_1$-$C_4$-Alkoxy [welches gegebenenfalls durch Fluor und/oder Chlor substituiert ist], für $C_1$-$C_4$-Alkylthio, $C_1$-$C_4$-Alkylsulfinyl oder $C_1$-$C_4$-Alkylsulfonyl [welche gegebenenfalls durch Fluor und/oder Chlor substituiert sind], oder für Di-($C_1$-$C_4$-alkyl)-aminosulfonyl stehen; worin weiter

$R^3$ für den Rest 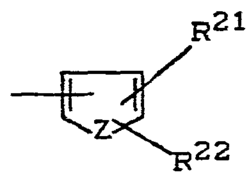 steht, worin

$R^{21}$ und $R^{22}$ gleich oder verschieden sind und für Wasserstoff, Fluor, Chlor, Brom, Cyano, Nitro, $C_1$-$C_4$-Alkyl [welches gegebenenfalls durch Fluor und/oder Chlor substituiert ist], $C_1$-$C_4$-Alkoxy [welches gegebenenfalls durch Fluor und/oder Chlor substituiert ist], $C_1$-$C_4$-Alkylthio, $C_1$-$C_4$-Alkylsulfinyl oder $C_1$-$C_4$-Alkylsulfonyl [welches gegebenenfalls durch Fluor und/oder Chlor substituiert ist], Di-($C_1$-$C_4$-alkyl)-amino-sulfonyl oder $C_1$-$C_4$-Alkoxy-carbonyl stehen, und

Z für Sauerstoff, Schwefel oder die Gruppierung $N-Z^1$ steht, wobei

$Z^1$ für Wasserstoff, $C_1-C_4$-Alkyl [welches gegebenenfalls durch Fluor, Chlor, Brom oder Cyano substituiert ist], $C_3-C_6$-Cycloalkyl, Benzyl, Phenyl [welches gegebenenfalls durch Fluor, Chlor, Brom oder Nitro substituiert ist], $C_1-C_4$-Alkylcarbonyl, $C_1-C_4$-Alkoxy-carbonyl oder Di-$(C_1-C_4$-alkyl)-aminocarbonyl steht; worin weiter

$R^3$ für den Rest 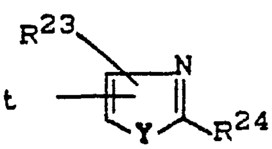 steht, worin

$R^{23}$ für Wasserstoff, $C_1-C_5$-Alkyl oder Halogen steht,

$R^{24}$ für Wasserstoff oder $C_1-C_5$-Alkyl steht und

Y für Schwefel oder die Gruppierung $N-R^{25}$ steht, wobei

$R^{25}$ für Wasserstoff oder $C_1$-$C_5$-Alkyl steht; worin weiter

$R^4$ für den Rest 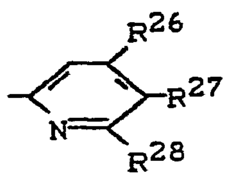 steht, worin

$R^{26}$ und $R^{28}$ gleich oder verschieden sind und für Wasserstoff, Fluor, Chlor, Brom, $C_1$-$C_4$-Alkyl [welches gegebenenfalls durch Fluor und/oder Chlor substituiert ist] oder $C_1$-$C_4$-Alkoxy [welches gegebenenfalls durch Fluor und/oder Chlor substituiert ist] stehen mit der Maßgabe, daß wenigstens einer der Reste $R^{26}$ und $R^{28}$ von Wasserstoff verschieden ist, und

$R^{27}$ für Wasserstoff, Fluor, Chlor, Brom, Cyano oder $C_1$-$C_4$-Alkyl [welches gegebenenfalls durch Fluor und/oder Chlor substituiert ist] steht; worin weiter

$R^4$ für den Rest 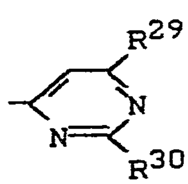 steht, worin

$R^{29}$ und $R^{30}$ gleich oder verschieden sind und für Wasserstoff, Fluor, Chlor, Brom, $C_1$-$C_4$-Alkyl [welches gegebenenfalls durch Fluor und/oder Chlor substituiert ist], $C_1$-$C_4$-Alkoxy [welches gegebenenfalls durch Fluor und/oder Chlor substituiert ist], $C_1$-$C_4$-Alkylamino oder Di-($C_1$-$C_4$-alkyl)-amino stehen mit der Maßgabe, daß wenigstens einer der Reste $R^{29}$ und $R^{30}$ von Wasserstoff verschieden ist; worin weiter

$R^4$ für den Rest 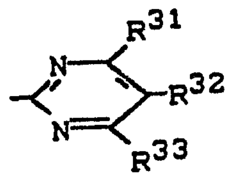 steht, worin

$R^{31}$ für Wasserstoff, Fluor, Chlor, Brom, Hydroxy, $C_1$-$C_4$-Alkyl [welches gegebenenfalls durch Fluor und/oder Chlor substituiert ist] oder $C_1$-$C_4$-Alkoxy [welches gegebenenfalls durch Fluor und/oder Chlor substituiert ist] steht,

$R^{32}$ für Wasserstoff, Fluor, Chlor, Brom, $C_1$-$C_4$-Alkyl [welches gegebenenfalls durch Fluor und/oder Chlor substituiert ist], Cyano, Formyl, $C_1$-$C_4$-Alkyl-carbonyl oder $C_1$-$C_4$-Alkoxy-carbonyl steht und

$R^{33}$ für Wasserstoff, Fluor, Chlor, Brom, Hydroxy, $C_1$-$C_4$-Alkyl [welches gegebenenfalls durch Fluor und/oder Chlor substituiert ist], $C_1$-$C_4$-Alkoxy [welches gegebenenfalls durch Fluor und/oder Chlor substituiert ist], Amino, $C_1$-$C_4$-Alkyl-amino oder Di-($C_1$-$C_4$-alkyl)-amino steht, oder

$R^{32}$ und $R^{33}$ gemeinsam für $C_3$-$C_4$-Alkandiyl stehen; worin weiter

$R^4$ für den Rest 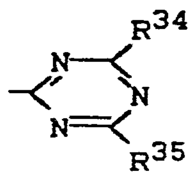 steht, worin

$R^{34}$ und $R^{35}$ gleich oder verschieden sind und für Fluor, Chlor, Brom, Hydroxy, $C_1$-$C_4$-Alkyl [welches gegebenenfalls durch Fluor und/oder Chlor substituiert ist], $C_3$-$C_5$-Cycloalkyl, $C_1$-$C_4$-Alkoxy [welches gegebenenfalls durch Fluor und/oder Chlor substituiert ist], $C_1$-$C_4$-Alkylthio oder für $C_1$-$C_4$-Alkyl-amino bzw. Di-($C_1$-$C_4$-alkyl)-amino stehen; worin weiter

$R^4$ für den Rest 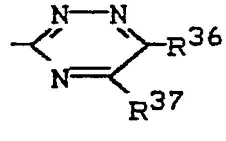 steht, worin

$R^{36}$ und $R^{37}$ gleich oder verschieden sind und für Wasserstoff, Methyl oder Methoxy stehen; worin weiter

X für Sauerstoff oder Schwefel steht.

Besonders bevorzugt verwendbar sind herbizide Sulfonylharnstoff-Derivate der Formel (II), in welchen

(A) $R^3$ für den Rest 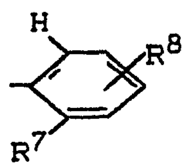 steht worin

$R^7$ für Fluor, Chlor, Brom, Methyl, Trifluormethyl, Methoxy, Difluormethoxy, Trifluormethoxy, $C_1$-$C_3$-Alkylthio, Difluormethylthio, Trifluormethylthio, $C_1$-$C_3$-Alkylsulfinyl, $C_1$-$C_3$-Alkylsulfonyl, Dimethylaminosulfonyl, Diethylaminosulfonyl, N-Methoxy-imino-$C_1$-$C_3$-alkyl, N-Methoxy-imino-$C_1$-$C_3$-alkoxycarbonyl, N-Methoxy-N-methylaminosulfonyl, Phenyl, Phenoxy, $C_1$-$C_3$-Alkoxy-carbonyl oder $C_1$-$C_3$-Alkyl-aminocarbonyl steht und

$R^8$ für Wasserstoff oder Chlor steht; worin weiter

$R^4$ für den Rest 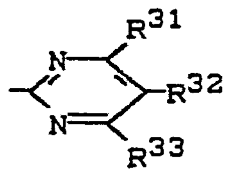 steht, worin

$R^{31}$ für Wasserstoff, Fluor, Chlor, Brom, Hydroxy, $C_1$-$C_3$-Alkyl, $C_1$-$C_3$-Alkoxy oder Difluormethoxy steht,

$R^{32}$ für Wasserstoff, Chlor, Brom oder Methyl steht und

$R^{33}$ für $C_1$-$C_3$-Alkyl, Hydroxy, Fluor, Chlor, Brom oder $C_1$-$C_3$-Alkoxy steht; worin weiter

X für Sauerstoff oder Schwefel steht; worin weiter

(B) $R^3$ und X die oben unter (A) angegebene Bedeutung haben und

$R^4$ für den Rest 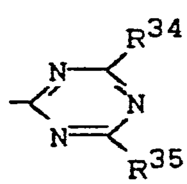 steht, worin

$R^{34}$ für Fluor, Chlor, Cyclopropyl, $C_1$-$C_2$-Alkyl, $C_1$-$C_2$-Alkoxy oder $C_1$-$C_2$-Alkylthio steht und

$R^{35}$ für Fluor, Chlor, Cyclopropyl, $C_1$-$C_2$-Alkyl, $C_1$-$C_2$-Alkoxy, $C_1$-$C_2$-Alkylamino, Di-($C_1$-$C_2$-alkyl)-amino oder $C_1$-$C_2$-Alkylthio steht.

Im einzelnen seien die folgenden Verbindungen der allgemeinen Formel (II) genannt:

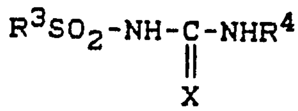
(II)

<u>Tabelle 2:</u> Verbindungen der Formel (IIa)

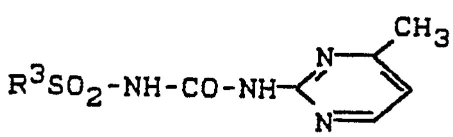
(IIa)

| $R^3$ | $R^3$ |
|---|---|
| 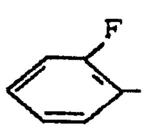 | 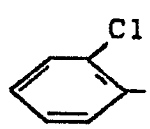 |
| 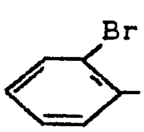 | 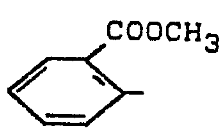 |

<u>Tabelle 2</u> - Fortsetzung

| $R^3$ | $R^3$ |
|---|---|
| 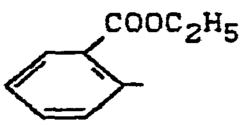 | 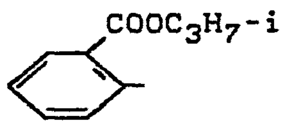 |
| 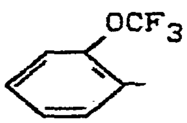 | 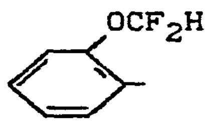 |
| 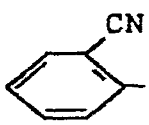 | 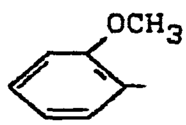 |
| 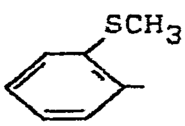 | 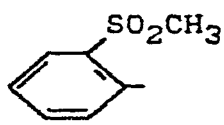 |
| 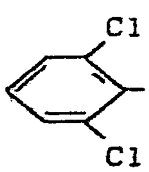 | 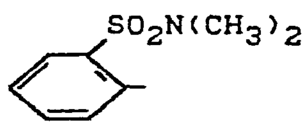 |
| 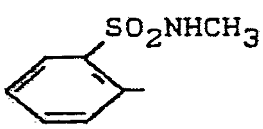 | 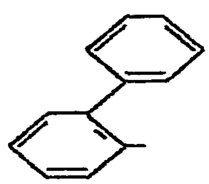 |
| 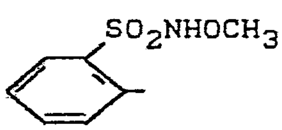 | 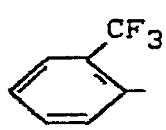 |

Tabelle 2 - Fortsetzung

| $R^3$ | $R^3$ |
|---|---|
| 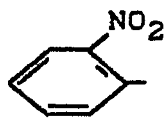 | 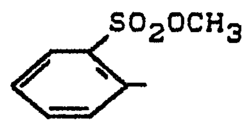 |
| 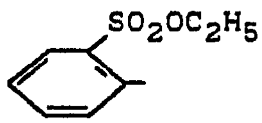 | 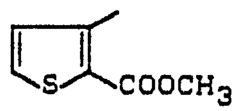 |
| 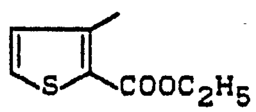 | 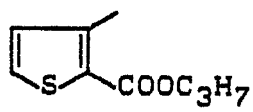 |
| 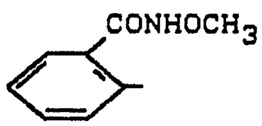 | 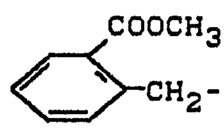 |
| 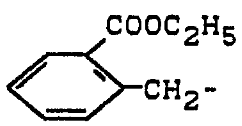 | 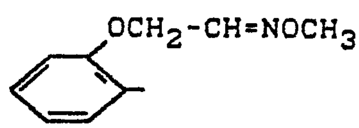 |
| 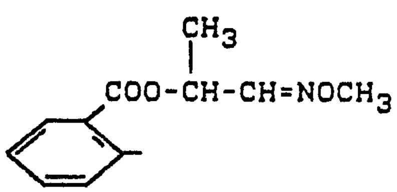 | |

Tabelle 3: Verbindungen der Formel (IIb)

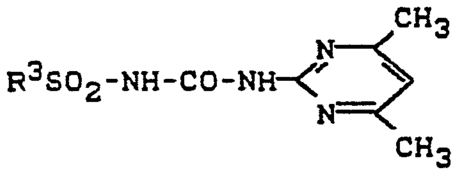 (IIb)

| $R^3$ | $R^3$ |
|---|---|
| 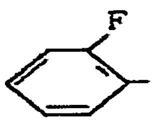 | 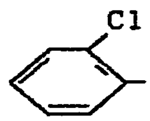 |
| 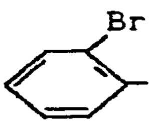 | 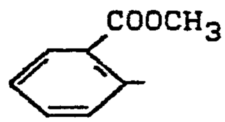 |
| 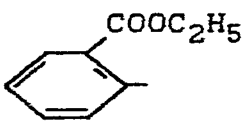 | 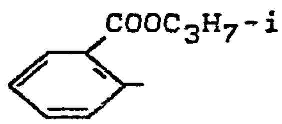 |
| 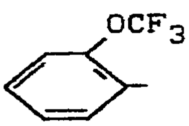 | 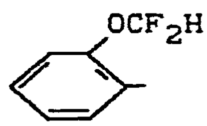 |
| 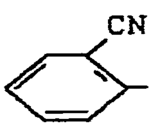 | 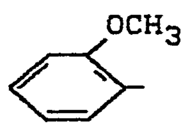 |
| 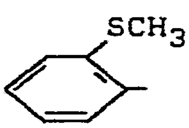 | 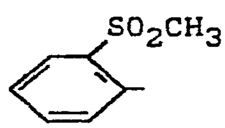 |
| 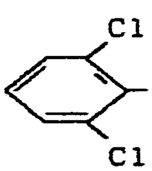 | 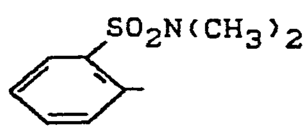 |

Tabelle 3 - Fortsetzung

| $R^3$ | $R^3$ |
|---|---|
| 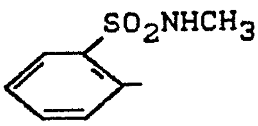 | 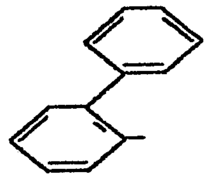 |
| 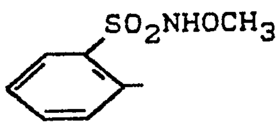 | 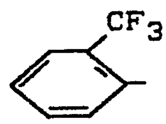 |
| 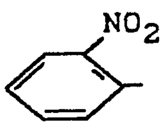 | 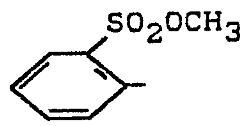 |
| 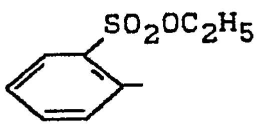 | 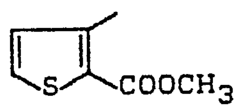 |
| 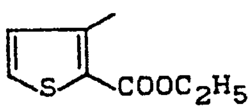 | 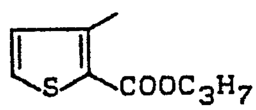 |
| 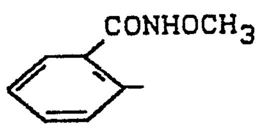 | 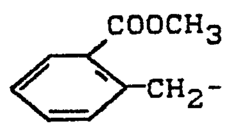 |
| 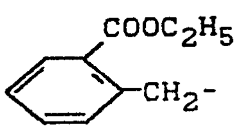 | 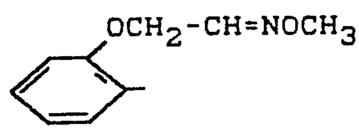 |
| 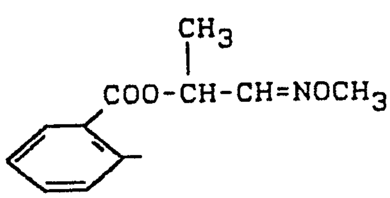 | |

Tabelle 4: Verbindungen der Formel (IIc)

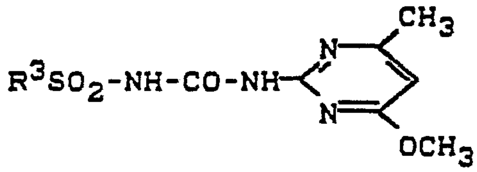 (IIc)

| $R^3$ | $R^3$ |
|---|---|
| 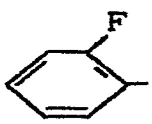 | 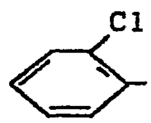 |
| 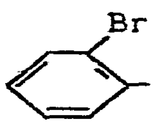 | 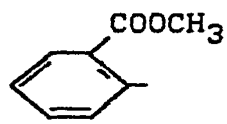 |
| 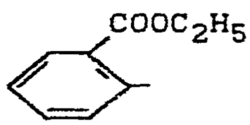 | 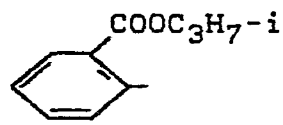 |
| 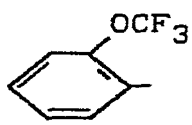 | 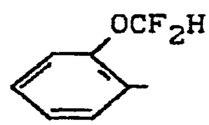 |
| 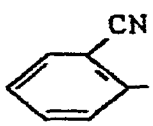 | 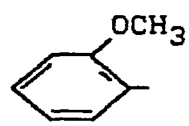 |
| 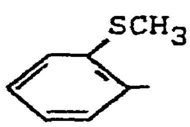 | 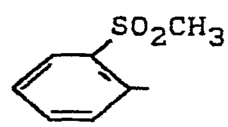 |
| 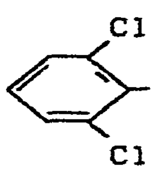 | 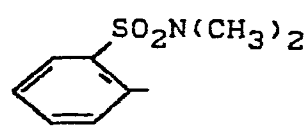 |

Tabelle 4 - Fortsetzung

| $R^3$ | $R^3$ |
|---|---|
| 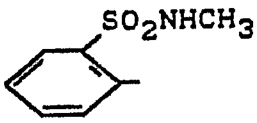 | 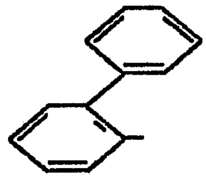 |
| 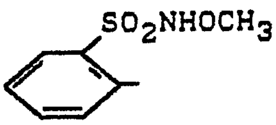 | 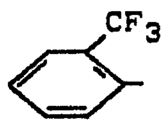 |
| 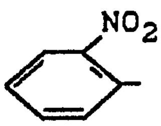 | 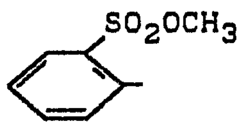 |
| 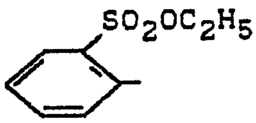 | 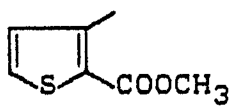 |
| 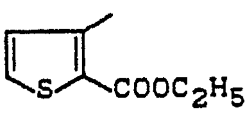 | 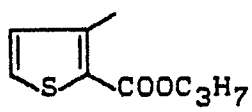 |
| 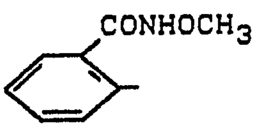 | 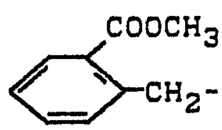 |
| 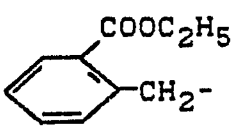 | 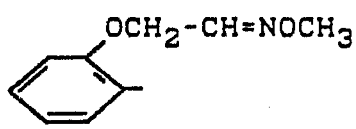 |
| 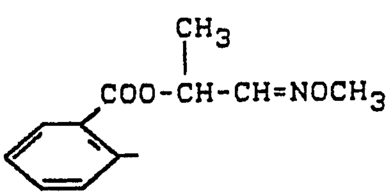 | |

Tabelle 5: Verbindungen der Formel (IId)

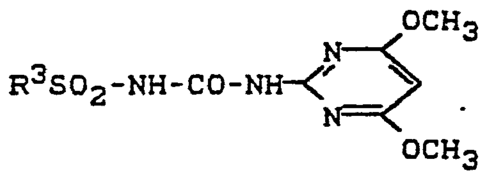 (IId)

| $R^3$ | $R^3$ |
|---|---|
| 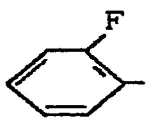 | 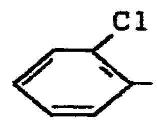 |
| 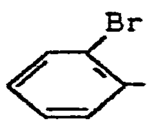 | 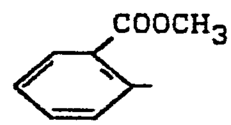 |
| 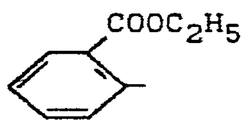 | 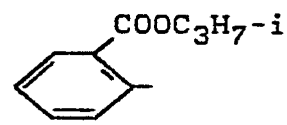 |
| 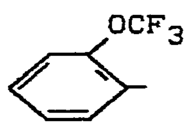 | 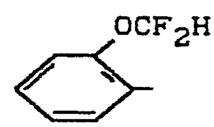 |
| 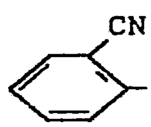 | 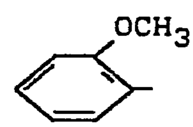 |
| 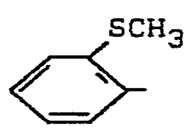 | 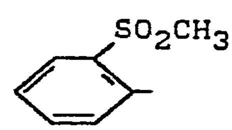 |
| 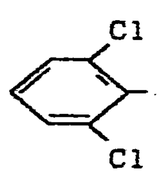 | 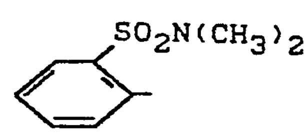 |

<u>Tabelle 5</u> - Fortsetzung

| $R^3$ | $R^3$ |
| --- | --- |
| 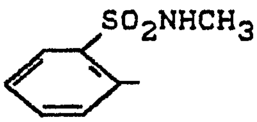 | 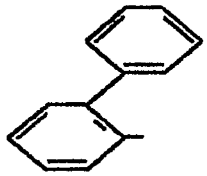 |
| 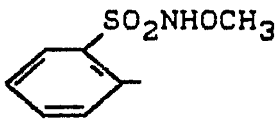 | 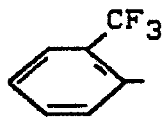 |
| 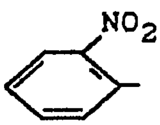 | 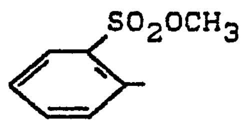 |
| 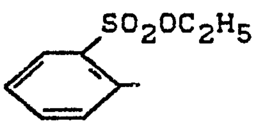 | 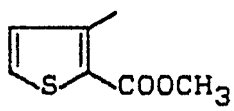 |
| 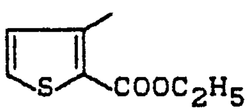 | 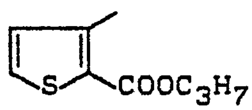 |
| 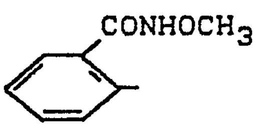 | 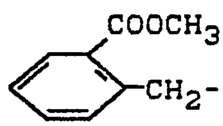 |
| 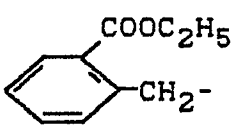 | 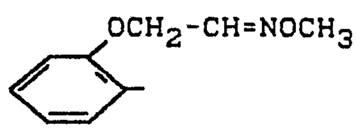 |
| 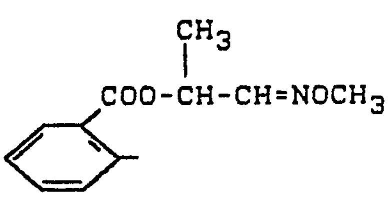 | |

Tabelle 6: Verbindungen der Formel (IIe)

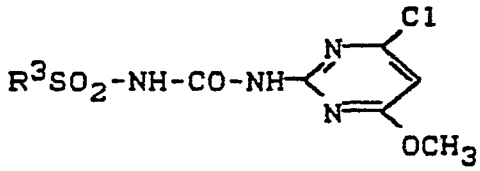 (IIe)

| $R^3$ | $R^3$ |
|---|---|
| 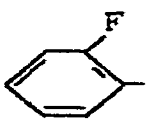 | 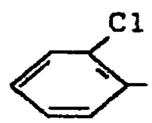 |
| 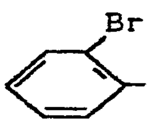 | 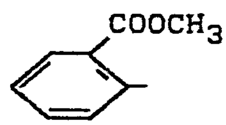 |
| 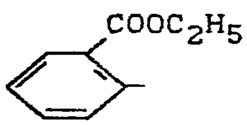 | 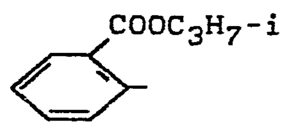 |
| 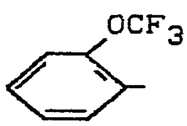 | 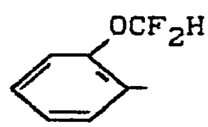 |
| 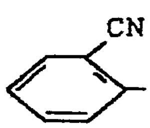 | 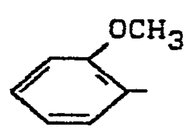 |
| 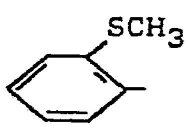 | 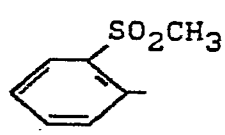 |
| 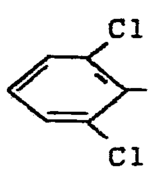 | 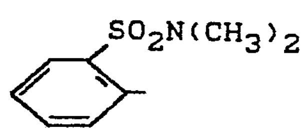 |

Tabelle 6 - Fortsetzung

| $R^3$ | $R^3$ |
|---|---|
| 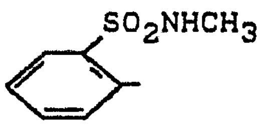 | 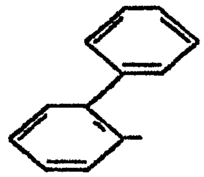 |
| 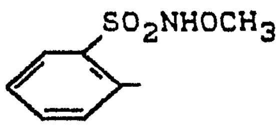 | 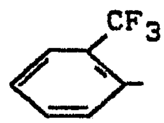 |
| 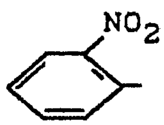 | 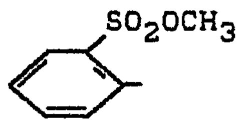 |
| 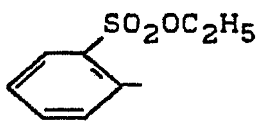 | 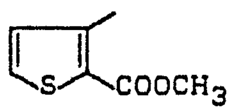 |
| 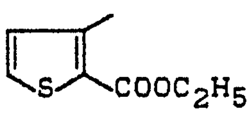 | 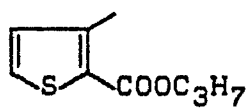 |
| 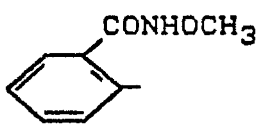 | 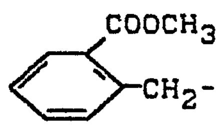 |
| 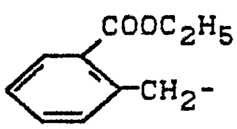 | 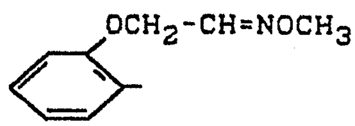 |
| 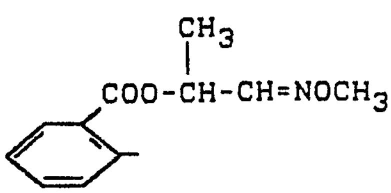 | |

Tabelle 7: Verbindungen der Formel (IIf)

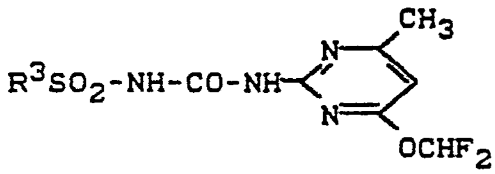

(IIf)

| $R^3$ | $R^3$ |
|---|---|
| 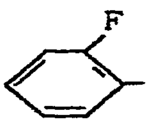 | 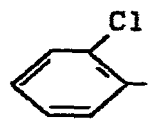 |
| 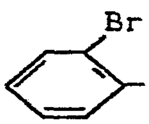 | 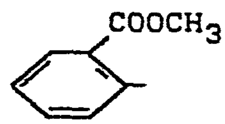 |
| 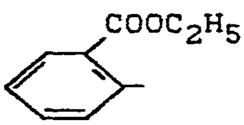 | 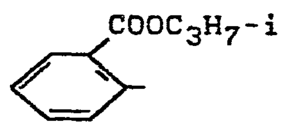 |
| 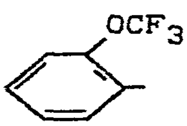 | 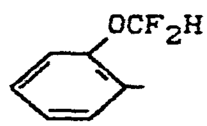 |
| 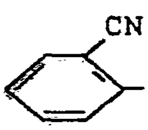 | 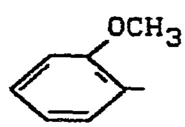 |
| 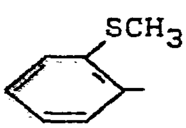 | 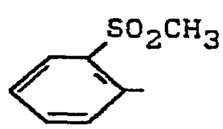 |
| 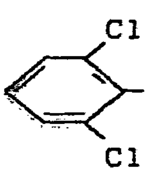 | 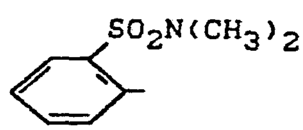 |

Tabelle 7 - Fortsetzung

| $R^3$ | $R^3$ |
| --- | --- |
| 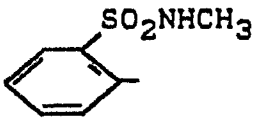 | 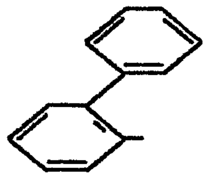 |
| 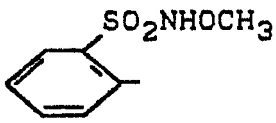 | 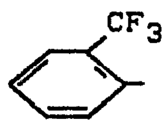 |
| 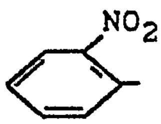 | 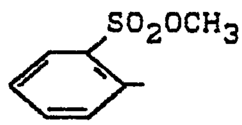 |
| 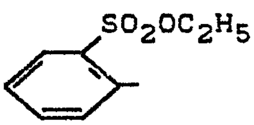 | 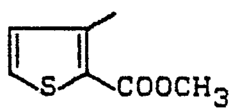 |
| 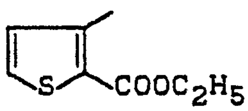 | 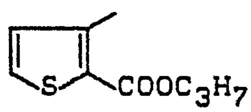 |
| 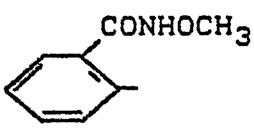 | 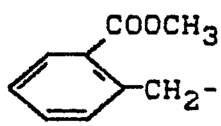 |
| 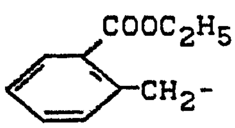 | 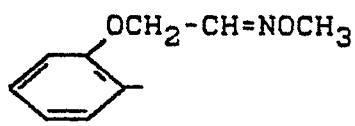 |
| 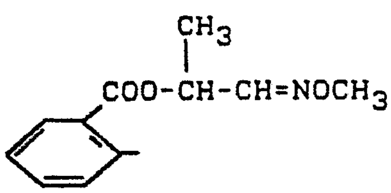 | |

Tabelle 8: Verbindungen der Formel (IIg)

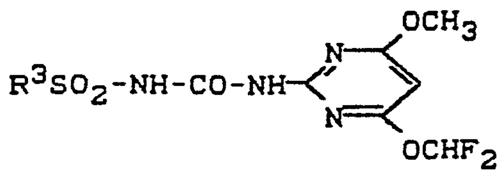 (IIg)

| $R^3$ | $R^3$ |
|---|---|
| 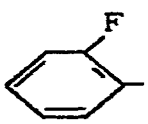 | 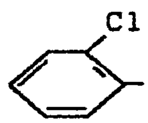 |
| 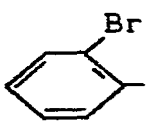 | 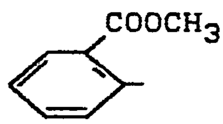 |
| 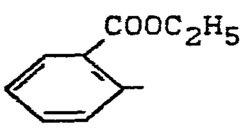 | 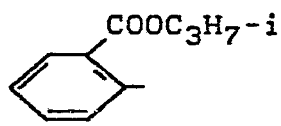 |
| 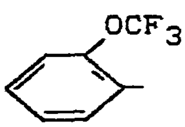 | 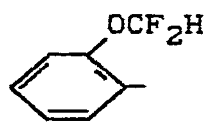 |
| 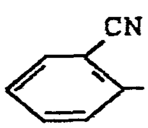 | 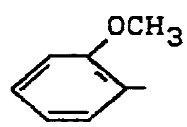 |
| 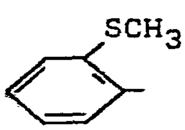 | 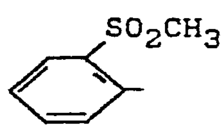 |
| 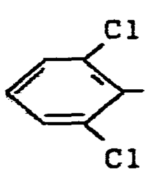 | 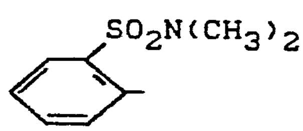 |

Tabelle 8 - Fortsetzung

| $R^3$ | $R^3$ |
|---|---|
| 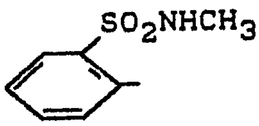 | 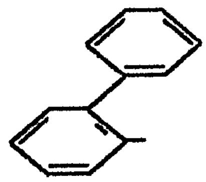 |
| 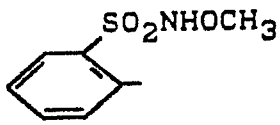 | 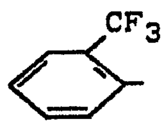 |
| 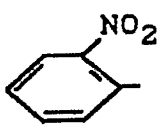 | 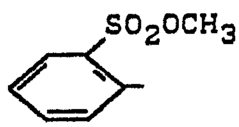 |
| 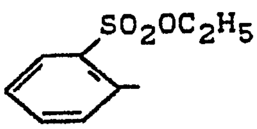 | 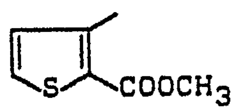 |
| 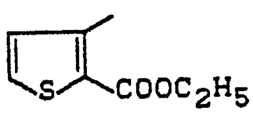 | 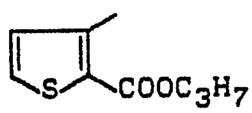 |
| 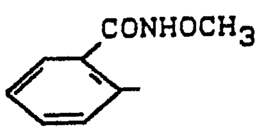 | 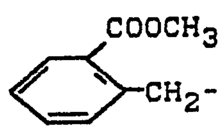 |
| 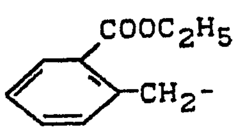 | 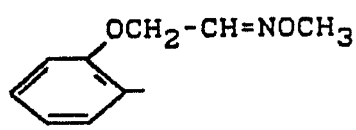 |
| 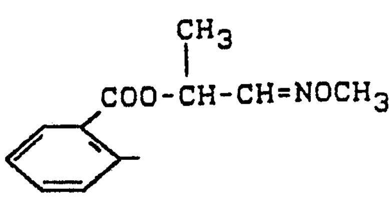 | |

Tabelle 9: Verbindungen der Formel (IIh)

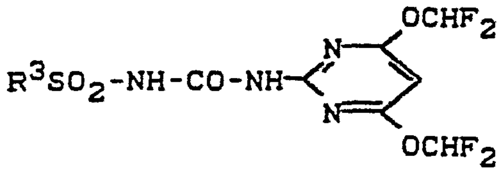

(IIh)

| $R^3$ | $R^3$ |
|---|---|
| 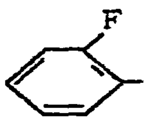 | 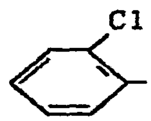 |
| 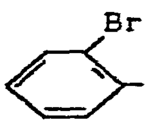 | 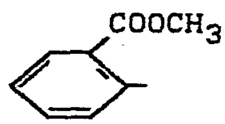 |
| 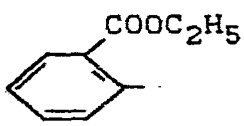 | 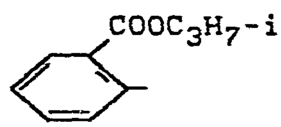 |
| 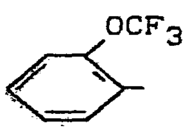 | 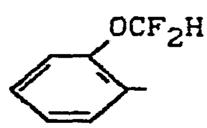 |
| 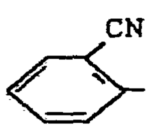 | 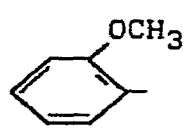 |
| 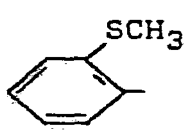 | 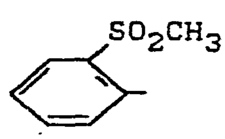 |
| 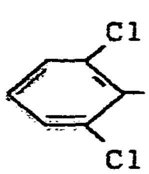 | 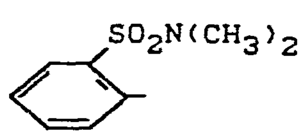 |

Tabelle 9 - Fortsetzung

| $R^3$ | $R^3$ |
|---|---|
| 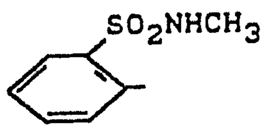 | 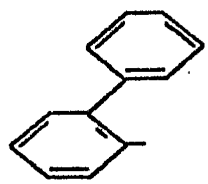 |
| 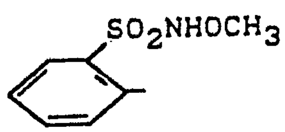 | 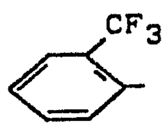 |
| 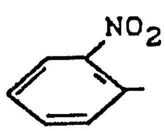 | 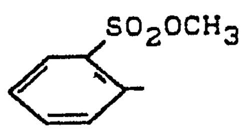 |
| 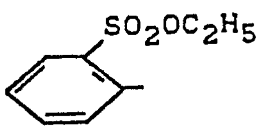 | 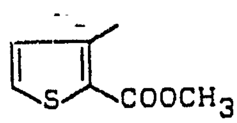 |
| 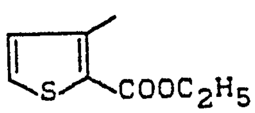 | 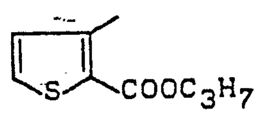 |
| 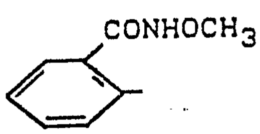 | 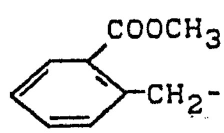 |
| 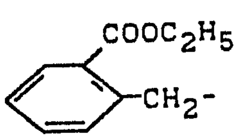 | 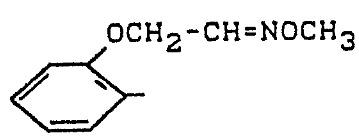 |
| 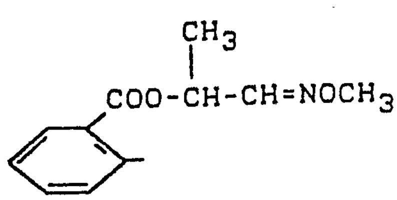 | |

Tabelle 10: Verbindungen der Formel (IIi)

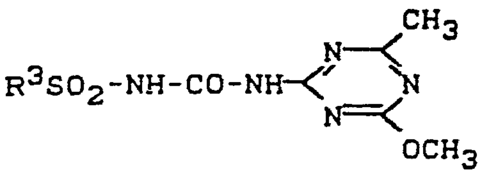 (IIi)

| $R^3$ | $R^3$ |
|---|---|
| 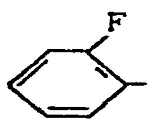 | 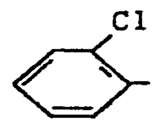 (Chlorsulfuron) |
| 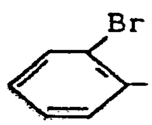 | 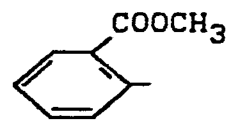 |
| 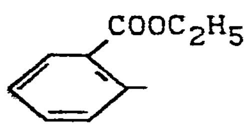 | 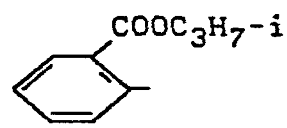 |
| 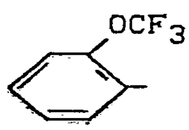 | 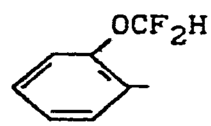 |
| 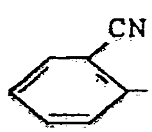 | 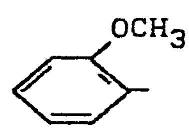 |
| 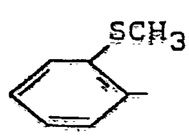 | 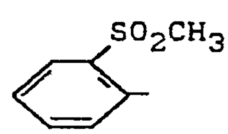 |
| 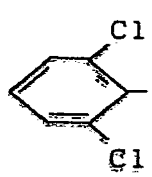 | 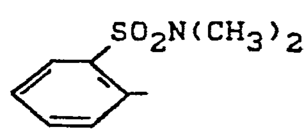 |

Tabelle 10 - Fortsetzung

| $R^3$ | $R^3$ |
|---|---|
| 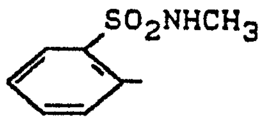 | 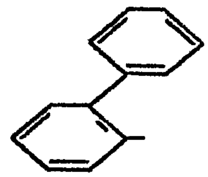 |
| 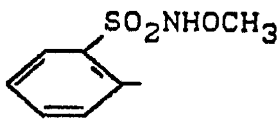 (IIi-16) | 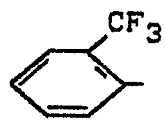 |
| 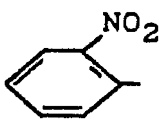 | 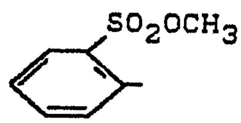 |
| 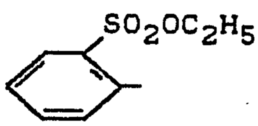 | 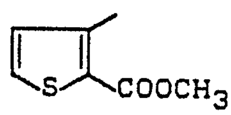 |
| 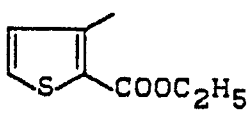 | 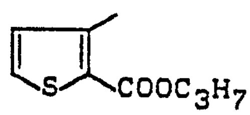 |
| 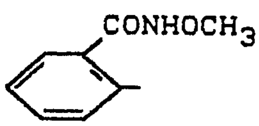 | 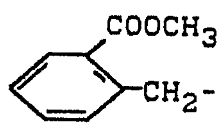 |
| 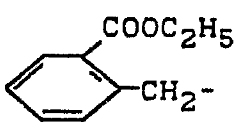 | 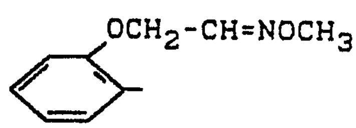 |
| 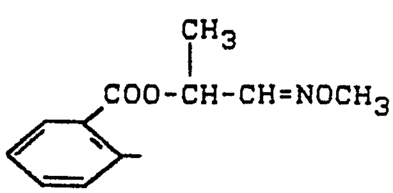 | |

<u>Tabelle 11:</u> Verbindungen der Formel (IIk)

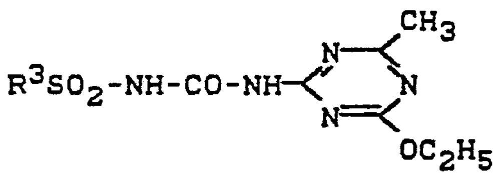 (IIk)

| $R^3$ | $R^3$ |
|---|---|
| 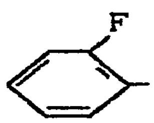 | 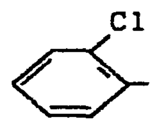 |
| 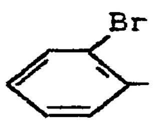 | 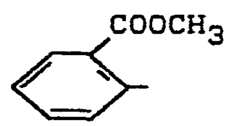 |
| 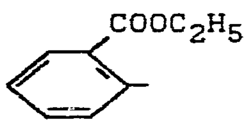 | 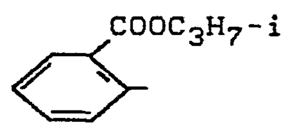 |
| 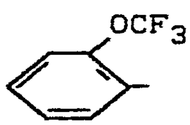 | 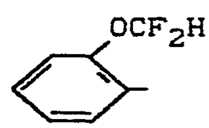 |
| 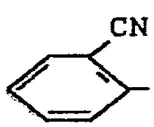 | 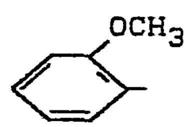 |
| 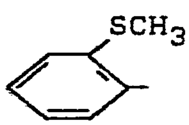 | 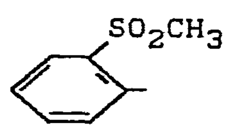 |
| 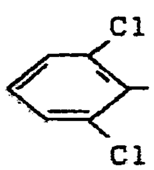 | 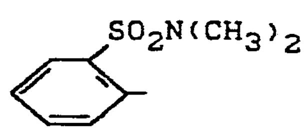 |

Tabelle 11 - Fortsetzung

| $R^3$ | $R^3$ |
|---|---|
| 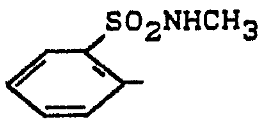 | 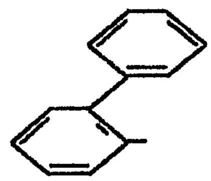 |
| 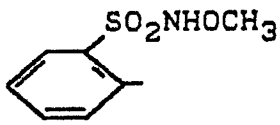 | 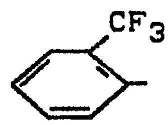 |
| 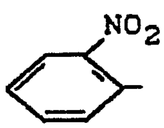 | 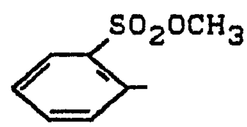 |
| 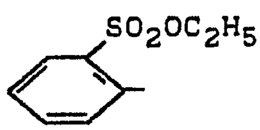 | 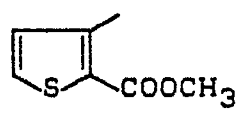 |
| 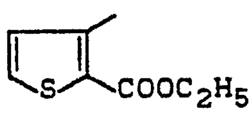 | 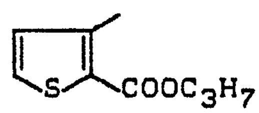 |
| 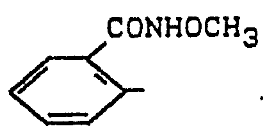 | 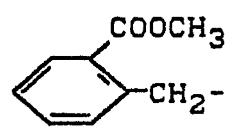 |
| 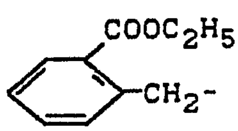 | 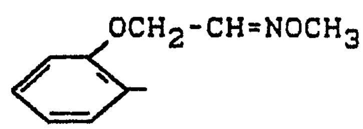 |
| 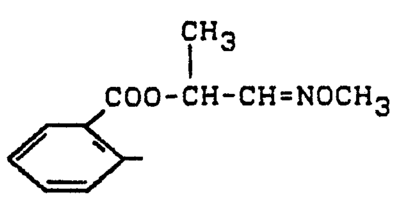 | |

Tabelle 12: Verbindungen der Formel (III)

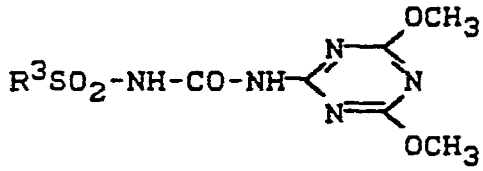 (III)

| $R^3$ | $R^3$ |
|---|---|
| 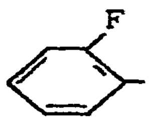 | 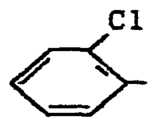 |
| 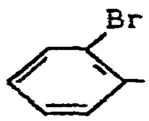 | 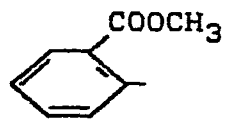 |
| 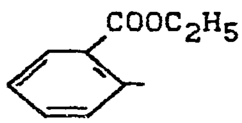 | 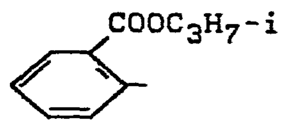 |
| 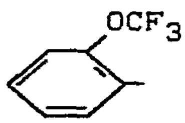 | 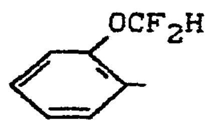 |
| 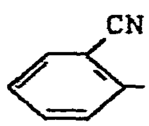 | 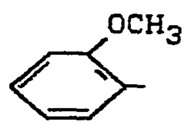 |
| 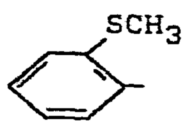 | 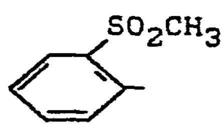 |
| 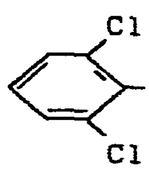 | 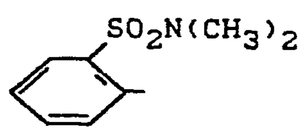 |

Tabelle 12 - Fortsetzung

| $R^3$ | $R^3$ |
|---|---|
| 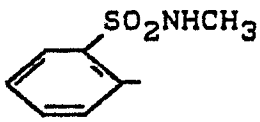 | 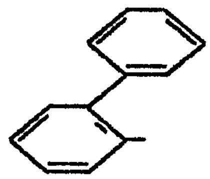 |
| 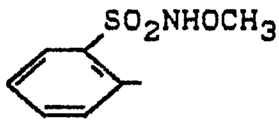 | 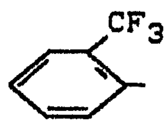 |
| 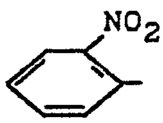 | 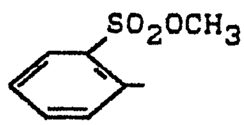 |
| 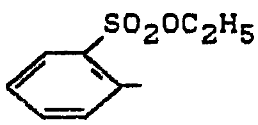 | 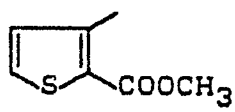 |
| 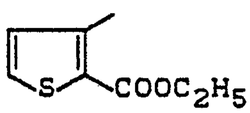 | 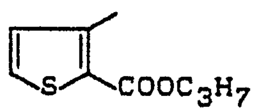 |
| 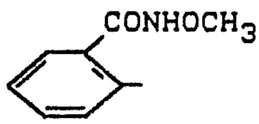 | 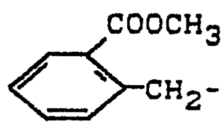 |
| 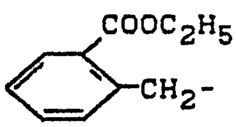 | 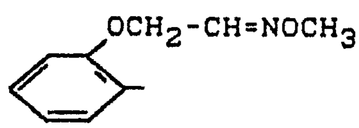 |
| 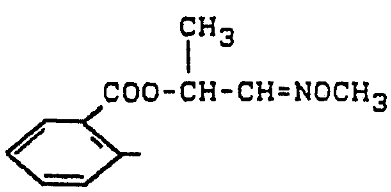 | |

Tabelle 13: Verbindungen der Formel (IIm)

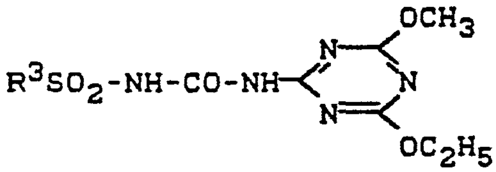 (IIm)

| $R^3$ | $R^3$ |
|---|---|
| 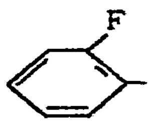 | 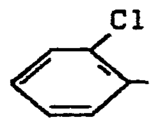 |
| 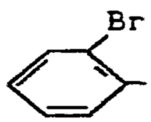 | 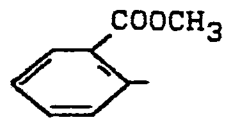 |
| 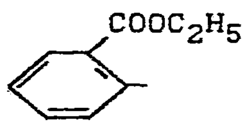 | 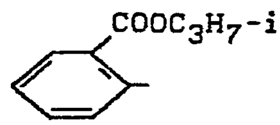 |
| 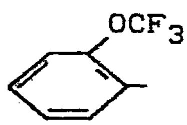 | 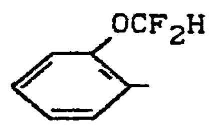 |
| 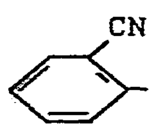 | 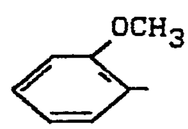 |
| 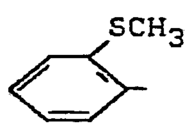 | 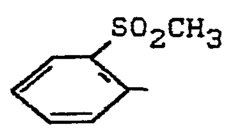 |
| 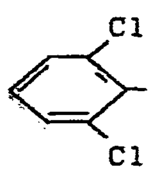 | 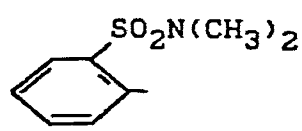 |

<u>Tabelle 13</u> - Fortsetzung

| $R^3$ | $R^3$ |
|---|---|
| 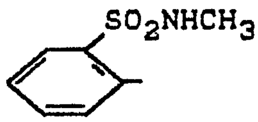 | 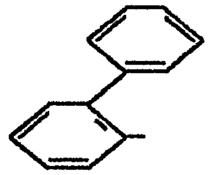 |
| 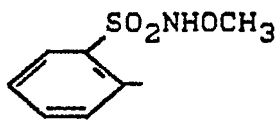 | 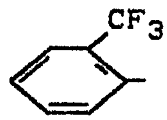 |
| 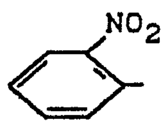 | 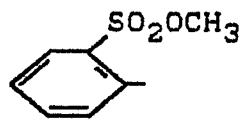 |
| 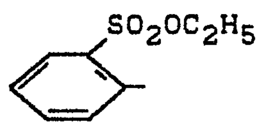 | 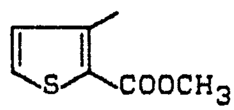 |
| 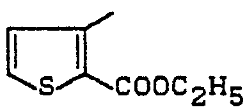 | 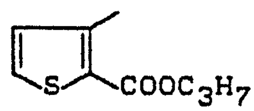 |
| 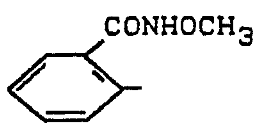 | 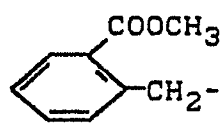 |
| 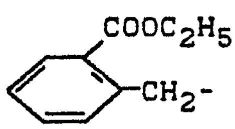 | 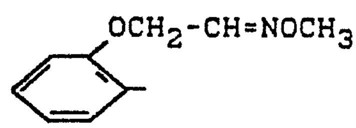 |
| 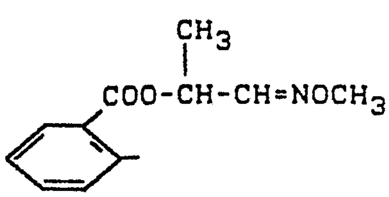 | |

Tabelle 14: Verbindungen der Formel (IIn)

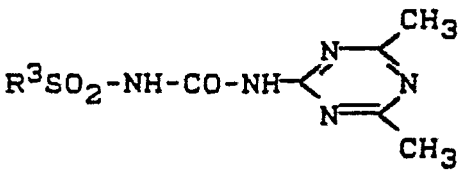 (IIn)

| $R^3$ | $R^3$ |
|---|---|
| 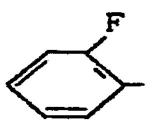 | 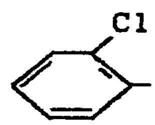 |
| 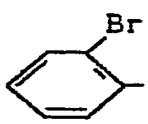 | 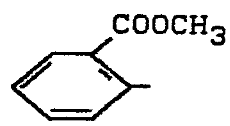 |
| 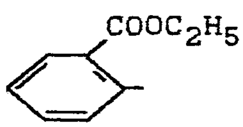 | 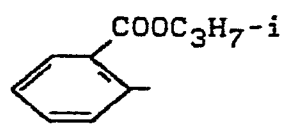 |
| 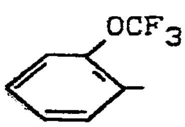 | 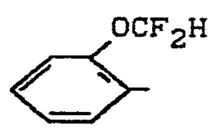 |
| 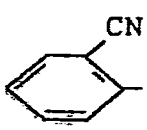 | 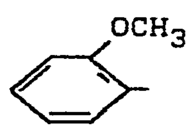 |
| 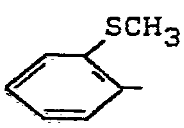 | 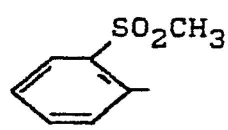 |
| 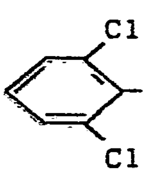 | 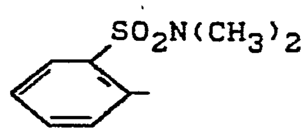 |

Tabelle 14 - Fortsetzung

| $R^3$ | $R^3$ |
|---|---|
| 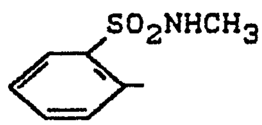 | 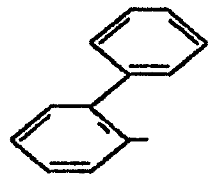 |
| 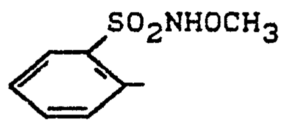 | 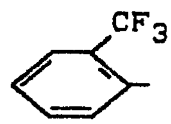 |
| 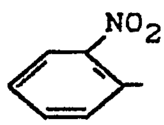 | 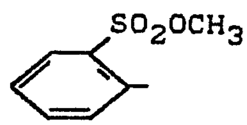 |
| 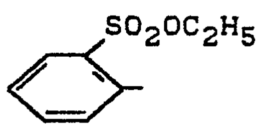 | 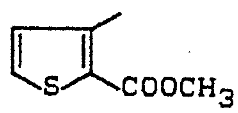 |
| 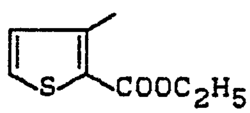 | 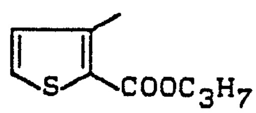 |
| 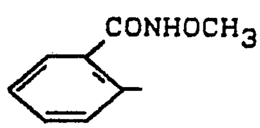 | 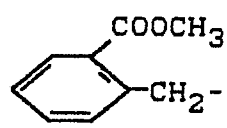 |
| 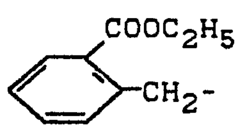 | 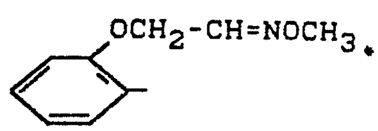 |
| 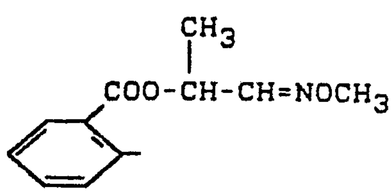 | |

Tabelle 15: Verbindungen der Formel (IIp)

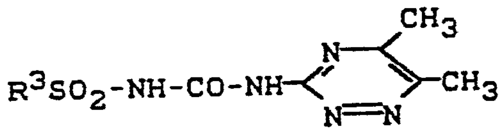 (IIp)

| $R^3$ | $R^3$ |
|---|---|
| 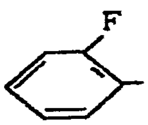 | 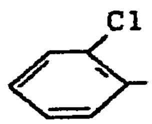 |
| 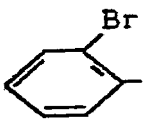 | 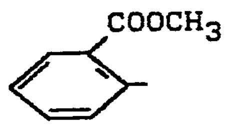 |
| 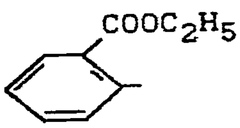 | 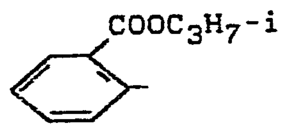 |
| 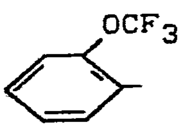 | 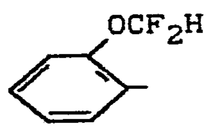 |
| 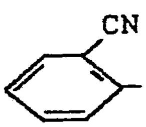 | 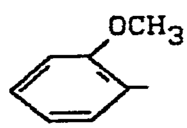 |
| 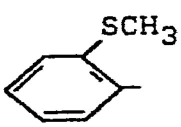 | 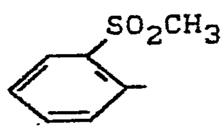 |
| 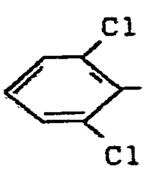 | 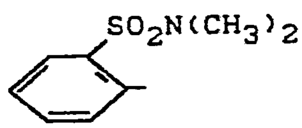 |

Tabelle 15 - Fortsetzung

| $R^3$ | $R^3$ |
|---|---|
| 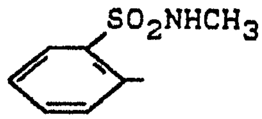 | 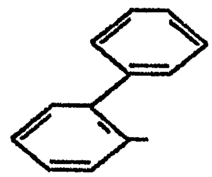 |
| 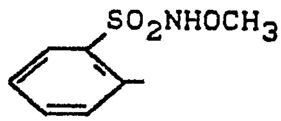 | 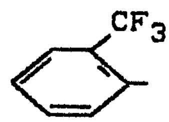 |
| 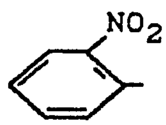 | 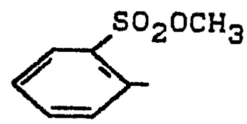 |
| 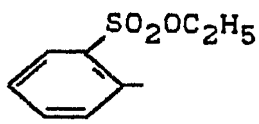 | 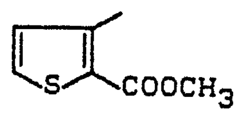 |
| 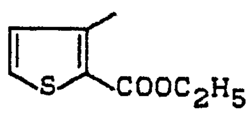 | 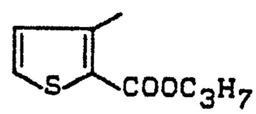 |
| 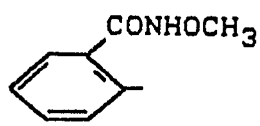 | 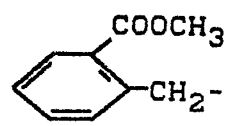 |
| 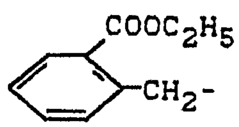 | 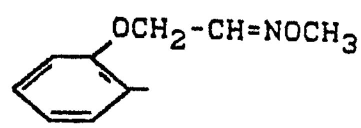 |
| 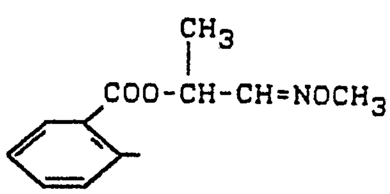 | |

Tabelle 16: Verbindungen der Formel (IIq)

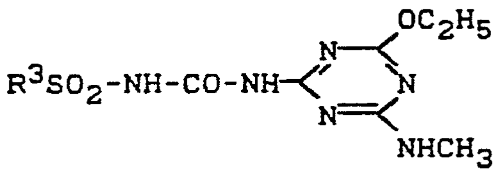

(IIp)

| $R^3$ | $R^3$ |
|---|---|
| 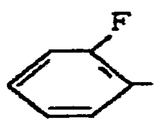 | 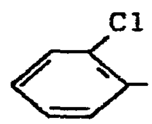 |
| 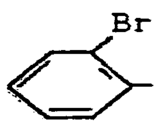 | 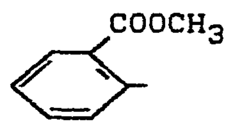 |
| 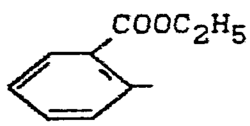 | 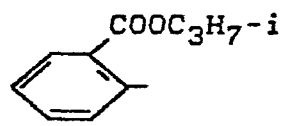 |
| 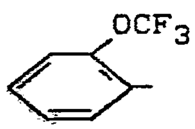 | 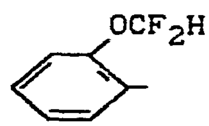 |
| 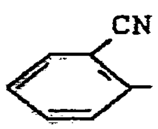 | 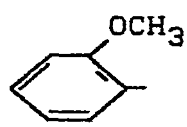 |
| 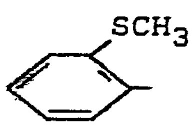 | 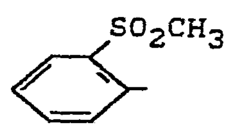 |
| 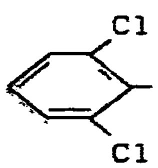 | 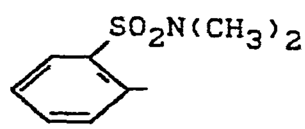 |

Tabelle 16 - Fortsetzung

| $R^3$ | $R^3$ |
|---|---|
| 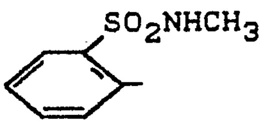 | 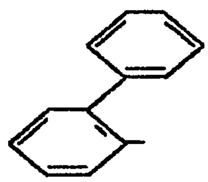 |
| 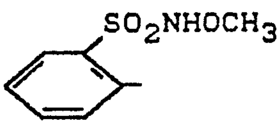 | 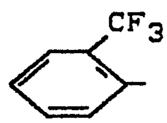 |
| 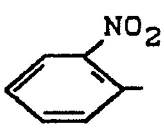 | 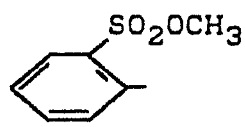 |
| 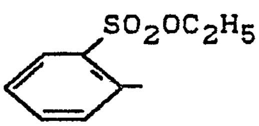 | 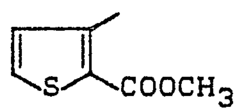 |
| 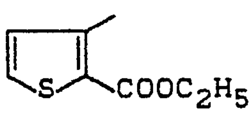 | 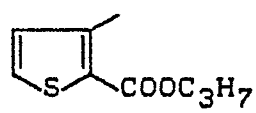 |
| 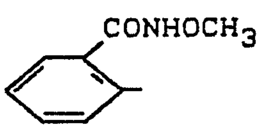 | 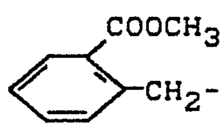 |
| 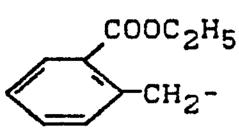 | 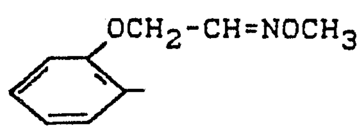 |
| 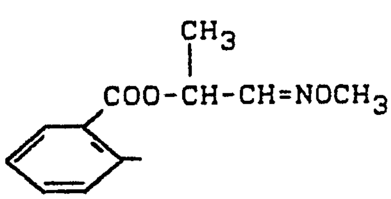 | |

Die erfindungsgemäß verwendbaren Sulfonylharnstoff-Derivate der Formel (II) sind bekannt und/oder können nach an sich bekannten Methoden hergestellt werden (vergl. z. B. US-PS 4 190 432, US-PS 4 231 784, EP-OS 1 485, EP-OS 1 514, EP-OS 1 515, EP-OS 7 687, EP-OS 9 419, EP-OS 10 560, EP-OS 13 480, EP-OS 15 683, EP-OS 17 473, US-PS 4 302 241, EP-OS 23 140, EP-OS 23 141, EP-OS 23 422, US-PS 4 293 330, EP-OS 30 138, EP-OS 30 139, EP-OS 30 141, EP-OS 30 142, EP-OS 30 433, EP-OS 35 893, EP-OS 39 239, EP-OS 41 404, EP-OS 44 209, EP-OS 44 210, EP-OS 44 211, EP-OS 44 212, EP-OS 44 213, EP-OS 44 807, EP-OS 44 808, EP-OS 44 809, EP-OS 48 143, EP-OS 51 466, EP-OS 56 969, EP-OS 64 804, EP-OS 70 802, EP-OS 72 347, EP-OS 73 627, EP-OS 74 282, EP-OS 82 108, EP-OS 84 020, EP-OS 85 028, EP-OS 87 780, EP-OS 94 790, EP-OS 95 925, EP-OS 96 003, EP-OS 96 004, EP-OS 97 122, EP-OS 101 308, EP-OS 101 407, EP-OS 101 670, EP-OS 102 925, EP-OS 106 512, EP-OS 116 518, EP-OS 120 814, EP-OS 121 651, EP-OS 125 205, EP-OS 135 332, EP-OS 136 061, JP-PS 56 144 590, JP-PS 58 126 872, JP-PS 59 21 839 und DE-OS 2 715 786); weitere Sulfonylharnstoff-Derivate der Formel (II) sind Gegenstand von verschiedenen nicht zum vorveröffentlichten Stand der Technik gehörenden Patentanmeldungen der Anmelderin (vergl. z. B. DE-OS 3 413 490, DE-OS 3 413 565, DE-OS 3 420 769, DE-OS 3 431 917, DE-OS 3 431 919, DE-OS 3 431 927 und DE-OS 3 431 929).

Die erfindungsgemäß als Gegenmittel verwendbaren Amide der Formel (I) eignen sich insbesondere zur Verbesserung der Verträglichkeit von herbizid wirksamen Sulfonylharnstoff-Derivaten der Formel (II) bei wichtigen Kulturpflanzen wie Mais, Sojabohnen, Baumwolle, Zuckerrüben, Getreide, Reis und Zuckerrohr.

Die erfindungsgemäßen Wirkstoffkombinationen zeigen eine sehr gute Wirkung gegen Unkräuter und Ungräser in zahlreichen Nutzpflanzenkulturen. Sie können daher zur selektiven Unkrautbekämpfung in zahlreichen Nutzpflanzenkulturen verwendet werden. Unter Unkräutern im weitesten Sinne sind hierbei alle Pflanzen zu verstehen, die an Orten wachsen, wo sie unerwünscht sind.

Die erfindungsgemäßen Wirkstoffkombinationen können beispielsweise bei den folgenden Pflanzen angewendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattung beschränkt, sondern erstreckt sich in gleicher Weise auch auf andere Pflanzen.

Insbesondere eignen sich die erfindungsgemäßen Wirkstoffkombinationen zur selektiven Unkrautbekämpfung in Mais, Sojabohnen, Baumwolle, Zuckerrüben, Getreide, Reis und Zuckerrohr.

Die selektive herbizide Wirksamkeit der erfindungsgemäßen Wirkstoffkombinationen ist besonders ausgeprägt, wenn herbizider Wirkstoff und Gegenmittel in bestimmten Verhältnissen vorliegen. Jedoch können die Gewichtsverhältnisse von herbizidem Wirkstoff zu Gegenmittel in den erfindungsgemäßen Wirkstoffkombinationen in relativ großen Bereichen schwanken. Im allgemeinen entfallen auf 1 Gewichtsteil an herbizidem Wirkstoff der Formel (II) 0,01 bis 100 Gewichtsteile, vorzugsweise 0,1 bis 20 Gewichtsteile an einem Gegenmittel der Formel (I).

Die erfindungsgemäß verwendbaren Gegenmittel der Formel (I) bzw. die erfindungsgemäßen Wirkstoffkombinationen aus einem Gegenmittel der Formel (I) und einem herbiziden Wirkstoff der Formel (II) können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur- und synthetische Stoffe wie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z. B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an einem erfindungsgemäß verwendbaren Gegenmittel bzw. an einer erfindungsgemäßen Wirkstoffkombination aus Gegenmittel und herbizidem Wirkstoff, vorzugsweise enthalten sie zwischen 0,5 und 90 Gewichtsprozent.

Die erfindungsgemäß verwendbaren Gegenmittel bzw. die erfindungsgemäßen Wirkstoffkombinationen können als solche oder in ihren Formulierungen auch in Mischung mit bekannten Herbiziden zur Unkrautbekämpfung Verwendung finden, wobei Fertigformulierung oder Tankmischung möglich ist. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich:

Die erfindungsgemäß verwendbaren Gegenmittel bzw. die erfindungsgemäßen Wirkstoffkombinationen können als solche, in Form ihrer Formulierungen oder den daraus durch weiteres Verdünnen bereiteten Anwendungsformen, wie gebrauchsfertige Lösungen, Suspensionen, Emulsionen, Pulver und Granulate angewandt werden. Die Anwendung geschieht in üblicher Weise, z.B. durch Gießen, Spritzen, Sprühen, Stäuben, Streuen, Trockenbeizen, Feuchtbeizen, Naßbeizen, Schlämmbeizen oder Inkrustieren.

Die erfindungsgemäß verwendbaren Gegenmittel können nach den für derartige Antidote üblichen Methoden ausgebracht werden. So können die erfindungsgemäß verwendbaren Gegenmittel vor oder nach dem Herbizid ausgebracht werden oder zusammen mit dem Herbizid appliziert werden. Ferner können Kulturpflanzen durch Saatgutbehandlung mit dem Gegenmittel vor der Saat (Beizung) vor Schäden geschützt werden, wenn das Herbizid vor oder nach der Saat angewendet wird. Eine weitere Einsatzmöglichkeit besteht darin, daß man das Gegenmittel bei der Aussaat in die Saatfurche ausbringt. Wenn es sich bei den Pflanzen um Stecklinge handelt, so können diese vor der Auspflanzung mit dem Gegenmittel behandelt werden.

Die Aufwandmenge im Gegenmittel ist im Prinzip unabhängig vom Herbizid und der Aufwandmenge an herbizidem Wirkstoff. Im allgemeinen liegen die Aufwandmengen an Gegenmittel bei Flächenbehandlung zwischen 0,2 und20 kg/ha, vorzugsweise zwischen 0,5 und 5 kg/ha. Bei der Saatgutbehandlung liegen die Aufwandmengen an Gegenmittel im allgemeinen zwischen 0,2 und 200g pro Kilogramm Saatgut, vorzugsweise zwischen 0,5 und 50g pro Kilogramm Saatgut. Die Aufwandmengen an erfindungsgemäßen Wirkstoffkombinationen können in einem gewissen Bereich variiert werden. Im allgemeinen liegen sie zwischen 0,01 und 25 kg/ha, vorzugsweise zwischen 0,05 und 15 kg/ha.

Die Aufwandmengen an herbizidem Wirkstoff schwanken im allgemeinen zwischen 0,01 und 20 kg/ha, vorzugsweise zwischen 0,05 und 10 kg/ha.

## Beispiele

### Vorauflauf-Test / Gewächshaus

Testverbindungen / Tabellen 1-4

In den in den nachfolgenden Tabellen 1-4 beschriebenen Versuchen wurden als Testverbindungen die folgenden Wirkstoffe eingesetzt, wobei auch die verwendeten Formulierungen angegeben sind:

Herbizid DPX 4189
= Chlorsulfuron =
(vgl. Seite 92 / Tabelle 10)

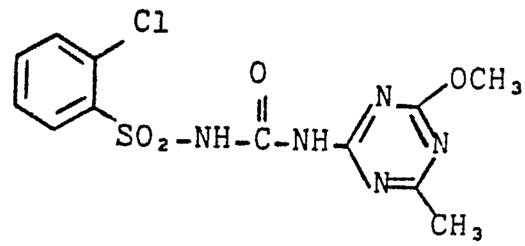

Formulierung: 75 WP, d.h. Spritzpulver (wettable powder) mit 75 % Wirkstoffgehalt

Antidot I-475:

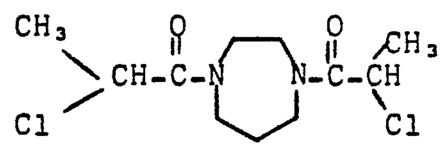

Formulierung: 350 EC, d.h. Emulsionskonzentrat mit 350 g Antidot pro Liter.

Antidot I-273:

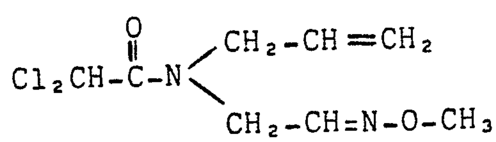

Formulierung: 500 EC, d.h. Emulsionskonzentrat mit 500 g Antidot pro Liter.

Herstellung der benötigten Wirkstofflösungen

Die für den jeweiligen Versuch benötigte Menge an formuliertem Herbizid-Wirkstoff bzw. Antidot wurde in Wasser dispergiert (Stammlösung). Aus diesen Stammlösungen wurden dann durch weiteres Verdünnen mit Wasser und gegebenenfalls durch Mischen die Wirkstofflösungen für die Behandlung der Testpflanzen-Samen in den Versuchsgefäßen hergestellt, so daß in der Lösung die gewünschte Menge an Herbizid-Wirkstoff bzw. Antidot enthalten war. Das in den Versuchen pro Flächeneinheit applizierte Volumen an Wirkstofflösung wurde konstant gehalten.

Anwendung der Antidot- und Herbizid-Wirkstoffe

Die Wirkstoffapplikation auf die Samen der Testpflanzen erfolgte nach zwei unterschiedlichen Methoden, entweder getrennt (Samenbehandlung) oder gemeinsam (Tankmixverfahren):

a) Samenbehandlung
Samen der Testpflanzen wurden für 48 Stunden in Wirkstofflösungen, die das Antidot in einer Konzentration von 1000 ppm enthielten, angequollen; als Kontrollvariante dienten Samen, die in Wasser angequollen wurden. So behandelte Samen der Testpflanzen wurden in mit Erde befüllten Kunststoffgefäßen ausgelegt und mit einer dünnen Schicht Erde abgedeckt. Danach erfolgte die Anwendung des Herbizids als Gießapplikation.

b) Tankmix-Verfahren
Die gewünschte Menge an Antidot wurde in Mischung mit dem Herbizid in einem bestimmten Volumen an Wirkstofflösung auf die mit Erde befüllten Versuchsgefäße gegossen, worin die Samen der Testpflanzen eingesät waren; als Kontrollvariante dienten solche Gefäße, die nur mit Wasser bzw. Herbizid behandelt wurden.

Bei beiden Anwendungsverfahren wurden die Versuchsgefäße anschließend im Gewächshaus unter kontrollierten Bedingungen (Temperatur, Feuchte) gehalten. Nach zwei bis drei Wochen erfolgte jeweils die Auswertung der Versuche in Form einer visuellen Bonitur, wobei die Schädigung der Testpflanzen im Vergleich zu unbehandelten Kontrollpflanzen nach einer Skala von 0 % (keine Schädigung, wie unbehandelte Kontrolle) bis 100 % (totale Schädigung) bewertet wurde.

Die Testverbindungen, deren Aufwandmengen, die Testpflanzen und die Testergebnisse gehen aus den nachfolgenden Tabellen hervor:

Tabelle 1: Prüfung an Mais / Anwendung der Antidots als Samenbehandlung

| Testverbindungen | Aufwandmenge<br>Bonitur: Schädigung in % | | | |
|---|---|---|---|---|
| Chlorsulfuron | 4 g/ha<br>70 % | 8 g/ha<br>80 % | 15 g/ha<br>80 % | |
| Chlorsulfuron<br>+ Antidot<br>a) bzw. b) | 4 g/ha<br>+ 1000 ppm | 8 g/ha<br>+ 1000 ppm | 15 g/ha<br>+ 1000 ppm | 0 g/ha<br>+ 1000 ppm |
| a) I-475 | 30 % | 40 % | 40 % | 10 % |
| b) I-273 | 40 % | 50 % | 50 % | 30 % |

Tabelle 2: Prüfung an Mais / Anwendung der Wirkstoffe im Tankmix-Verfahren

| Testverbindungen | Aufwandmengen<br>Bonitur: Schädigung in % | | | |
|---|---|---|---|---|
| Chlorsulfuron | 4 g/ha<br>60 % | 8 g/ha<br>70 % | 15 g/ha<br>80 % | |
| Chlorsulfuron<br>+ Antidot<br>a) bzw. b) | 4 g/ha<br>+ 1000 g/ha | 8 g/ha<br>+ 1000 g/ha | 15 g/ha<br>+ 1000 g/ha | 0 g/ha<br>+ 1000 g/ha |
| a) I-475 | 40 % | 40 % | 50 % | 20 % |
| b) I-273 | 30 % | 40 % | 50 % | 20 % |

Tabelle 3: Prüfung an Weizen / Anwendung der Wirkstoffe im Tankmix-Verfahren

| Testverbindung | Aufwandmengen<br>Bonitur: Schädigung in % | | | |
|---|---|---|---|---|
| Chlorsulfuron | 250 g/ha<br>70 % | 500 g/ha<br>80 % | 1000 g/ha<br>90 % | |
| Chlorsulfuron + Antidot a) bzw. b) | 250 g/ha<br>+ 1000 g/ha | 500 g/ha<br>+ 1000 g/ha | 1000 g/ha<br>+ 1000 g/ha | 0 g/ha<br>+ 1000 g/ha |
| a) I-475 | 40 % | 50 % | 70 % | 0 % |
| b) I-273 | 40 % | 50 % | 70 % | 0 % |

Tabelle 4: Prüfung an Winterweizen und Wintergerste / Anwendung der Wirkstoffe im Tankmix-Verfahren

| Testverbindungen | Testpflanzen | Aufwandmengen: Bonitur: Schädigung in % | | | |
|---|---|---|---|---|---|
| Chlorsulfuron | | 62,5 g/ha | 125 g/ha | 250 g/ha | |
| | Winterweizen: | 20 % | 30 % | 60 % | |
| | Wintergerste: | 20 % | 30 % | 60 % | |
| Chlorsulfuron + Antidot a) bzw. b) | | 62,5 g/ha + 1000 g/ha | 125 g/ha + 1000 g/ha | 250 g/ha + 1000 g/ha | 0 g/ha + 1000 g/ha |
| a) I-475 | Winterweizen: | 10 % | 20 % | 20 % | 0 % |
| | Wintergerste: | 20 % | 30 % | 30 % | 0 % |
| b) I-273 | Winterweizen: | 10 % | 20 % | 20 % | 0 % |
| | Wintergerste: | 10 % | 20 % | 20 % | 0 % |

Testverbindung / Tabelle 5

In den in der nachfolgenden Tabelle 5 beschriebenen Versuchen wurde als Testverbindung der folgende Wirkstoff eingesetzt (technischer Wirkstoff):

Herbizid IIi-16
(vgl. Seite 93 / Tabelle 10)

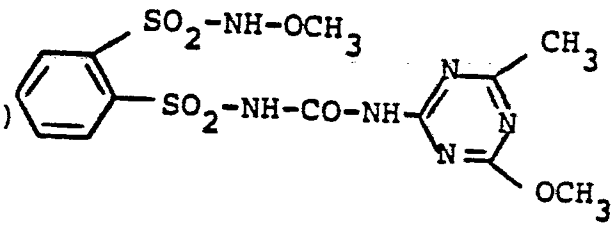

Herstellung der benötigten Wirkstofflösungen

Die für den jeweiligen Versuch benötigte Menge an formuliertem Antidot wurde in Wasser dispergiert:
der technische Herbizid-Wirkstoff wurde mit Aceton angelöst, 1 Tropfen Emulgator "Tween 20" wurde hinzugefügt und dann wurde Wasser zugegeben (Stammlösung). Aus diesen Stammlösungen wurden anschließend, so wie oben angegeben, durch weiteres Verdünnen mit Wasser und gegebenenfalls durch Mischen die Wirkstofflösungen für die Behandlung der Testpflanzen-Samen in den Versuchsgefäßen hergestellt, so daß in der Lösung die gewünschte Menge an Herbizid-Wirkstoff bzw. Antidot enthalten war. Das in den Versuchen pro Flächeneinheit applizierte Volumen an Wirkstofflösung wurde konstant gehalten.

Anwendung der Antidot- und Herbizid-Wirkstoffe

Die Wirkstoffapplikation auf die Samen der Testpflanzen erfolgte nach dem oben beschriebenen Tankmix-Verfahren.

Tabelle 5: Prüfung an Mais / Anwendung der Wirkstoffe im Tankmix-Verfahren

| Test-verbindungen | Aufwandmengen / Bonitur: Schädigung in % | | | | | | | |
|---|---|---|---|---|---|---|---|---|
| Herbizid IIi-16 | 2 g/ha<br>20 % | | 4 g/ha<br>40 % | | 8 g/ha<br>70 % | | | |
| Herbizid IIi-16 + Antidot a) bzw. b) | 2 g/ha +1000g/ha | 2 g/ha +100g/ha | 4 g/ha +1000g/ha | 4 g/ha +100g/ha | 8 g/ha +1000g/ha | 8 g/ha +100g/ha | 0 g/ha +1000g/ha | 0 g/ha +100g/ha |
| a) I-475 | 10 % | 0 % | 10 % | 10 % | 30 % | 20 % | 0 % | 0 % |
| b) I-273 | 10 % | 10 % | 10 % | 10 % | 10 % | 30 % | 0 % | 0 % |

## Patentansprüche

1. Verwendung von Amiden der Formel (I)

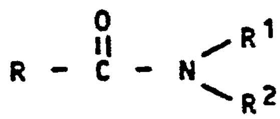 (I)

in welcher

R für Wasserstoff, Halogen oder für jeweils gegebenenfalls substituiertes Alkyl, Alkenyl, Alkinyl, Cycloalkyl, Cycloalkenyl, Bicycloalkyl, Bicycloalkenyl, Tricycloalkyl, Aryl, Heteroaryl, Alkoxy, Alkenyloxy, Alkinyloxy, Aryloxy, Carbamoyl, Alkoxycarbonyl oder Dithiolanyl steht und

$R^1$ und $R^2$ unabhängig voneinander jeweils für Wasserstoff, für Formyl, für Chlorsulfonyl oder für jeweils gegebenenfalls substituiertes Alkyl, Alkenyl, Alkadienyl, Alkinyl, Cycloalkyl, Cycloalkenyl, Alkoxy, Alkylthio, Alkylcarbonyl, Alkoxycarbonyl, Phenyl, Phenoxy, Phenylsulfonyl oder Heterocycyl stehen, ferner für Amino, für Alkylidenimino oder für gegebenenfalls substituiertes Alkylcarbonylamino oder Di(alkylcarbonyl)-amino stehen, oder

$R^1$ und $R^2$ gemeinsam mit dem Stickstoffatom an welches sie gebunden sind, für jeweils gegebenenfalls substituiertes Alkylidenimino, Pyrrolidinyl, Piperidinyl, Piperidonyl, Perhydroazepinyl, Perhydroazocinyl, Dihydropyrazolyl, Dihydro- oder Tetrahydropyridinyl, Azabicyclononyl, Morpholinyl, Perhydro-1,3-oxazinyl, 1,3-Oxazolidinyl, 1,4-Piperazinyl, Perhydro-1,4-diazepinyl, Dihydro-, Tetrahydro- oder Perhydrochinolyl- bzw. -isochinolyl, Indolyl, Dihydro- oder Perhydroindolyl stehen,

als Gegenmittel zur Verbesserung der Kulturpflanzen-Verträglichkeit von herbizid wirksamen Sulfonylharnstoff-Derivaten der Formel (II),

$$R^3SO_2\text{-}NH\text{-}\underset{\underset{X}{\|}}{C}\text{-}NHR^4 \qquad (II)$$

in welcher

$R^3$ für einen gegebenenfalls substituierten Rest aus der Reihe Alkyl, Aralkyl, Aryl und Heteroaryl steht,

$R^4$ für einen gegebenenfalls substituierten und/oder gegebenenfalls anellierten sechsgliedrigen aromatischen Heterocyclus, welcher wenigstens ein Stickstoffatom enthält, steht und

X für Sauerstoff oder Schwefel steht.

2. Verfahren zur Verbesserung der Kulturpflanzen-Verträglichkeit von herbizid wirksamen Sulfonylharnstoff-Derivaten der Formel (II) gemäß Anspruch 1, dadurch gekennzeichnet, daß man Amide der Formel (I) gemäß Anspruch 1 zusammen mit den Sulfonylharnstoff-Derivaten der Formel (II) auf die Kulturpflanzen und/oder deren Lebensraum einwirken läßt.

3. Mittel zur selektiven Unkrautbekämpfung in Nutzpflanzenkulturen, gekennzeichnet durch einen Gehalt an einer Wirkstoffkombination bestehend aus

- einem Amid der Formel (I) gemäß Anspruch 1 und

- mindestens einem herbiziden Sulfonylharnstoff-Derivat der Formel (II) gemäß Anspruch 1.

4. Verfahren zur selektiven Unkrautbekämpfung in Nutzpflanzenkulturen, dadurch gekennzeichnet, daß man eine Wirkstoffkombination gemäß Anspruch 3 auf die Unkräuter oder ihren Lebensraum einwirken läßt.

5. Verwendung einer Wirkstoffkombination gemäß Anspruch 3 zur selektiven Unkrautbekämpfung in Nutzpflanzenkulturen.

6. Verfahren zur Herstellung von Mitteln zur selektiven Unkrautbekämpfung in Nutzpflanzenkulturen, dadurch gekennzeichnet, daß man Wirkstoffkombinationen gemäß Anspruch 3 mit Streckmitteln und/oder oberflächenaktiven Mitteln vermischt.

Europäisches Patentamt

**EUROPÄISCHER RECHERCHENBERICHT**

0234036

Nummer der Anmeldung

EP 86 11 7524

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 343 649 (P.B. SWEETER) * Patentansprüche * | 1-6 | A 01 N 47/36<br>A 01 N 25/32 |
| | --- | | |
| X | US-A-4 531 966 (L.L. GREEN) * Patentansprüche * | 1-6 | |
| | --- | | |
| X | EP-A-0 147 365 (CIBA-GEIGY) * Patentansprüche * | 1-6 | |
| | --- | | |
| X,P | EP-A-0 190 105 (CIBA-GEIGY) * Patentansprüche * | 1-6 | |
| | ----- | | |
| | | | RECHERCHIERTE SACHGEBIETE (Int. Cl 4) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 11-05-1987 | DECORTE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82